(19) Europäisches Patentamt
European Patent Office
Office européen des brevets

(11) EP 0 908 366 A1

(12) **EUROPEAN PATENT APPLICATION**
published in accordance with Art. 158(3) EPC

(43) Date of publication:
**14.04.1999 Bulletin 1999/15**

(21) Application number: **97926231.8**

(22) Date of filing: **12.06.1997**

(51) Int. Cl.[6]: **B60T 8/88**, B60T 8/00

(86) International application number:
**PCT/JP97/02028**

(87) International publication number:
**WO 97/49588 (31.12.1997 Gazette 1997/57)**

(84) Designated Contracting States:
**DE FR GB**

(30) Priority: **24.06.1996 JP 163425/96**
**25.04.1997 JP 109750/97**

(71) Applicant:
**TOYOTA JIDOSHA KABUSHIKI KAISHA**
**Aichi-ken 471-8571 (JP)**

(72) Inventors:
- **SHIMIZU, Satoshi, Toyota Jidosha Kabushiki Kaisha Aichi-ken 471 (JP)**
- **YONEYAMA, Masatoshi, Toyota Jidosha K.K. Aichi-ken 471 (JP)**
- **SHIRAI, Koji, Toyota Jidosha Kabushiki Kaisha Aichi-ken 471 (JP)**
- **ONUMA, Yutaka, Toyota Jidosha Kabushiki Kaisha Aichi-ken 471 (JP)**
- **MORIIZUMI, Kiyotaka, Toyota Jidosha K.K. Aichi-ken 471 (JP)**
- **HASHIMOTO, Yoshiyuki, Toyota Jidosha K.K. Aichi-ken 471hi-ken 471 (JP)**
- **MASUTOMI, Susumu, Toyota Jidosha Kabushiki Kaisha Aichi-ken 471 (JP)**

(74) Representative:
**Winter, Brandl & Partner**
**Patent- und Rechtsanwaltskanzlei**
**Alois-Steinecker-Strasse 22**
**85354 Freising (DE)**

(54) **BRAKING FORCE CONTROL APPARATUS**

(57) A liquid pressure sensor (40) for detecting a master cylinder pressure is provided. The condition of a brake operating action is detected on the basis of a detected value $SP_{M/C}$ from the liquid pressure sensor. When a brake operating action satisfying a predetermined execution condition is detected, the controlling of a braking liquid pressure is executed on the basis of the $SP_{M/C}$. When a regular brake operating action is made, the $SP_{M/C}$ and a vehicle body deceleration $G_X$ are judged whether they are in proper relation with each other. When a combination of $SP_{M/C}$ and $G_X$ belongs to a C-region, the liquid sensor is judged normal. When the combination of the two belongs to an A-region or a B-region, the liquid sensor is judged abnormal, and the execution of the braking liquid pressure control operation is prohibited.

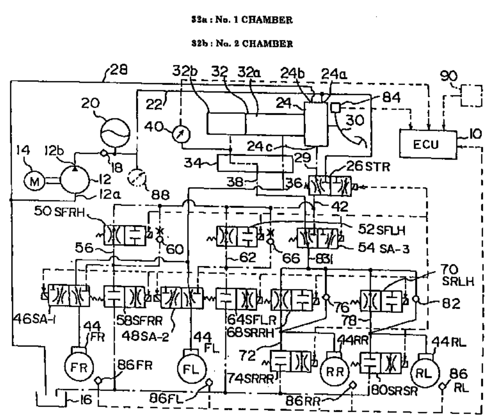


Fig. 1



Printed by Xerox (UK) Business Services
2.16.7/3.6

## Description

FIELD OF THE INVENTION

The present invention relates to a braking force control apparatus, and more particularly to a braking force control apparatus suitable for controlling braking hydraulic pressure of a braking apparatus for an automobile.

DESCRIPTION OF THE RELATED ART

As disclosed, for example, in Japanese Patent Application Laid Open No. 4-121260, an apparatus is conventionally known which determines that an emergency brake is required when a brake pedal is operated at an operating speed more than a predetermined value so as to increase magnification ratio of a braking force compared with that in a normal state. The above mentioned conventional apparatus is provided with a master cylinder which generates a hydraulic pressure (hereinafter, referred to as master cylinder pressures $P_{M/c}$) corresponding to a pedal depressing force $F_p$ applied to the brake pedal. In addition, the conventional apparatus is provided with a hydraulic pressure sensor for detecting the master cylinder pressure $P_{M/c}$.

The higher an operating speed of the brake pedal becomes, the greater the master cylinder pressure $P_{M/c}$ changes. Likewise, the lower an operating speed of the brake pedal become, the less the master cylinder pressure $P_{M/c}$ changes. Thus, the master cylinder pressure $P_{M/c}$ shows change rate $\Delta P_{M/C}$ corresponding to the operating speed of the brake pedal. Accordingly, in the above conventional apparatus, the operating speed of the brake pedal can be detected precisely by monitoring the change rate of the detected value of the hydraulic pressure sensor.

The operating speed of the brake pedal may be precisely detected so that it can be determined precisely whether a braking operation has been performed by a driver of the vehicle either as an emergency brake or as a normal one. Thus, according to the above conventional apparatus, a proper brake feeling can be realized when a braking operation intended as the normal brake is performed, while a great braking force which can meet a required emergency brake can be generated when a braking operation intended as the emergency brake is performed.

However, in a sensor for detecting an operating force of a brake such as a hydraulic pressure sensor, an abnormality may be seen by such a failure as a short circuit between terminals or a hardware breakdown. If such an abnormality occurs, operation state of the brake pedal in an output signal from the hydraulic pressure sensor can not be reflected properly. Thus, if the abnormality occurs in the hydraulic pressure sensor in the conventional apparatus, thereafter it will become impossible to determine precisely whether or not an emergency braking operation has been performed by a driver of the vehicle and will become difficult to control a braking force properly.

SUMMARY OF THE INVENTION

With the aforementioned in view, it is an object of the present invention to provide a braking force control apparatus which exhibits high reliability at an abnormal time of a sensor for detecting a brake operating force.

The above object is accomplished with a braking force control apparatus as described in claim 1, in which brake operating force detecting means (40; 444) for detecting brake operating force is provided and a braking hydraulic pressure control is performed based on a value detected by the brake operating force detecting means, the braking force control apparatus comprising abnormality detecting means (10, 106 to 128; 10, 112 to 128, 130 to 134; 10, 164 to 176; 10, 195 to 202; 310, 460 to 500; 10, 826 to 844, 848 to 858) for detecting abnormality in the brake operating force detecting means and a hydraulic pressure control inhibiting means (10, 122; 10, 180; 10, 192; 310, 502; 846, 860) for inhibiting an execution of the braking hydraulic pressure control at an abnormal time of the brake operating force detecting means.

According to the present invention, when the brake operating force detecting means operates properly, the braking hydraulic pressure control may be properly performed based on the detected value. If a braking hydraulic pressure control is performed based on the detected value in a condition that there is an abnormality in the brake operating force detecting means, brake feeling is sometimes degraded. In the present invention, when the abnormality detecting means detects abnormality in the brake operating force detecting means, the hydraulic pressure control inhibiting means inhibits an execution of the braking hydraulic pressure control. Thus, the braking feeling does not degrade due to the abnormality in brake operating force detecting means.

The above object can be accomplished with a braking force control apparatus described in claim 2, comprising vehicle deceleration detecting means (10) for detecting deceleration of a vehicle, wherein the abnormality detecting means detects abnormality in the brake operating force detecting means when either a first state where unreasonably small deceleration is detected relative to the value detected by the brake operating force detecting means or a second state where unreasonably large deceleration is detected relative to the value detected by the brake operating force detecting means is determined to continue over a predetermined period of time.

According to the present invention, a braking force corresponding to the value detected by the brake operating force detecting means acts on the vehicle when the brake operating force detecting means operates properly. When the braking force acts on the vehicle, deceleration corresponding to the magnitude of the braking force is generated in the vehicle. Thus, a vehicle deceleration detecting means detects the vehicle deceleration corresponding to the value detected by the brake operating force detecting means when the brake operating force detecting means operates properly. In the present invention, the abnormality detecting means determines that abnormality exists in the brake operating force detecting means when the vehicle deceleration corresponding to the value detected by the brake operating force detecting means is not detected during the predetermined period of time.

The above object is also accomplished with the braking force control apparatus as described in claim 3, comprising slip ratio detecting means (10) for detecting a slip ratio of a wheel, wherein the abnormality detecting means detects abnormality in the brake operating force detecting means when either a first state where a small slip ratio is detected relative to the value detected by the brake operating force detecting means or a second state where a large slip ratio is detected relative to the value detected by the brake operating force detecting means is determined to continue over a predetermined period of time.

According to the present invention, a braking force corresponding to the detected value of the brake operating force detecting means acts on each wheel mounted to a vehicle when the brake operating force detecting means operates properly. When the braking force acts on, a slip ratio corresponding to the magnitude of the braking force acting on the wheel is produced on the wheel. Accordingly, when the brake operating force detecting means operates properly, the wheel slip ratio detecting means detects a slip ratio corresponding to the detected value from the brake operating force detecting means. According to the present invention, the abnormality detecting means determines that abnormality exists in the brake operating force detecting means when a slip ratio corresponding to a detected value of the brake operating force detecting means over a predetermined period of time.

The above object can also be accomplished with a braking force control apparatus as described in claim 4, comprising an abnormal state determination means (10) for determining an abnormal state of the brake operating force detecting means based on whether or not the abnormality of the brake operating force detecting means has been detected based on either the first or second state.

According to the present invention, the first state is realized when the brake operating force detecting means falls in an abnormal state in which the brake operating force detecting means outputs an unreasonably large detected value. Likewise, the second state is realized when the brake operating force detecting means falls in an abnormal state in which the brake operating force detecting means outputs an unreasonably small detected value. The abnormal state determination means determines an abnormal state of the brake operating force detecting means based on which of the first state and the second state causes an abnormality when abnormality in the brake operating force detecting means is detected.

The above object is also accomplished with a braking force control apparatus as described in claim 5, comprising an accumulator (20) serving as a hydraulic pressure source of a braking hydraulic pressure and accumulator pressure detecting means (88) for detecting the internal pressure of the accumulator, wherein the abnormality detecting means detects abnormality in the brake operating force detecting means based on the comparison of the detected value of the brake operating force detecting means and the detected value of the accumulator pressure detecting means.

In the present invention, when a braking operation is performed, an accumulator serves as a hydraulic pressure source to increase a braking hydraulic pressure. After the braking operation, the brake operating force detecting means outputs a detected value corresponding to the performed operation. On the other hand, after the braking hydraulic pressure is increased due to the operation, the hydraulic pressure within the accumulator is consumed, resulting in a reduced accumulator pressure. Thus, a correlation between the detected value and the accumulator pressure is recognized under a condition where the brake operating force detecting means outputs properly the detected values. In the present invention, the abnormality detecting means determines that abnormality exists in the brake operating force detecting means when a predetermined correlation can not be recognized between the detected value of the brake operating force detecting means and the accumulator pressure.

The above object is also accomplished with a braking force control apparatus described in claim 6, wherein the abnormality detecting means comprises a first abnormality recognition means (10, 195 to 202; 310, 476, 492) for recognizing abnormality in the brake operating force detecting means when a detected value ($\gamma$) output from the brake operating force detecting means shows that the braking operation is in execution and a change rate of the detected value is equal to a predetermined value ($\delta$) or less continues for a predetermined period of time ($C_0$).

In the present invention, when the brake operating force detecting means outputs properly the detected value, the fact that the detected value shows the on-execution of the braking operation and the change rate equal to the predetermined value or less is limited to only the case where a braking operation is performed with a substantially constant brake operating force during a stop of the vehicle and the case where a brake operating force is generally in a stable state during the deceleration course of the vehicle. These situations are not continuously established for a long time since these are released by a change of the brake operating force. In the present invention, the abnormality detecting means determines that the brake operating force detecting means is in an abnormal state in which the brake operating force detecting means outputs a fixed value when the above situations continue for a long time.

The above object is accomplished with a braking force control apparatus as described in claim 8, comprising abnormality release detecting means (10, 140 to 152; 10, 210 to 214) for detecting that abnormality in the brake operating force detecting means is released and hydraulic pressure control enabling means (10, 154; 10, 218) for enabling an execution of the braking hydraulic pressure control when abnormality in the brake operating force detecting means is released.

According to the present invention, the execution of the braking hydraulic pressure control is inhibited when the abnormality is detected in the brake operating force detecting means. On the other hand, after the detection of the fact that abnormality in the brake operating force detecting means is released by the abnormality release detecting means, the execution of the braking hydraulic pressure control is permitted. Thus, according to the present invention, disadvantageous unnecessary inhibiting of the execution of the brakeing hydraulic pressure control can be avoided.

The above object is also accomplished with a braking force control apparatus as described in claim 9, wherein the abnormality release detecting means detects that the abnormality in the brake operating force detecting means is released when the detected value of the brake operating force detecting means has according to with the execution of a braking operation.

According to the present invention, when the detected value of the brake operating force detecting means changes according to the execution of the braking operation, it can be determined that the brake operating force detecting means operates properly. The abnormality release detecting means determines that the abnormality in the brake operating force detecting means is has been released when the above phenomenon is monitored.

The above object is accomplished with a braking force control apparatus as described in claim 7 comprising abnormality release detecting means (10, 140 to 152; 10, 210 to 214) for detecting that abnormality in the brake operating force detecting means is released and hydraulic pressure control enabling means (10, 154; 20, 218) for enabling the execution of the braking hydraulic pressure control when the abnormality in the brake operating force detecting means is released.

According to the present invention, an output value from the brake operating force detecting means may change according to the change in the brake operating force when the brake operating force detecting means operates properly. In other words, it can be determined that abnormality exists in the brake operating force detecting means when the detected value of the brake operating force detecting means does not show any change while the brake operating force changes. A second abnormality recognition means determines abnormality in the brake operating force detecting means using the above method

In addition, the above object is accomplished with a braking force control apparatus as described in claim 10, comprising a master cylinder (32) for generating a master cylinder pressure corresponding to the brake operating force and a high pressure source (20) for generating a predetermined hydraulic pressure independent of the brake operating force, and the brake operating force detecting means comprises a hydraulic pressure sensor (40) for detecting the master cylinder pressure and the abnormality detecting means comprises a high pressure introducing means (10, 828 to 834, 848 to 854) for introducing a hydraulic pressure generated by the high pressure source to the hydraulic pressure sensor under a predetermined condition and abnormality recognition means (10, 836, 856) for recognizing the abnormality in the hydraulic pressure sensor based on the output value of the hydraulic pressure sensor when the hydraulic pressure is introduced by the high pressure introducing means.

In the present invention, when the hydraulic pressure sensor is in a normal state, the hydraulic pressure supply from high pressure source to the hydraulic pressure sensor generates changes in the output value from the hydraulic pressure sensor. In other words, when the output value from the hydraulic pressure sensor does not show any change in spite of the condition that the hydraulic pressure is being supplied from the high pressure introducing means, it can be determined that abnormality exists in the hydraulic pressure sensor. The abnormality recognition means recognizes the abnormality in the brake operating force detecting means using the above method. Due to the high pressure source, high hydraulic pressure can be introduced to the hydraulic pressure sensor within a short time regardless of whether or not a braking operation has been performed. Thus, using the above method, abnormality in the hydraulic pressure sensor can be detected in a short time regardless of whether or not a braking operation has been performed.

## BRIEF DESCRIPTION OF THE DRAWINGS

Fig. 1 shows a system configuration of a braking force control apparatus corresponding to first to sixth and tenth embodiments of the present invention.

Fig. 2 is a flowchart (1st) illustrating an example of a control routine performed in the braking force control apparatus corresponding to the first embodiment of the present invention.

Fig. 3 is a flowchart (2nd) illustrating an example of a control routine performed in the braking force control apparatus corresponding to the first and second embodiments of the present invention.

Fig. 4 is an example of a map referred to in the braking force control apparatus corresponding to the first embodiment of the present invention.

Fig. 5 is another example of a map referred to in the braking force control apparatus corresponding to the first embodiment of the present invention.

Fig. 6 is a flowchart (1st) illustrating an example of a control routine performed in the braking force control apparatus corresponding to the second embodiment of the present invention.

Fig. 7 is a flowchart illustrating an example of a control routine performed in the braking force control apparatus corresponding to the third embodiment of the present invention.

Fig. 8A is a diagram illustrating a change in master cylinder pressures $P_{M/c}$ realized during operation of the normal control in the braking force control apparatus shown in Fig. 1.

Fig. 8B is a diagram illustrating a change in accumulator pressures $P_{ACC}$ realized during operation of the normal control in the braking force control apparatus shown in Fig. 1.

Fig. 9 is a diagram illustrating relationships between the master cylinder pressures $P_{M/c}$ and the wheel cylinder volumes $V_{W/C}$ realized during operation of the normal control in the braking force control apparatus shown in Fig. 1.

Fig. 10 is a characteristic diagram illustrating relationships between the accumulator pressures $P_{ACC}$ and the accumulator gas chamber volumes $V_{ACC}$ realized in the braking force control apparatus shown in Fig. 1.

Fig. 11 is a flowchart illustrating an example of a control routine performed in the braking force control apparatus corresponding to the fourth embodiment of the present invention.

Fig. 12 is a flowchart illustrating an example of a control routine performed in the braking force control apparatus corresponding to the fifth embodiment of the present invention.

Fig. 13 is a flowchart illustrating an example of a control routine performed in the braking force control apparatus corresponding to the sixth embodiment of the present invention.

Fig. 14 shows a system configuration illustrating a normal braking state of a braking force control apparatus corresponding to the seventh and eleventh embodiments of the present invention.

Fig. 15 is a diagram illustrating an ABS activated state of the braking force control apparatus shown in Fig. 14.

Fig. 16 is a diagram illustrating an increased assist pressure state of the braking force control apparatus shown in Fig. 14.

Fig. 17 is a diagram illustrating a held assist pressure state of the braking force control apparatus shown in Fig. 14.

Fig. 18 is a diagram illustrating a reduced assist pressure state of the braking force control apparatus shown in Fig. 14.

Fig. 19 is a diagram illustrating changes in master cylinder pressures $P_{M/c}$ and wheel cylinder pressure $P_{W/C}$ generated when an emergency braking operation is performed in the braking force control apparatus shown in Fig. 1.

Fig. 20 is a flowchart illustrating an example of a control routine performed to determine whether or not a BA control should be required in the braking force control apparatus corresponding to the seventh to ninth embodiments of the present invention.

Fig. 21 is a flowchart (1st) illustrating an example of a control routine performed to terminate the BA control when a bonding abnormality occurs in a hydraulic pressure sensor in the braking force control apparatus corresponding to the seventh to ninth embodiments of the present invention.

Fig. 22 is a flowchart (2nd) illustrating an example of a control routine performed to terminate the BA control when a bonding abnormality occurs in a hydraulic pressure sensor in the braking force control apparatus corresponding to the seventh to ninth embodiments of the present invention.

Fig. 23 is a system configuration illustrating a normal braking state and an ABS activated state of the braking force control apparatus corresponding to eighth to twelfth embodiments of the present invention.

Fig. 24 is a diagram illustrating an increased assist pressure state of the braking force control apparatus shown in Fig. 2.

Fig. 25 is a diagram illustrating a held assist pressure state of the braking force control apparatus shown in Fig. 23.

Fig. 26 is a diagram illustrating a reduced assist pressure state of the braking force control apparatus shown in Fig. 23.

Fig. 27 is a system configuration illustrating a normal braking state and an ABS activated state of the braking force control apparatus corresponding to ninth to thirteenth embodiments of the present invention.

Fig. 28 is a diagram illustrating an increased assist pressure state of the braking force control apparatus shown in Fig. 27.

Fig. 29 is a diagram illustrating a held assist pressure state of the braking force control apparatus shown in Fig. 27.

Fig. 30 is a diagram illustrating a reduced assist pressure state of the braking force control apparatus shown in Fig. 27.

Fig. 31 is a flowchart illustrating an example of a main routine performed in the braking force control apparatus corresponding to the tenth to thirteenth embodiments of the present invention.

Fig. 32 is a flowchart (1st) illustrating an example of a control routine performed in the braking force control apparatus corresponding to the tenth to thirteenth embodiments of the present invention.

Fig. 33 is a flowchart (2nd) illustrating an example of a control routine performed in the braking force control apparatus corresponding to the tenth to thirteenth embodiments of the present invention.

Fig. 34 is a flowchart (3rd) illustrating an example of a control routine performed in the braking force control apparatus corresponding to the tenth to thirteenth embodiments of the present invention.

Fig. 35 is a flowchart (4th) illustrating an example of a control routine performed in the braking force control apparatus corresponding to the tenth to thirteenth embodiments of the present invention.

Fig. 36 is a flowchart illustrating an example of a control routine performed in a braking force control apparatus corresponding to a fourteenth embodiment of the present invention.

## BEST CONFIGURATION FOR IMPLEMENTING THE INVENTION

Fig. 1 shows a system configuration of a braking force control apparatus according to a first embodiment of the invention. A braking force control apparatus shown in Fig. 1 is controlled by an electronic control unit 10 (hereinafter, referred to as an ECU 10). The braking force control apparatus comprises a pump 12. The pump 12 has a motor 14 as a power source. An inlet port 12a of the pump 12 communicated with a reservoir 16. In addition, an outlet port 12b of the pump 12 communicates with an accumulator 20 via a check valve 18. The pump 12 delivers the brake fluid in the reservoir tank 16 from the outlet port 12b with a pressure so that a predetermined hydraulic pressure is accumulated in the accumulator 20.

The accumulator 20 communicates with a high-pressure port 24a of a regulator 24 and a regulator switching solenoid 26 (hereinafter, referred to as an STR 26) via a high-pressure passage 22. The regulator 24 has a low-pressure port 24c. The low-pressure port communicates with the reservoir tank 16 via a low-pressure passage 28. The controlled hydraulic pressure port 24c communicate with the STR 26 via a controlled hydraulic pressure passage 29. The STR 26 is a two-positional solenoid valve which selectively sets one of the controlled hydraulic pressure passage 29 and a high-pressure passage 22 in a conductive state. In a normal state, the STR 26 selelcts a portion so that the controlled hydraulic passage 29 is set in the conductive state and the high-pressure passage 22 is set in an closed state.

The regulator 24 is connected with a brake pedal 30. The master cylinder 32 is fixed to the regulator 24. The regulator 24 has a hydraulic chamber formed therein. The hydraulic chamber always communicates with the controlled hydraulic pressure port 24c, and selectively communicates with the high-pressure port 24a or the low-pressure port 24b in accordance with an operation state of the brake pedal 30. The regulator 24 is formed so that an internal pressure if the hydraulic chamber is controlled to a hydraulic pressure corresponding to the brake pedaling force $F_P$ Hereinafter, this hydraulic pressure is referred to as a regulator pressure $P_{RE}$.

The brake pedaling force $F_P$ applied to the brake pedal 30 is mechanically transmitted to the master cylinder 32 via the regulator 24. In addition, a force corresponding to the hydraulic pressure in the hydraulic chamber of the regulator 24, that is, a force corresponding to the regulator pressure $P_{RE}$ is transmitted to the master cylinder 32. Hereinafter, this force is referred to as a brake assist force $F_A$. Thus, when the brake pedal 30 is pressed, a resultant of force of the brake pedaling force $F_P$ and the brake assist force $F_A$ is transmitted to the master cylinder 32.

The master cylinder 32 comprises a first hydraulic chamber 32a and a second hydraulic chamber 32b therein. In the first and second hydraulic chambers 32a and 32b, master cylinder pressure $P_{M/C}$ corresponding to the resultant of force of the brake pedaling force $F_P$ and the brake assist force $F_A$ are generated. Both the master cylinder pressure $P_{M/C}$ generated in the first hydraulic chamber 32a and the master cylinder pressure $P_{M/C}$ generated in the second hydraulic chamber 32b are communicated with a proportioning valve 34 (hereinafter, referred to as a P-valve 34).

The P-valve 34 communicates with the first hydraulic passage 36 and a second hydraulic passage 38. The P-valve 34 supplies the master cylinder pressure $P_{M/C}$ to the first hydraulic passage 36 and the second hydraulic passage 38 without change under a condition in which the master cylinder pressure $P_{M/C}$ is less than a predetermined value. In addition, the P-valve 34 supplies the master cylinder pressure to the first hydraulic passage 36 without change the master cylinder pressure $P_{M/C}$ at a predetermined ratio, to the second hydraulic passage 38.

A hydraulic sensor 40 is provided between the second hydraulic chamber 32b of the master cylinder 32 and the P-valve 34. The hydraulic sensor 40 outputs an electric signal corresponding to the master cylinder pressure $P_{M/C}$. The output signal from the hydraulic sensor 40 is supplied to the ECU 10. The ECU detects the master cylinder 32 based on the output signal from the hydraulic sensor 40.

The STR described above communicates with a third hydraulic passage 42. The third hydraulic passage 42 is set, in accordance with the state of the STR 26, in the conductive state with respect to either the controlled hydraulic pressure passage 29 or the high-pressure passage 22. In the present embodiment, to wheel cylinders 44FL and 44FR respectively mounted for front left and right wheels FL and FR, the brake hydraulic pressure is supplied from the first hydraulic passage 36 communicating with the P-valve 34 or from the third hydraulic passage 42 communicating with the STR 26. In addition, to wheel cylinder 44RL and 44RR respectively mounted for rear left and right wheels RL and RR, the brake hydraulic pressure is supplied from the second hydraulic passage 38 communicating with the P-valve 34 or from the third hydraulic pressure passage 42 communicating with the STR 26.

The first hydraulic passage 36 communicating with a first assist solenoid 46 (hereinafter, referred to as an $SA_{-1}$ 46) and a second assist solenoid 48 (hereinafter, referred to as an SFRH 50), a left front wheel holding solenoid 52 (hereinafter, referred to as an SFLH 52) and a third assist solenoid 54 (hereinafter, referred to as an $SA_{-3}$ 54).

The SFRH 50 is a two-positional solenoid valve which is maintained in an open valve state in a normal state. The SFRH 50 communicates with the $SA_{-1}$ 46 and a right front wheel pressure decreasing solenoid valve 58 (hereinafter, referred to as an SFRR 28) via a pressure adjusting hydraulic passage 56 to the third hydraulic passage 42 is provided, in the pressure adjusting hydraulic passage 56.

The $SA_{-1}$ 46 is a two-positional solenoid valve which causes one of the first hydraulic passage 36 and the pressure adjusting hydraulic passage 56 to selectively communicate with the wheel cylinder FR. In the normal state (an off-state), the $SA_{-1}$ 46 causes the first hydraulic passage 36 to communicate with the wheel cylinder FR. On the other hand, the SFRR 58 is a two-positional solenoid valve which sets the pressure adjusting hydraulic passage 56and the reservoir tank 16 in the conductive state or in the closed state. The SFRR 58 sets the pressure adjusting hydraulic passage 56 and the reservoir tank 16 in the closed state in the normal state (the off-state).

The SFLH is a two-positional solenoid valve which is maintained in an open valve state in the normal state. The SFLH 52 communicates with the $SA_{-2}$ 48 and a left front wheel pressure decreasing solenoid 64 (hereinafter, referred to as SFLR 64) via an adjusting pressure hydraulic passage 62. A check valve 66 permitting a fluid flow only in a direction from the pressure adjusting hydraulic passage 62 to the third hydraulic passage 42 is provided, in parallel, between the third hydraulic passage 42 and the pressure adjusting hydraulic passage 62.

The $SA_{-2}$ 48 is a two-positional solenoid valve which causes one of the first hydraulic passage 36 and the pressure adjusting hydraulic passage 62 to selectively communicate with the wheel cylinder FL. In the normal state (the off-state), the $SA_{-2}$ 48 causes the first hydraulic passage 36 to communicate with the wheel cylinder FL. On the other hand, SFLR 64 is a two-positional solenoid valve which sets the pressure adjusting hydraulic passage 62 and the reservoir tank 16 sets the pressure adjusting hydraulic passage 62 and the reservoir tank 16 in the closed state in the normal state (the off-state).

The second hydraulic passage 38 communicates with the $SA_{-3}$ 54 described above. The downstream side of the $SA_{-3}$ 54 communicates with a right rear wheel holding solenoid 68 (hereinafter, referred to as an SRRH 68) and a left rear wheel holding solenoid 70 (hereinafter, referred to as an SRLH 70). The SRRH 68 is provided so as to correspond to the wheel cylinder 44RR for the right rear wheel RR. The SRLH 70 is provided so as to correspond to the wheel cylinder 44RL for the left rear wheel RL. The $SA_{-3}$ 54 is a two-positional solenoid valve which causes one of the second hydraulic passage 38 and the third hydraulic passage 42 to selectively communicate with the SRRH 68 and the SRLH 70. In the normal state (the off-state), the $SA_{-3}$ 54 causes the second hydraulic passage 38 to communicate with the SRRH 68 and the SLRH 70.

The downstream side of the SRRH 68 communicates with the wheel cylinder 44RR and a right rear wheel pressure decreasing solenoid 74 (hereinafter, referred to as SRRR 74) via the pressure adjusting hydraulic passage 72. The SRRR 74 is a two-positional solenoid valve which sets the pressure adjusting hydraulic passage 72 and the reservoir tank 16 in the conductive state or the closed state. In the normal state (the off-state), the SRRR 74 sets the pressure adjusting hydraulic passage 72 and the reservoir tank 16 in the closed state. In addition, a check valve 72 permitting a fluid flow only in a direction from the pressure adjusting hydraulic passage 72 to the $SA_{-3}$ 54 is provided, in parallel, between the $SA_{-3}$ 54 and the pressure adjusting hydraulic passage 72.

Similarly, the downstream side of the SRLH 70 communicates with the wheel cylinder 44RL and a left rear wheel pressure decreasing solenoid 80 (hereinafter, referred to as an SRLR 80) via a pressure adjusting hydraulic passage 78. The SRLR 80 is a two-positional solenoid valve which sets the pressure adjusting hydraulic passage 78 and the reservoir tank 16 in the closed state. In addition, a check valve 82 permitting a fluid flow only in a direction from the pressure adjusting hydraulic passage 78 to the $SA_{-3}$ 54 is provided, in parallel, between the $SA_{-3}$ 54 and the pressure adjusting hydraulic passage 78.

In the system according to the present embodiment, a brake switch 84 is provide near the brake pedal 30. The brake switch 84 is a switch which is in an on-state while the brake pedal 30 is being pressed. The output signal from the brake switch 84 is supplied to the ECU 10. The ECU determines, based on the output signal from the brake switch 84, whether a driver carris out a braking operation.

In addition, on the system according to the present invention, wheel speed sensor 86FL, 86FR, 86RL and 86RR a8hereinafter, referred to as 86** as a whole) are respectively provided near the left and right front wheels FL and FR and the left and right rear wheels RL and RR, each of the sensors generating a pulse every time corresponding wheel rotates by a predetermined angle. The output signals from the wheel speed sensor 86** are supplied to the ECU 10. The ECU 10 detects revolution speeds of the respective wheel FL, FR, RL and RR based on the output signals from the wheel speed sensors 86**. Further. The ECU 10 is connected with a steering angle sensor 88 which outputs a pulse signal based on a rotational angle and direction of a steering wheel. The ECU 10 detects a steering wheel angle $\theta$ based on the output signal from the steering angle sensor 88.

The ECU 10 supplies, if necessary, driving signals to the above-mentioned STR 26, SA-1 46, SA-2 48, SA-3 54, SFRH 50, SFLH 52, SFRR 58, SFLR 64, SRRH 68, SRLH 70, SRRR 74 and SFLR 80 based on the output signals from a hydraulic sensor 40, the wheel speed sensor 86**, the steering angle sensor 88 and the brake switch 84.

A description will now be given of an operation of the braking force control apparatus according to the present embodiment. When the vehicle is in a stable state, the braking force control apparatus according to the present embodiment carries out the normal control for generating a braking force corresponding to the brake pedaling force $F_P$ applied to the brake pedal 30. The normal control is implemented, as shown in Fig. 1, by setting the STR 26, SA-1 46, SA-2 48, SA-3 54, SFRH 50, SFLH 52, SFRR 58, SFLR 64, SRRH 68, SRLH 70, SRRR 74 and SRLR 80 in the off-state.

That is, in the state shown in Fig. 1, the wheel cylinders 44FR and 44FL are caused to communicate with the first hydraulic passage 36, and the wheel cylinders 44RR and 44RL are caused to communicate with the second hydraulic passage 38. In the case, the brake fluid flows between the master cylinder 32 and the wheel cylinders 44FR, 44FL, 44RL and 44RR (hereinafter, numbered as 44** as a whole), so that a braking force corresponding to the brake pedaling force $F_P$ is applied to each of the wheels FL, FR, RL and RR.

In the present embodiment, when a possibility that one of the wheels is going to be in a lock state is detected, it is determined that a condition in which an antilock brake control (hereinafter, referred to as an ABS control) should be performed is established. The ABS control then starts. The ECU 10 calculates the wheel speeds $Vw_{FL}$, $Vw_{FR}$, $Vw_{RL}$ and $Vw_{RR}$ (hereinafter, symbolized as Vw** as a whole) of the respective wheels based on the wheel speed sensor 86**. The ECU 10 further calculates as assumed value $V_{so}$ of a vehicle speed (hereinafter, referred to as an assumed vehicle speed $V_{SO}$) based on the wheel speed Vw** in accordance with a known method. When the vehicle is in a braking state, a slip ratio S each of the wheels is calculated in accordance with the following equation. When S is greater than a predetermined value, it is determined that there is a possibility that the wheel is going to be in a lock state.

$$S = (V_{SO} - Vw^{**}) \cdot 100/V_{SO} \quad (1)$$

When the condition in which the ABS control should be performed is established, the ECU 10 output the driving signals to the $AS_{-1}$ 46, the $AS_{-2}$ 48 and the $AS_{-3}$ 54. As a result , when the $AS_{-1}$ 46 is turned on, the wheel cylinder 44FL is disconnected from the first hydraulic passage 36 and connected to the pressure adjusting hydraulic passage 62. Further, when the $SA_{-3}$ 54 is turned on, the upstream sides of the SRRH 68 and the SRLH 70 are disconnected to the third hydraulic passage 42.

In the case, all the wheel cylinders 44** respectively communicate with the holding solenoids SFRH 50, SFLH 52, SRRH 68 and SRLH 70 (hereinafter, referred to as holding solenoid S**H as a whole) and the pressure decreasing solenoids SFRR 58, SFLR 64, SRRR 74 and SRLR 80 (hereinafter, referred to as pressure decreasing solenoids S**R as a whole). A regulator pressure $P_{RE}$ is introduced to all the upstream sides of all the holding solenoids S**H via the third hydraulic passage 42 and the STR 26.

Under the above condition, the holding solenoids S**H are in an open valve state and the pressure decreasing solenoids S**R are in a closed valve state, so that the wheel cylinder pressure PW/C of the wheel cylinder 44** are increased to the regulator pressure PRE as an upper limit. Hereinafter, this state is referred to as a regulator pressure increasing mode ①.

In addition, when the holding solenoids S**H are in the closed valve state and the pressure decreasing solenoids S**R are in the closed valve state, the wheel cylinder pressure $P_{W/C}$ of the wheel cylinders 44** are not increased and maintained. This state is referred to as a holding mode ②.

Further, when the holding solenoids S**H are in the closed valve state and the pressure decreasing solenoids S**R are in the open valve state, the wheel cylinder pressure $P_{W/C}$ of the wheel cylinders 44** are decreased. This state is referred to as a pressure decreasing mode ③.

The ECU 10 carries out processes in the above-mentioned regulator pressure increasing mode ①, the holding mode ② and the pressure decreasing mode ③ so that the slip ratio of each of the wheels is controlled within an appropriate value range, that is, so that each of the wheels is not shifted to a lock state.

When a depression of the brake pedal 30 is released by the driver during execution of the ABS control, the wheel cylinder pressure $P_{W/C}$ must be immediately decreased. In the system according to the present embodiment, the check valve 60, 66, 76 and 82 permitting a fluid flow in a direction from the wheel cylinders 44** to the third hydraulic passage 42 are provided in hydraulic passages for the wheel cylinders 44** Thus, according to the system of the present embodiment, when the depression of the brake pedal 30 is released, the wheel cylinder pressure $P_{W/C}$ of the wheel cylinders 44** can be immediately decreased.

In the system according to the present embodiment, when the ABS control is performed, the wheel cylinder pressure $P_{W/C}$ is increased by the brake fluid being supplied from the regulator 24 to the wheel cylinders 44**, that is, by the brake fluid being supplied from the pump 12 to the wheel cylinders 44**, and is decreased by the brake fluid in the wheel cylinders 44** flowing to the reservoir tank 16. When the increase in the wheel cylinder pressure $P_W/_C$ is performed by using the master cylinder 32 as a fluid pressure source and if the pressure increasing mode and the pressure decreasing mode are repeated ly performed, the brake fluid in the master cylinder 32 gradually decreases and a so-called bottoming of the master cylinder may occur.

On the other hand, if the pump 12 is used as a fluid pressure source so as to increase the wheel cylinder pressure $P_W/_C$, as in the system according to the present embodiment, such a bottoming can be prevented. Thus, in the system according to the present embodiment, a stable operational state can be maintained if the ABS control is continued for a long time.

In the system according to the present embodiment, the ABS control is started when a possibility for shifting to the lock state is detected in one of the wheels. Accordingly, in order to start the ABS control, as a a precondition, a braking operation having a level at which a large slip rate S is generated in one of the wheels must be performed.

In the case that a driver of the vehicle is a highly skilled driver, he/she can increase the pedal depressing force $F_p$ immediately and maintain the increased pedal depressing force $F_p$ for a long time after a situation where an emergency braking is required occurs. If such a pedal depressing force $F_p$ is applied to the brake pedal 30, a sufficiently high pressure braking hydraulic pressure can be supplied from the master cylinder 32 to each wheel cylinder 44** so as to start the ABS control.

In the case that a driver of the vehicle is an unskilled driver, however, the pedal depressing force $F_p$ may not increased to a sufficient level after tee situation where an emergency braking is required occurs. If the pedal depressing force $F_p$ applied to the brake pedal 30 is not increased to the sufficient level after an emergency braking is required, the wheel cylinder pressures $P_{W/C}$ in each wheel cylinder 44** may not be increased enough to start the ABS control.

Thus, in the case that a driver of the vehicle is an unskilled driver, even when the vehicle has an excellent brake performance, the performance may not be exhibited well after the time of the execution of the emergency braking operation. Accordingly, in the system of the present embodiment, a control for forcibly increasing the wheel cylinder pressure $P_{W/C}$ is performed when the brake pedal 30 is intended to be operated as an emergency braking and the pedal depressing force $F_p$ is not increased sufficiently. This control will hereinafter be referred to as a brake assist control (BA control).

In the system according to the present embodiment, when a pedal depressing force $F_p$ is applied to the brake pedal 30, a master cylinder pressure $P_{M/C}$ corresponding to the applied pedal depressing force $F_p$ is generated in the master cylinder 32. When a normal braking operation is performed, the master cylinder pressure $P_{M/C}$ is changed more slowly than when an emergency braking is intended. Also, the master cylinder pressures $P_{M/C}$ generated according to the normal braking operation has a convergent value lower than that of the master cylinder pressure $P_{M/C}$ generated according to the emergency braking operation.

As a result, when the master cylinder pressure $P_{M/C}$ detected by the hydraulic pressure sensor 40 after a braking operation starts is increased at a ratio greater than a predetermined ratio and to a sufficient value, it can be determined that the braking operation is performed as an emergency braking. Likewise, when the master cylinder pressure $P_{M/C}$ after a braking operation starts shows a change rate smaller than a predetermined value and its convergent value does not reach the predetermined value, it can be determined that the braking operation is performed as a normal braking.

In the present embodiment, the BA control starts when the master cylinder pressures $P_{M/C}$ detected by the hydraulic pressure sensor 40 (the detected value will be referred to as $SP_{M/C}$) and the change rate $\Delta SP_{M/C}$ meets predetermined conditions for an emergency braking and the detected value $SP_{M/C}$ is not increased sufficiently (these conditions will generally be referred to as an execution condition of the BA control).

A description will now be given of an operation of the system according to the present embodiment when the BA control is performed. Once a braking operation which meets the execution condition of the BA control is detected, the ECU 10 outputs driving signals to STR26, $SA_{-1}$46, $SA_{-2}$48 and $SA_{-3}$54.

After the STR26 receives the above driving signal to be turned ON, the third hydraulic pressure passage 42 is directly communicated with the high-pressure passage 22. In the present case, the accumulator pressure $P_{ACC}$ is introduced into the third hydraulic pressure passage 42. Similarly, after the $SA_{-1}$46 and the $SA_{-2}$48 receive the above driving signals to be turned ON, the wheel cylinders 44FR and 44FL are communicated with the pressure adjusting hydraulic pressure passages 56 and 62, respectively. Further, after the $SA_{-3}$54 receives the above driving signal to be turned ON, the upstream sides of SRRH68 and SRLH70 are communicated with the third hydraulic pressure passage 42. In the present case, all the wheel cylinders 44** are communicated with the respective holding solenoids S**H and the pressure reducing solenoids S**R, as well as a condition in which the accumulator pressure $P_{ACC}$ is introduced into upstream of all the holding solenoids S**H is established.

In the ECU 10, all the holding solenoids S**H and the pressure reducing solenoids S**R are maintained in the off state immediately after the execution of an emergency braking operation is detected. Accordingly, as described above, the accumulator pressure $P_{ACC}$ is introduced to the upstream of the holding solenoids S**H, thereafter the introduced hydraulic pressure is directly supplied to the wheel cylinders 44**. As a result, the wheel cylinder pressure $P_{W/C}$ in all the wheel cylinders 44** are increased toward the accumulator pressure $P_{ACC}$.

Thus, in the system according to the present embodiment, the wheel cylinder pressure $P_{W/C}$ of all the wheel cylinders 44** can be immediately increased regardless of the magnitude of the pedal depressing force $F_p$ when an emergency braking operation is performed. Accordingly, in the system according to the present embodiment, a large braking force can be generated immediately after a situation in which an emergency braking is required occurs even when a driver of the vehicle is an unskilled driver.

After the supply of the accumulator pressures $P_{ACC}$ to the wheel cylinders 44** is started as described above, the slip ratio S of each wheel FL, FR, RL, RR is rapidly increased so that the execution condition of the ABS control is established. Once the execution condition of the ABS control is established, the ECU 10 may suitably realize the above pressure increasing mode ①, holding mode ② and pressure reducing mode ③ so as to converge all the slip ratios S's in all the wheels within a proper range, that is, that each wheel is not going to be in a lock state.

When the ABS control is started subsequent to the emergency braking operation, the wheel cylinder pressure $P_{W/C}$ is increased due to that the brake fluid is supplied from the pump 12 and the accumulator 20 to the wheel cylinders 44**, and it is reduced due to that the brake fluid in the wheel cylinders 44** flows into the reservoir tank 16. As a result, a so-called bottoming of the master cylinder 32 can be prevented even if the pressure increasing mode and the pressure reducing mode are repeatedly performed.

When the BA control starts by performing an emergency braking operation as described above, it is required to terminate the BA control at the point when the depression of the brake pedal 30 is released. In the system according to the present embodiment, the STR26, $SA_{-1}$46, $SA_{-2}$48 and $SA_{-3}$54 are maintained in the off state during the execution of the ABS control as described above. When the STR26, $SA_{-1}$46,$SA_{-2}$48 and $SA_{-3}$54 are in the on state, all the hydraulic pressure chambers in the regulator 24 and the first and second hydraulic pressure chambers 32a, 32b provided in the master cylinder 32 are substantially closed.

Under the above conditions, the value of the master cylinder pressure $P_{M/C}$ corresponds to the pedal depressing force $F_p$. Accordingly, the ECU 10 can easily determine whether or not the depression of the brake pedal 30 is released by monitoring the output signal pMC from the hydraulic pressure sensor 40. Once the release of the depression of the brake pedal 30 is detected, the ECU 10 stops the supply of driving signals to the STR26, $SA_{-1}$46, $SA_{-2}$48 and $SA_{-3}$54 so as to realize the state in which the normal control is performed.

In the system according to the present embodiment as described above, it is determined whether or not the BA control is performed based on the detected value $SP_{M/C}$ from the hydraulic pressure sensor 40 and the change rate $\Delta SP_{M/C}$, and that the BA control is terminated based on the detected value $SP_{M/C}$. These features will be explained in the following description.

Each of Fig. 2 and Fig. 3 are flowcharts illustrating an example of a control routine performed by the ECU 10 for realizing above functions. The present routine is periodical interrupt routines which are started at each predetermined time interval. When these routines are started, a processing of step 100 is performed at first.

In step 100, it is determined whether or not the assumed vehicle speed $V_{so}$ is greater than the predetermined value $V_{th}$ and whether or not the change rate $\Delta SP_{M/C}$ of the detected value $SP_{M/C}$ is smaller than the predetermined value MAX.

In the present routines, it is determined whether or not the hydraulic pressure sensor 40 operates properly based on whether or not a proper vehicle deceleration $G_X$ is generated relative to the detected value $SP_{M/C}$ from the hydraulic pressure sensor 40. In addition, in the present embodiment, the vehicle deceleration $G_X$ is substituted with for the differential value of the assumed vehicle speed $V_{SO}$. When the assumed vehicle speed $V_{SO}$ is a low speed, given its differential value as $G_X$, a large error is likely to be superimpose on $G_X$. The above predetermined value $V_{th}$ is a threshold value which is set in order to determine a problem arises in its accuracy when assuming the differential value of $V_{SO}$ as $G_X$. Accordingly, if $V_{SO}>V_{th}$ is not established, it can be determined that it is not preferable to proceed the processing of the present routine.

Further, the above predetermined value MAX is the change rate of the detected value $SP_{M/C}$ which cannot be generated due to a braking operation by a driver of the vehicle, that is, a value generated only when noise or the like is superimposed on the detected value $SP_{W/C}$ from the hydraulic pressure sensor 40. Accordingly, if $|\Delta SP_{M/C}|<MAX$ is not established, it can be determined that it is not preferable to proceed the processing of the present routine because the output value from the hydraulic pressure sensor 40 is not a normal value.

Thus, in the above step 100, after it is determined that one of $V_{SO}>V_{th}$ and $|\Delta SP_{M/C}|<MAX$ is not established, the current routine is terminated without any further processings. On the other hand, if it is determined that both of the above conditions are established, then a processing of step 102 is performed.

In step 102, it is determined whether or not the normal control has been performed in the breaking force control apparatus, that is, whether or not such a special control as the above ABS control, BA control and the known vehicle stability control (VSC control) has not been performed. The relationship between the master cylinder pressure $P_{M/C}$ and the vehicle deceleration $G_X$ is almost univocally determined during the execution of the normal control. In the present case, it can be determined whether or not the hydraulic pressure sensor 40 functions properly based on whether or not the detected value $SP_{M/C}$ with respect to the vehicle deceleration $G_X$ is a proper relationship. On the other hand, the relationship between the master cylinder pressure $P_{M/C}$ and the vehicle deceleration $G_X$ may not always be univocal during the execution of the ABS control, BS control and VSC control. In the present case, it is difficult to determine whether or not the hydraulic pressure sensor 40 operates properly based on the comparison of the detected value $SP_{M/C}$ and the vehicle deceleration $G_X$.

Thus, after it is determined that one of the ABS control, BS control and VSC control has been performed in the above step 120, the present routine may be terminated without any further processing. On the other hand, after it is determined that none of these controls has been performed, that is, that a normal control has been performed in the braking force control apparatus, a processing of step 104 is performed.

In step 104, it is determined whether or not the brake switch 84 is in an on-state, that is, whether or not the braking operation is being performed. As a result, if it is determined that the brake switch 84 is in the on state, then a processing of step 106 is performed. If it is determined that the brake switch 84 is not in the on state, then step 106 will be skipped and a processing of step 108 is performed.

Fig. 4 illustrates an example of a map to which the ECU 10 refers when the processing of the present routine are performed. The map shown in Fig. 4 is a two-dimensional map illustrating the relationship between the detected value $SP_{M/C}$ and the vehicle deceleration $G_X$. Three regions are set in the map shown in Fig. 4; a region A to which a combination of a relatively small detected value $SP_{M/C}$ and a relatively large vehicle deceleration $G_X$ belongs, a region B to which a combination of a relatively large detected value $SP_{M/C}$ and a relatively small vehicle deceleration $G_X$ belongs and a region C to which a combinations of a detected value $SP_{M/C}$ and a substantially corresponding vehicle deceleration $G_X$ belong.

In step 106, it is determined whether or not the combination of the detected value $SP_{M/C}$ and the vehicle deceleration $G_X$ belong to the region A shown in Fig. 4. The above condition is established when the vehicle deceleration $G_X$ corresponding to the applied braking force is generated while the detected value $SP_{M/C}$ corresponding to the vehicle deceleration $G_X$ is not output from the hydraulic pressure sensor 40. In the present routine, after it is determined that the above condition is established, the processing which begins from step 116 shown in Fig. 3 is performed. On the other hand, if it is determined that the above condition is not established, then a processing of step 108 is performed.

In step 108, it is determined whether or not the combination of the detected value $SP_{M/C}$ and the vehicle deceleration $G_X$ belongs to the region B shown in Fig. 4. The above condition is established when a proper detected value $SP_{M/C}$ is generated from the hydraulic pressure sensor 40 while the vehicle deceleration $G_X$ corresponding to the detected value $SP_{M/C}$ is not generated. In the present routine, after it is determined that the above condition is established, the processings from step 124 shown in Fig. 3 is performed. On the other hand, if it is determined that the above condition is not established, then a processing of step 110 is performed.

In step 110, it is determined whether or not the combination of the detected value $SP_{M/C}$ and the vehicle deceleration $G_X$ belongs to the region C shown in Fig.4. The above condition is established when the relationship between the detected value $SP_{M/C}$ generated from the hydraulic pressure sensor 40 and the vehicle deceleration $G_X$ generated in the vehicle is a proper relationship. In the present routine, if it is determined that the above condition is established, then the processings of steps 112 and 114 is performed. On the other hand, if it is determined that the above condition is not established, the current routine may be terminated without any further processing.

In step 112, a processing is performed which decrements a sensor output lowering counter $C_L$. The sensor output lowering counter $C_L$ is a counter which is increased or decreased to "0" as a lower limit value so as to indicate, by its counted value, the possibility that an output lowering abnormality may occur in the hydraulic pressure sensor 40. When the detected value $SP_{M/C}$ and the vehicle deceleration $G_X$ which belong to the region C are detected, it can be determined that the hydraulic censor 40 functions properly. Thus, in the present step which is performed, as a precondition, assuming that the detected value $SP_{M/C}$ and the vehicle deceleration $G_X$ which belong to the region C may be detected, the sensor output lowering counter $C_L$ may be decremented.

In step 114, a processing is performed which decrements a sensor output rising counter $C_H$. The sensor output rising counter $C_H$ is a counter which is increased or decreased to "0" as a lower limit value so as to indicate, by its counted value, the possibility that an output rising abnormality may occur in the hydraulic pressure sensor 40. Thus, in the present step which is performed, as a precondition, assuming that the detected value $SP_{M/C}$ and the vehicle deceleration $G_X$ which belong to the region C may be detected, the sensor output rising counter $C_H$ may be decremented. The current routine will be terminated when the above processing is terminated.

As described above, when it is determined that the condition in step 106 is established, step 116 shown in Fig. 3 is performed. In step 116, the processing for incrementing a sensor output lowering counter $C_L$ is performed. The processing in the present step is performed when a combination of the detected value $SP_{M/C}$ and the vehicle deceleration $G_X$ which belong to the region A is detected. When both the detected value $SP_{M/C}$ and the vehicle deceleration $G_X$ which belong to the region A are detected, it can be determined that there is a great possibility that an output lowering abnormality may occur in the hydraulic pressure sensor 40. Thus, in the present step, the sensor output lowering counter $C_L$ may be incremented as described above. After the above processing is terminated, a processing of step 118 is performed.

In step 118, it is determined whether or not the sensor output lowering counter $C_L$ is greater than the predetermined value $\alpha_L$. As a result, if it is determined that $C_L>\alpha_L$ is not established, then the current routine is terminated without any further processings. On the other hand, when it is determined that $C_L>\alpha_L$ is established, it is determined that an output lowering abnormality occurs in the hydraulic pressure sensor 40 and then a processing of step 120 is performed.

In step 120, a flag XFAILL is set at "1" for indicating that a sensor output lowering abnormality has occurred. After the above processing is terminated, a processing of step 122 is performed.

In step 122, a processing for inhibiting the execution of the BA control and a processing for displaying an abnormality to the passengers are performed. After the above processings are terminated, the current routine is terminated. When an output lowering abnormality occurs in the hydraulic pressure sensor 40, if the BA control is to be performed as in a normal state, the BA control can not be performed under a proper condition. On the other hand, by inhibiting the BA control under such a condition and indicating the condition to the passengers using an indicator lamp, an alarm sound or the like provided in the cabin, the braking force control apparatus can be performed as a normal brake in a normal state. Accordingly, using the braking force control apparatus according to the present embodiment, a proper fail-safe can be realized for the output lowering abnormality in the hydraulic pressure sensor 40. As described above, when it is determined that the condition of step 108 is established, step 124 shown in Fig. 3 is performed. In step 124, a processing for incrementing sensor output high counter $C_H$ is performed. The processing of the present step is performed when the combination of the detected value $SP_{M/C}$ and the vehicle deceleration $G_X$ which belong to the region B is detected. When both the detected value $SP_{M/C}$ and the vehicle deceleration $G_X$ which belong to the region B are detected, it is determined that there is a great possibility that an output rising abnormality has been occurred in the hydraulic pressure sensor 40. Thus, the sensor output rising counter $C_H$ is incremented as described above in the present step. When the above processing is terminated, a processing of step 126 is performed.

In step 126, it is determined whether or not the sensor output rising counter $C_H$ is greater than the predetermined value $\alpha_H$. As a result, if it is determined that $C_H>\alpha_L$ is not established, then the current routine is terminated without any further processing. On the other hand, when it is determined that $C_H>\alpha_L$ is established, it is determined that an output rising abnormality has occurred in the hydraulic pressure sensor 40 and then a processing of step 128 is performed.

In step 128, a flag XFAILL is set at "1" for indicating that a sensor output rising abnormality has occurred. After the above processing is terminated, the processing of step 122 is performed and then, the current routine is terminated.

Using the above processing, execution of the BS control can be properly inhibited and such a state can be indicated to the passengers when an output rising abnormality has occurred in the hydraulic pressure sensor 40. Accordingly, using the braking force control apparatus according to the present embodiment, a proper fail-safe can be realized for the output rising abnormality in the hydraulic pressure sensor 40.

In the above embodiment, the hydraulic pressure sensor 40 and the BA control correspond to the "brake operating force detecting means" and the "braking hydraulic pressure control" described in claim 1, respectively. At the same time, the "abnormality detecting means" described in the claim 1 and claim 2 is realized by the ECU 10 performing the above processings of steps 106 to 128 as well as the "hydraulic pressure control inhibiting means" described in claim 1 is realized by the ECU performing the above processing of step 122, respectively.

Further, in the above embodiment, the "vehicle deceleration detecting means" described in the claim 2 is realized by the ECU 10 which calculates the differential value of the assumed vehicle speed $V_{SO}$. Additionally, in the above embodiment, the state in which the combination of the detected value $SP_{M/C}$ and the vehicle deceleration $G_X$ which belong to the region B is detected corresponds to the "second state" described in the claim 2 and the state in which the combination of the detected value $SP_{M/C}$ and the vehicle deceleration $G_X$ which belong to the region A is detected corresponds to the "first state" described in the claim 2, respectively.

Although the braking hydraulic pressure control is limited to the BA control in the above embodiment, the present invention is not limited to the embodiment and can be applied to a broad range of braking hydraulic pressure controls performed based on the brake operating force.

In addition, it is determined whether or not the BS control can be performed and when it should be terminated using the master cylinder pressure $P_{M/C}$ as the substitute characteristic value of the brake operating force and the hydraulic pressure sensor 40 as the brake operating force detecting means in the above embodiment. However, the present invention is not limited to these embodiment and the stroke of the brake pedal 30 or the pedal depressing force $F_p$ applied to the brake pedal may be used as the substitute characteristic value of the brake operating force as well as the pedal stroke sensor or the pedal depressing force sensor may be used as the brake operating force detecting means, respectively.

Further, the ECU 10 refers to the map shown in Fig. 4 so as to determine whether or not the hydraulic pressure sensor 40 is in a normal state in the above embodiment. However, the map based on which the determination is performed is not limited to the map shown in Fig. 4. That is, a map as shown in Fig. 5 can be used in which regions A, B and C are more simply segmented.

Moreover, although only the processing for inhibiting the BA control and the display for indicating abnormality in the hydraulic pressure sensor 40 are performed when the sensor output lowering abnormality and the sensor output rising abnormality in the hydraulic pressure sensor 40 are detected in the above embodiment, in addition to these processings, a processing for recording abnormality in the hydraulic pressure sensor 40 in the ECU 10 is performed. Further, the display and recording of abnormality in the hydraulic pressure sensor 40 can be performed separately for the sensor output lowering abnormality and the sensor output rising abnormality. In the present way, if the content of the abnormality is known, a advantage can be obtained in that the cause of the abnormality can easily be analyzed.

Next, a second embodiment of the present invention will be described referring to Fig. 6. A braking force control apparatus according to the present embodiment is realized using the same system configuration as the braking force control apparatus according to the above first embodiment. According to the present embodiment, the ECU 10 performed a routine shown in Fig. 6 (and Fig. 3) instead of the above routine shown in Fig. 2 (and Fig. 3). Hereinafter, the processing which the ECU 10 performes in the present embodiment will be described, focusing on the difference between steps shown in Fig. 6 and the above steps shown in Fig. 2. It should be noted that the same reference numerals have been applied to common steps in Fig. 6 as in Fig. 2 and the descriptions thereof will be omitted or simplified.

If the conditions in steps 100 to 104 are established, then a processing of step 130 is performed in the routine shown in Fig. 6. It is determined whether or not the combination of the detected value $SP_{M/C}$ and the slip ratio S of the wheel belongs to the region A (refer to Fig. 4 or Fig. 5) in step 130. The slip ratio S of the wheel can be calculated from $S=(V_{so}-Vw_{**}) \cdot 100/V_{SO}$ as shown in the above equation (1).

A two-dimensional map of the detected value $SP_{M/C}$ and the slip ratio S is stored in the ECU 10 according to the present embodiment. The map is the same as the above map shown in Fig. 4 or Fig. 5 except that the axis of ordinates represents the slip ratio S instead of the vehicle deceleration $G_X$. The map has three regions A, B and C within its two-dimensional coordinate.

The condition in above step 130 is established when a proper slip ratio S for the wheel corresponding to the applied braking force is generated while a detected value $SP_{M/C}$ corresponding to the slip ratio S is not output from the hydraulic pressure sensor 40. In the present routine, after it is determined that the above condition is established, a processing which begins from step 116 shown in Fig. 3 is performed. On the other hand, if it is determined that the above condition is not established, then a processing of step 132 is performed.

In step 132, it is determined whether or not the combination of the detected value $SP_{M/C}$ and the slip ratio S belongs to the region B (refer to Fig. 4 or Fig. 5). The above condition is established when a proper detected value $SP_{M/C}$ is generated from the hydraulic pressure sensor 40 while a slip ratio S corresponding to the detected value is not generated. In the present routine, after it is determined that the above condition is established, a processing which begins from step 124 shown in Fig. 3 is performed. On the other hand, if it is determined that the above condition is not established, then a processing of step 134 is performed.

In step 134, it is determined whether or not the combination of the detected value $SP_{M/C}$ and the slip ratio S belongs to the region C (refer to Fig. 4 or Fig. 5). The above condition is established when the relationship between the detected value $SP_{M/C}$ from the hydraulic pressure sensor 40 and the slip ratio S generated in the wheel is a proper relationship. In the present routine, after it is determined that the above condition is established, a processings of steps 112 and 114 is performed. On the other hand, if it is determined that the above condition is not established, then the current routine is terminated without any further processings.

According to the above processings, by increasing or reducing the sensor output lowering counter $C_L$ based on the relationship between the detected value $SP_{M/C}$ from the hydraulic pressure sensor 40 and the slip ratio S of the wheel, the counted value of the counter $C_L$ can be regarded as the value corresponding to the possibility that an output lowering abnormality has occurred in the hydraulic pressure sensor 40. Likewise, by increasing or reducing the sensor output rising counter $C_H$ based on the relationship between the detected value $SP_{M/C}$ from the hydraulic pressure sensor 40 and the slip ratio S of the wheel, the counted value of the counter $C_H$ can be regarded as the value corresponding to the possibility that an output rising abnormality has occurred in the hydraulic pressure sensor 40.

Then, according to the above processing, it is accurately determined whether or not the hydraulic pressure sensor 40 is normally operated based on the counted values of counters $C_L$ and $C_H$, and in the case that any abnormality is recognized in the hydraulic pressure sensor 40, the execution of the BA control can be inhibited. Therefore, according to the braking force control apparatus of the present embodiment, a proper fail-safe can be realized with respect to the abnormality of the hydraulic pressure sensor 40 in the same manner as that of the braking force control apparatus according to the above first embodiment.

Further, in the above embodiment, the hydraulic pressure sensor 40 corresponds to "brake operating force detecting means" described in claim 1 and the BA control corresponds to "a braking hydraulic pressure control" described in claim 1, respectively, and the ECU 10 performs the processing in steps 130 to 134 and 112 to 128, whereby "abnormality detecting means" described in claims 1 and 3 can be realized and the ECU 10 performs the processing in step 122, whereby "hydraulic control inhibiting means" described in claim 1 can be realized.

Further, in the above embodiment, the ECU 10 calculates the slip ratio S of the wheel, whereby "wheel slip ratio detecting means" described in claim 3 can be realized. Further, in the above embodiment, the state in which the combination of the detected value $SP_{M/C}$ and the slip ratio S which belong to the region B is detected corresponds to "a second state" described in claim 3, and the state in which the combination of the detected value $SP_{M/C}$ belonging to the A range and the slip ratio S is detected corresponds to "a first state" described in claim 3, respectively.

In the present case, the above embodiment is the same as the first embodiment in view of (1) being widely applied to the braking hydraulic pressure control performed based on the brake operating force, (2) employing the pedal stroke sensor, the pedal pedaling force sensor or the like as the brake operating force detecting means in stead of the hydraulic pressure sensor 40 and (3) differentiating the abnormality so as to display and store in the abnormal state of the hydraulic pressure sensor 40.

Next, a third embodiment according to the present invention will be described below with reference to Fig. 7. A braking force control apparatus according to the present embodiment can be realized by the same system configuration as that of the braking force control apparatuses according to the above first and second embodiments. In the present embodiment, the ECU 10 performes a routine shown in Fig. 7 in addition to the above routine shown in Figs. 2 and 3 or the above routine shown in Figs. 6 and 3.

In the braking force control apparatuses according to the above first and second embodiments, when a generation of an output lowering abnormality or an output rising abnormality is recognized in the hydraulic pressure sensor 40, an execution of the BA control is not enabled even when the hydraulic pressure sensor 40 normally operates thereafter. However, in the case that the abnormality of the hydraulic pressure sensor 40 is erroneously detected due to a certain influence, or in the case that the hydraulic pressure sensor 40 is returned to a normal state after an abnormality is temporarily generated in the hydraulic pressure sensor 40, it is preferrable to enable to perform the BA control.

As described above, in the routine shown in Figs. 2 and 3 and the routine shown in Figs. 6 and 3, the counters $C_L$ and $C_H$ are incremented in the case that the detected value $SP_{M/C}$ is an abnormality value, and the counters $C_L$ and $C_H$ are decremented in the case that the detected value $SP_{M/C}$ of the hydraulic pressure sensor 40 is a normal value. The braking force control apparatus according to the present embodiment is characterized by determining that the hydraulic pressure sensor 40 is normal so as to enable an execution of the BA control when the counters $C_L$ and $C_H$ are decremented until the counted value becomes a predetermined value or less in the case that the counters $C_L$ and $C_H$ are incremented until being over a predetermined values $\alpha_L$ and $\alpha_H$.

Fig. 7 shows a flow chart of an embodiment of a control routine performed by the ECU 10 so as to realize the above function. The routine shown in Fig. 7 corresponds to a timed interruption routine operated at every predetermined times. When the routine shown in Fig. 7 is operated, at first, a processing of step 140 is performed.

In step 140, it is determined whether or not a flag XFAILH indicating whether or not an output rising abnormality exists is set at "1". As a result, if it is determined that the formula XFAILH = 1 is not established, the current routine is terminated without any further processings. On the other hand, if it is determined that the formula XFAILH = 1 is established, a processing of step 142 is next performed.

In step 142, it is determined whether or not the value of the sensor output rising counter $\alpha_H$ is decremented to "0" corresponding to a lower limit value thereof. As a result, if the formula $\alpha_H = 0$ is not established, it is determined that the hydraulic pressure sensor 40 maintains a state of an output rising abnormality. In the present case, the current routine is terminated without any further processings. On the other hand, if it is determined that the formula $\alpha_H = 0$ is established, it can be determined that the hydraulic pressure sensor 40 is returned to a normal state. In the present case, a processing of step 144 is next performed.

In step 144, a processing of resetting the flag XFAILH to "0" is performed so as to indicate that the output rising abnormality of the hydraulic pressure sensor 40 is released. When the above processing is terminated, a processing of step 146 is next performed.

In step 146, it is determined whether or not the flag XFAILL indicating whether or not an output decrease abnormality exists is set at "1". As a result, if it is determined that the formula XFAILL = 1 is not established, the current routine is terminated without any further processings. On the other hand, if it is determined that the formula XFAILL = 1 is established, a processing of step 148 is next performed.

In step 148, it is determined whether or not the value of the sensor output decrease counter $\alpha_L$ is decremented to "0" corresponding to a lower limit value thereof. As a result, if the formula $\alpha_L = 0$ is not established, it is determined that the hydraulic pressure sensor 40 maintains a state of an output decrease abnormality. In the present case, the current routine is terminated without any further processings. On the other hand, if it is determined that the formula $\alpha_L = 0$ is established, it can be determined that the hydraulic pressure sensor 40 is returned to a normal state. In the present case, a processing of step 150 is next performed.

In step 150, a processing of resetting the flag XFAILL to "0" is performed so as to indicate that the output decrease abnormality of the hydraulic pressure sensor 40 is released. When the above processing is terminated, a processing of step 152 is next performed.

In step 152, it is determined whether or not two flags XFAILH and XFAILL are both "0". If at least one of two flags is not "0", that is, the above conditions is not established, it can be determined that the abnormal state of the hydraulic pressure sensor 40 is maintained. In the present case, the current routine is terminated without any further processings. On the other hand, if the formulas XFAILH = 0 and XFAILL = 0 are established, it can be determined that the hydraulic pressure sensor 40 is fully normally operated. In the present case, a processing of step 154 is next performed.

In step 154, a processing for enabling an execution of the BA control is performed. When the processing of the present step is performed, an inhibition of the BA control is released, so that a state capable of generating a great brake force with respect to the braking operation satisfying a predetermined execution condition is returned. When the processing of the present step is terminated, the current routine is terminated.

According to the above processing, if an abnormality is temporarily generated in the hydraulic pressure sensor 40, an execution of the BA control is enabled when the hydraulic pressure sensor 40 is returned to the normal state thereafter. Accordingly, in the braking force control apparatus of the present embodiment, a disadvantage that an execution of the BA control is unnecessarily inhibited in spite that the hydraulic pressure sensor 40 is normal can be avoided.

Here, in the above embodiment, the ECU 10 performs the above processing of steps 140 to 152, whereby "abnormality cancellation detecting means" described in claim 8 is realized, and the ECU 10 performs the above processing of step 154, whereby "hydraulic control enabling means" described in claim 8 is realized, respectively.

A fourth embodiment according to the present invention will be described below with reference to Figs. 8 to 11. A braking force control apparatus according to the present embodiment can be realized by adding a hydraulic pressure sensor 88 and a temperature sensor 90 shown by a single dot chain line in Fig. 1 to the system structure of the braking force control apparatus according to the above first to third embodiments.

The hydraulic pressure sensor 88 supplies an electric signal corresponding to an accumulator pressure $P_{ACC}$ to the ECU 10. The ECU 10 calculates the accumulator pressure $P_{ACC}$ based on an output signal of the hydraulic pressure sensor 88. Hereinafter, the accumulator pressure $P_{ACC}$ calculated based on the output signal of the hydraulic pressure sensor 88 is referred to be a detected value $SP_{ACC}$. Further, the temperature sensor 90 supplies an electric signal corresponding to the open air temperature which can be expected to be a temperature in the periphery of the accumulator 20 to the ECU 10. The ECU 10 detects the peripheral temperature of the accumulator 20 based on the output signal of the temperature sensor 90.

In the case that a normal control is performed in the braking force control apparatus according to the present embodiment, due to the braking operation, in the master cylinder 32, a master cylinder pressure $P_{M/C}$ corresponding to a resultant force of the pedal depressing force FP and the brake assist force FA is generated. Fig. 8A shows an embodiment of a change of the master cylinder pressure $P_{M/C}$ realized when the braking operation is intermittently operated. In the embodiment shown in Fig. 8A, periods T1, T2 and T3 correspond to a period of executing the braking operation, that is, a period of increasing the master cylinder pressure $P_{M/C}$.

The regulator 24 generates the brake assist force FA by introducing a high hydraulic pressure stored in the accumulator 20 to an inner portion thereof. That is, when the braking operation is performed during an execution of the normal control in the braking force control apparatus according to the present embodiment, a brake fluid having an amount corresponding to a magnitude of the pedal depressing force FP flows into the regulator 24 from the accumulator 20. When the brake fluid is flowed into the regulator 24, a piston separating the regulator 24 from the master cylinder 32 is displaced to the side of the master cylinder 32 at a distance corresponding to a flowing amount of the brake fluid. When the piston separating the regulator 24 from the master cylinder 32 is displaced, a brake fluid within the master cylinder 32 is flowed out toward a wheel cylinder 44** at an amount corresponding to a displacement amount of the piston.

As described above, according to the braking force control apparatus of the present embodiment, in the case that the braking operation is performed during an execution of the normal control, since the brake fluid within the accumulator 20 flows into the regulator 24, and as a result, the brake fluid within the master cylinder 32 is pressed out, the brake fluid is supplied to the wheel cylinder 44**.

The accumulator 20 is provided with a storage chamber for storing the brake fluid and a gas chamber for sealing a nitrogen gas in an inner portion thereof. The storage chamber and the gas chamber are separated by a elastically deformable partition film. When the brake fluid is supplied to the accumulator 20 from the pump 12, the brake fluid flows into the storage chamber, so that the gas chamber is compressed. As a result, an internal pressure of the gas chamber and the storage chamber is increased, and the accumulator pressure $P_{ACC}$ is increased. On the other hand, when the brake fluid within the accumulator 20 is flowed out toward the regulator 24, the gas chamber within the accumulator 20 is expanded, and the accumulator pressure $P_{ACC}$ is reduced.

Fig. 8B shows an embodiment of a change of the accumulator pressure $P_{ACC}$ realized in the case that the intermittent braking operation is performed as shown in Fig. 8A during an execution of the normal control, in the braking force control apparatus according to the present embodiment. As described above, according to the braking force control apparatus of the present embodiment, the brake fluid within the accumulator 20 is flowed out toward the regulator 24 by performing the braking operation. Accordingly, as shown in Fig. 8B, the periods T1, T2 and T3 corresponding to a period of increasing the master cylinder pressure $P_{M/C}$ coincide with a period at which the accumulator pressure $P_{ACC}$ is reduced.

Fig. 9 shows a relation between the master cylinder pressure $P_{M/C}$ and a wheel cylinder consumption amount $V_{W/C}$ realized during an execution of the normal control. The wheel cylinder consumption amount $V_{W/C}$ is a variable expressing a total amount of the brake fluid flowing into the wheel cylinder 44** from the master cylinder 32, that is, an amount of the brake fluid existing within the wheel cylinder 44**.

The master cylinder pressure $P_{M/C}$ is increased in accordance that the brake fluid is supplied to the wheel cylinder 44** from the master cylinder 32 and as a result, a hydraulic pressure within a passage from the master cylinder 32 to the wheel cylinder 44** is increased. In the system of the present embodiment, a relation shown in Fig. 9 is established between the master cylinder pressure $P_{M/C}$ and the wheel cylinder consumption amount $V_{W/C}$. The ECU 10 stores a $P_{M/C}$ - $V_{W/C}$ characteristic as a map. By referring the map shown in Fig. 9, in the case that the master cylinder pressure $P_{M/C}$ is changed from $P_{M/C1}$ to $P_{M/C2}$, an amount $\Delta V_{W/C}$ of the brake fluid supplied to the wheel cylinder from the master cylinder 32 during the time can be accurately detected.

Fig. 10 shows a relation between a volume $V_{ACC}$ of the gas chamber provided with the accumulator 20 and the accumulator pressure $P_{ACC}$ by setting a temperature of the periphery of the accumulator 20 as a parameter. As shown in Fig. 10, the smaller the volume of the gas chamber is, the higher the accumulator pressure $P_{ACC}$ becomes, and on the other hand, the larger the volume of the gas chamber is, the lower it becomes. Further, the $P_{ACC}$ - $V_{ACC}$ characteristic is displaced to a high pressure side as the temperature of the periphery of the accumulator 20 is high.

The ECU 10 stores a $P_{M/C}$ - $V_{W/C}$ characteristic shown in Fig. 10 as a map. A $P_{ACC}$ - $V_{ACC}$ characteristic corresponding to a peripheral temperature of the accumulator 20 is specified according to the map shown in Fig. 10 and the characteristic is referred, whereby in the case that the accumulator pressure $P_{ACC}$ changes from $P_{ACC1}$ to $P_{ACC2}$, a volume change amount (a volume increase amount) $\Delta V_{ACC}$ generated in the gas chamber as a premise of the change can be accurately detected.

The volume increasing amount of the gas chamber in the accumulator 20 corresponds to a volume decrease amount of the storage chamber in the accumulator 20, that is, a flow amount of the brake fluid flowing out from the accumulator 20 to the regulator 24. Accordingly, the ECU 10 can accurately detect a flow amount of the brake fluid flowing out from the accumulator 20 to the regulator 24 by referring the map shown in Fig. 10 and the detected value of the temperature sensor 90 in the case that the accumulator pressure $P_{ACC}$ is changed from $P_{ACC1}$ to $P_{ACC2}$. Here, in the following description, as a matter of convenience for explanation, an amount of the brake fluid flowing out from the accumulator 20 to the regulator 24 is expressed by using the same symbol $\Delta V_{ACC}$ as that of the volume changing amount of the gas chamber in the accumulator 20.

In the present embodiment, the regulator 24 and the master cylinder 32 are structured such that the amount $\Delta V_{ACC}$ of the brake fluid flowing into the regulator 24 from the accumulator 20 and $\Delta V_{W/C}$ of the brake fluid flowing out from the master cylinder 32 to the wheel cylinder 44** are equivalent. Accordingly, supposing that the detected value $SP_{M/C}$ and $SP_{ACC}$ of the hydraulic pressure sensors 40 and 88 are accurate, a flow amount $\Delta V_{W/C}$ of the brake fluid calculated based on the detected value $SP_{M/C}$ of the hydraulic pressure sensor 40 (hereinafter, expressed by adding a symbol $\Delta SV_{W/C}$) and the flow amount $\Delta V_{ACC}$ of the brake fluid calculated based on the detected value $SP_{ACC}$ of the hydraulic pressure sensor 88 (hereinafter, expressed by adding a symbol $\Delta SV_{ACC}$) will substantially coincide with each other.

In other words, in the case that the flow amounts $\Delta SP_{W/C}$ and $\Delta SP_{ACC}$ calculated in the above manner in step of operating the brake are greatly different from each other, it can be determined that there is a possibility that an abnormality is generated in the hydraulic pressure sensor 40. The braking force control apparatus according to the present embodiment is characterized in that whether or not the hydraulic pressure sensor 40 is normally operated is determined based on a comparison between $\Delta SP_{W/C}$ AND $\Delta SP_{ACC}$ in the present view.

Fig. 11 shows a flow chart of an embodiment of a control routine performed by the ECU 10 so as to realize the above function. The routine shown in Fig. 11 corresponds to a timed interruption routine operated at every predetermined times. When the routine shown in Fig. 11 is started, at first, a processing of step 160 is performed.

In step 160, it is determined whether or not an on signal is output from the brake switch 84. In the present routine, a state of the hydraulic pressure sensor 40 can be determined by comparing between $\Delta SP_{W/C}$ and $\Delta SP_{ACC}$ detected according to the braking operation. Accordingly, in the case that the braking operation is not performed, it is not useful to advance the processing of the present routine. Therefore, if it is determined that the on signal is not output from the brake switch 84, the current routine is terminated without any further processings. On the other hand, if it is determined that the on signal is output from the brake switch 84, a processing of step 162 is next performed.

In step 162, it is determined whether or not the normal control is performed in the braking force control apparatus. In the case that the ABS control, the BA control or the VSC control is performed, the amount $\Delta V_{ACC}$ of the brake fluid flowing out from the accumulator 20 and the amount $\Delta V_{M/C}$ of the brake fluid flowing out from the master cylinder 32 do not always coincide with each other. Under the above circumstance, it is hard to determine whether or not the hydraulic pressure sensor 40 is normal on the comparison between $\Delta SV_{M/C}$ and $\Delta SV_{ACC}$.

Accordingly, if it is determined that any one of the ABS control, the BS control and the VSC control is performed in the above step 162, the current routine is terminated without any further processings. On the other hand, if it is determined that none of the processes is performed, that is, the normal control is performed in the braking force control apparatus, a processing of step 164 is next performed.

In step 164, it is determined whether or not a change rate $\Delta SP_{ACC}$ of the detected value $SP_{ACC}$ in the hydraulic pressure sensor 88 is 0 or is changed from a positive value to a negative value between the preceding processing time and the current processing time, that is, whether or not the detected value $SP_{ACC}$ begins to reduce. As shown in Fig. 8B mentioned above, the accumulator pressure $P_{ACC}$ begins to be reduced by a start of the braking operation. Accordingly, if the above condition is established, it is possible to determine that the braking operation is started in the braking force control apparatus. In the present case, the processing of step 166 is performed. On the other hand, if the above condition is not established, that is, the braking operation is continuously performed between the preceding processing time and the current processing time or is not performed, the current routine is terminated without any further processings.

In step 166, the detected values $SP_{ACC}$ and $SP_{W/C}$ output from the hydraulic pressure sensors 88 and 40 at that time are stored as the detected value $SP_{ACC1}$ and $SP_{W/C1}$ at a time of starting the braking operation, respectively. When the above processing is terminated, a processing of step 168 is next performed.

In step 168, it is determined whether or not a change rate $\Delta SP_{ACC}$ of the detected value $SP_{ACC}$ in the hydraulic pressure sensor 88 is changed from a negative value to 0 or a positive value between the preceding processing time and the current processing time, that is, whether or not the decreasing of the detected value $SP_{ACC}$ is stopped. As shown in Fig. 8B mentioned above, the decreasing of the accumulator pressure $P_{ACC}$ is stopped in synchronous with a time at which the increase of the master cylinder pressure $P_{M/C}$ is stopped. Accordingly, if the above condition is established, it is possible to determine that the increase of the master cylinder pressure $P_{M/C}$ is terminated, that is, the braking operation sufficient to obtain a necessary brake force is operated. In the present case, a processing of step 170 is performed. On the other hand, if the above condition is not established, the current routine is terminated without any further processings.

In step 170, the detected values $SP_{ACC}$ and $SP_{W/C}$ output from the hydraulic pressure sensors 88 and 40 at that time are stored as the detected value $SP_{ACC1}$ and $SP_{W/C1}$ at a time of terminating the braking operation, respectively. When the above processing is terminated, a processing of step 172 is next performed.

In step 172, the calculated value $\Delta SV_{ACC}$ corresponding to the amount ΔVAC of the brake fluid flowing into the regulator 24 from the accumulator 20 according to the above braking operation and the calculated value $\Delta SV_{W/C}$ corresponding to the amount $\Delta V_{W/C}$ of the brake fluid flowing into the wheel cylinder 44** from the master cylinder 32 according to the above braking operation are calculated. The calculated value $\Delta SV_{ACC}$ is calculated based on the detected values $SP_{ACC1}$ and $SP_{ACC2}$ stored in the above steps 166 and 172 by referring the detected value of the temperature sensor 90 and the map shown in Fig. 10, as mentioned above. Further, the calculated value $\Delta SV_{W/C}$ is calculated based on the detected values $SP_{W/C1}$ and $SP_{W/C2}$ stored in the above steps 166 and 172 by referring the map shown in Fig. 9, as mentioned above. When the calculation of the calculated values $\Delta SV_{ACC}$ and $\Delta SV_{W/C}$ is terminated, a processing of step 174 is next performed.

In step 174, a value $K = |(\Delta SV_{ACC} - \Delta SV_{W/C})/(\Delta SV_{ACC} + \Delta SV_{W/C})|$ obtained by normalizing a deviation between the calculated values $\Delta SV_{ACC}$ and $\Delta SV_{W/C}$ is calculated (hereinafter, the value K is referred as a normal deviation). When the calculation of the normal deviation K is terminated, a processing of step 176 is next performed.

As described above, if the liquid pressure sensors 40 and 88 output the normal detected values $SP_{M/C}$ and $SP_{ACC}$, the calculated values $\Delta SV_{W/C}$ and $\Delta SV_{ACC}$ are substantially equal to each other. In the present case, the normal deviation K becomes substantially 0. On the other hand, when an abnormality is generated in the hydraulic pressure sensor 40, a great deviation is generated in two calculated values $\Delta SV_{W/C}$ and $\Delta SV_{ACC}$. In the present case, the normal deviation K becomes a great value. Accordingly, in the present routine, it can be supposed whether or not the hydraulic pressure sensor 40 is normally operated based on the value of the normal deviation K.

In step 176, it is determined whether or not the normal deviation K is smaller than a predetermined threshold $K_{th}$ . As a result, if it is determined that the formula $K < K_{th}$ is not established, it can be determined that there is a possibility that an abnormality is generated in the hydraulic pressure sensor 40. In the present case, a processing of step 178 is next performed.

In step 178, in order to express that an abnormality is generated in the hydraulic pressure sensor 40, a processing of setting "1" to the flag XFAIL is performed. When the above processing is terminated, the current routine is terminated after a processing for inhibiting the BA control is next performed in step 180.

Further, in the above step 176, if it is determined that the formula $K < K_{th}$ is established, it can be determined that the hydraulic pressure sensor 40 is normally operated. In the present case, the current routine is terminated after a processing of resetting the flag XFAIL to "0" is next performed in step 180.

According to the above processing, the operation state of the hydraulic pressure sensor 40 can be accurately determined on the basis whether or not the hydraulic pressure sensors 88 and 40 accurately detect the change generated in the accumulator pressure $P_{ACC}$ and the master cylinder pressure $P_{M/C}$ according to the braking operation. Then, if there is a possibility that an abnormality is generated in the hydraulic pressure sensor 40, it is possible to surely inhibit an execution of the BA control. Accordingly, in the braking force control apparatus of the present embodiment, in the same manner as that of the braking force control apparatus of the above first and second embodiments, a proper fuel safe with respect to an abnormality of the hydraulic pressure sensor 40 can be realized.

Further, in the above embodiment, the hydraulic pressure sensor 40 corresponds to "brake operating force detecting means" described in claim 1 and the BA control corresponds to "a brake hydraulic control" described in claim 1, respectively, and the ECU 10 performs the processing in steps 164 to 176, whereby "abnormality detecting means" described in claims 1 and 5 can be realized and the ECU 10 performs the processing in step 180, whereby "hydraulic control inhibiting means" described in claim 1 can be realized. Further, in the above embodiment, the hydraulic pressure sensor 88 corresponds to "accumulator pressure detecting means" described in claim 5.

In the present case, the above embodiment is the same as the above first and second embodiments in view of (1) being widely applied to the brake hydraulic control performed based on the brake operating force and (2) employing the pedal stroke sensor, the pedal pedaling force sensor or the like as the brake operating force detecting means in place of the hydraulic pressure sensor 40.

Next, with reference to Fig. 12, a fifth embodiment according to the present invention will be described below. A braking force control apparatus according to the present embodiment can be realized by the same system structure as that of the braking force control apparatuses according to the above first to third embodiments. In the present embodiment, the ECU 10 performs a routine shown in Fig. 12.

Fig. 12 is a flow chart of an embodiment of a control routine which the ECU 10 performs so as to determine whether or not the hydraulic pressure sensor 40 is normally operated by continuously monitoring an output signal pMC of the hydraulic pressure sensor 40. The routine shown in Fig. 12 corresponds to a timed interruption routine operated at every predetermined times. When the routine shown in Fig. 12 is operated, at first, a processing of step 190 is performed.

In step 190, it is determined whether or not the flag XFAILS is set at "1". The flag XFAILS corresponds to a flag structured such that "1" is set in the case that it is detected that the detected value $SP_{M/C}$ of the hydraulic pressure sensor 40 is fixed to an abnormality value by executing the present routine. Here, in the following description, the above abnormality is referred as an output bonding abnormality.

As a result of the above determination, if it is determined that the formula XFAILS = 1 is established, the current routine is terminated after the processing for inhibiting the execution of the BA control is next performed in step 192. On the other hand, if it is determined that the formula XFAILS = 1 is not established, a processing of steps 194 and the after is performed.

In step 194, it is determined whether or not a supposed vehicle body speed $V_{s0}$ is equal to or more than a predetermined speed $V_{th}$. The predetermined speed $V_{th}$ is a threshold set for determining whether or not the vehicle is now running. Accordingly, if it is determined that the formula $V_{s0} \geqq V_{th}$ is not established, it can be determined that there is a possibility that the vehicle is stopped. In the case that the vehicle now stops, there is a case that a fixed pedal depressing force Fp is applied to the brake pedal 30. Hereinafter, the above braking operation is referred as a stop time braking operation. According to the stop time braking operation, there is a case that the master cylinder pressure $P_{M/C}$ is maintained to be a fixed value without changing for a relatively long time. According to the present embodiment, in order to avoid the condition, if the above condition is not established, the current routine is terminated after a processing of clearing a counter C mentioned below is next performed in step 195. On the other hand, if the formula $V_{s0} \geqq V_{th}$ is established, a processing of step 196 is next performed.

In step 196, it is determined whether or not the detected value $SP_{M/C}$ of the hydraulic pressure sensor 40 is equal to or more than a predetermined value $\gamma$. The hydraulic pressure sensor 40 outputs a little electric signal (hereinafter, refer to a lower limit signal) even in the case that the master cylinder pressure $P_{M/C}$ is not increased. The predetermined value $\gamma$ is a value greater than the detected value $SP_{M/C}$ corresponding to the lower limit signal. Accordingly, if the formula $SP_{M/C} \geqq \gamma$ is established, it can be determined that an electric signal output from the hydraulic pressure sensor 40 is not a lower limit signal. In the case that the above determination is performed, a processing of step 198 is next performed. On the other hand, if it is determined that the formula $SP_{M/C} \geqq \gamma$ is not established, it can not be concluded that the electric signal output from the hydraulic pressure sensor 40 is not a lower limit signal. In the present case, the current routine is terminated after the processing of step 195 is performed.

In step 198, it is determined whether or not a change rate $\Delta SP_{M/C}$ of the detected value $SP_{M/C}$ of the hydraulic pressure sensor 40 is equal to or less than a predetermined value $\delta$. In the case that the change rate $\Delta SP_{M/C}$ over the value $\delta$ is recognized in the detected value $SP_{M/C}$, that is, if the formula $\Delta SP_{M/C} \leqq \delta$ is not established, it can be determined that the hydraulic pressure sensor 40 is normally operated. Accordingly, in the case that the above determination is performed, the current routine is terminated after the processing of step 195 is performed.

On the other hand, if the formula $\Delta SP_{M/C} \leqq \delta$ is established, it is necessary to further determine whether the detected value $SP_{M/C}$ over the lower limit value output from the hydraulic pressure sensor 40 is generated due to the output bonding abnormality or due to the normal braking operation. Accordingly, in the case that the above determination is performed, a processing of step 200 and the after is performed.

In step 200, a processing of counting up a counter C is performed. The counter C is a counter for counting a time at which the conditions of the above steps 194 to 198 are continuously established. A counted value of the counter C is cleared by executing the processing of step 195 as mentioned above, and also cleared when an IG switch is turned on. When the above processing is terminated, a processing of step 202 is next performed.

In step 202, it is determined whether or not the counted value of the counter C is equal to or more than a predetermined value C0. If the detected value $SP_{M/C}$ of the hydraulic pressure sensor 40 is a value caused by the normal braking operation, a decreasing speed is applied to the vehicle at a time when the processing of step 198 is performed. When the decreasing speed is continuously applied to the vehicle, the supposed vehicle body speed $V_{s0}$ is reduced and the vehicle is soon in a stop state. When the vehicle is in the stop state, the condition of step 194 is not established. Accordingly, in the case that the hydraulic pressure sensor 40 is normally operated, all of the conditions of steps 194, 196 and 198 are not established for a long time.

The above predetermined value $C_0$ corresponds to a longest time for which steps 194, 196 and 198 can be continuously established in the case that the hydraulic pressure sensor 40 is normally operated. Accordingly, if it is determined that the formula $C \geqq C_0$ is not established in step 202, it can be determined that there is a possibility that the hydraulic pressure sensor 40 is normally operated. In the present case, the current routine is quickly terminated without any further processings.

On the other hand, in step 202, if it is determined that the formula $C \geqq C_0$ is established, it can be determined that an abnormality is generated in the hydraulic pressure sensor 40. In the present case, a processing of setting "1" to the flag XFAILS is next performed in step 202, further a processing for inhibiting the BA control is performed in the subsequent step 192, and thereafter the current routine is terminated.

According to the above processing, by monitoring the detected value $SP_{M/C}$ of the hydraulic pressure sensor 40, it can be accurately determined whether or not the output bonding abnormality is generated in the hydraulic pressure sensor 40. Then, if it is recognized that the output bonding abnormality is generated in the hydraulic pressure sensor 40, it is possible to surely inhibit an execution of the BA control. Accordingly, in the braking force control apparatus of the present embodiment, in the same manner as that of the braking force control apparatus of the above first, second and forth embodiments, a proper fuel safe can be realized with respect to an abnormality of the hydraulic pressure sensor 40.

Further, in the above embodiment, the hydraulic pressure sensor 40 corresponds to "brake operating force detecting means" described in claim 1 and the BA control corresponds to "a brake hydraulic control" described in claim 1, respectively, and the ECU 10 performs the processing in steps 194 to 202, whereby "abnormality detecting means" described in claims 1 and 6 can be realized and the ECU 10 performs the processing in step 192, whereby "hydraulic control inhibiting means" described in claim 1 can be realized. Further, in the above embodiment, the value $\gamma$ corresponds to a detected value expressing "an execution of a braking operation" described in claim 6, the value $\delta$ corresponds to "a predetermined value" described in claim 6 and the value C0 corresponds to "a predetermined time" described in claim 6, respectively.

In the present case, the above embodiment is the same as the above first and second embodiments in view of (1) being widely applied to the brake hydraulic control performed based on the brake operating force and (2) employing the pedal stroke sensor, the pedal pedaling force sensor or the like as the brake operating force detecting means in place of the hydraulic pressure sensor 40.

Further, in the above embodiment, the conditions for determining the state of the hydraulic pressure sensor 40 include a condition that the supposed vehicle body speed $V_{s0} \geqq V_{th}$ is established, that is, the vehicle is now running, however, the present invention is not limited to the present. That is, the above condition is introduced by taking into consideration that the detected value $SP_{M/C}$ over the lower limit value can be output without a great change rate $\Delta SP_{M/C}$ for a relatively long time at a time of executing the stop time braking operation even when the hydraulic pressure sensor 40 is normal, so as to avoid the state.

However, the stop time braking operation is performed on the assumption that the vehicle is started, and does not correspond to an operation continuously performed for a significantly long time. On the other hand, when the output bonding abnormality is generated in the hydraulic pressure sensor 40, the abnormality detected value $SP_{M/C}$ is output for a sufficiently long time in comparison with the time for which the stop time braking operation is continued. Accordingly, unless the condition $V_{s0} \geqq V_{th}$ is not used, it can be accurately determined whether or not the output bonding abnormality is generated in the hydraulic pressure sensor 40 only by the processing of the above steps 196 to 524 when the predetermined time C0 is set to be a sufficient long time. Here, in the case of using such a logic, the ECU 10 performs the processing of steps 195 to 202, whereby "abnormality detecting means" described in claims 1 and 6 can be realized.

Next, a sixth embodiment according to the present invention will be described below with reference to Fig 13. A braking force control apparatus according to the present embodiment can be realized by the same system structure as that of the braking force control apparatuses according to the above first, second and fifth embodiments or the braking force control apparatus according to the fourth embodiment. In the present embodiment, the ECU 10 performs a routine shown in Fig. 13 in addition to the routine for realizing the braking force control apparatus according to the first, second, forth and fifth embodiment.

The braking force control apparatuses according to the above first, second, forth and fifth embodiments are provided with a function of inhibiting an execution of the BA control when an abnormality is generated in the hydraulic pressure sensor 40. In addition to the above function, the braking force control apparatus according to the present embodiment is characterized by a function of enabling an execution of the BA control after an abnormality of the hydraulic pressure sensor 40 is released.

Fig. 13 shows a flow chart of an embodiment of a control routine performed by the ECU 10 so as to realize the above function. The routine shown in Fig. 13 corresponds to a timed interruption routine operated at every predetermined times. When the routine shown in Fig. 13 is operated, at first, a processing of step 210 is performed.

In step 210, whether or not an abnormality is determined in the hydraulic pressure sensor 40. The routine corresponds to a routine for canceling an abnormality determination of the hydraulic pressure sensor 40 so as to enable to execute the BA control in the case that the hydraulic pressure sensor 40 is returned to the normal state from the abnormal state. Accordingly, in the case that an abnormality is not determined in the hydraulic pressure sensor 40, it is not useful to advance the processing of the present routine. Therefore, if it is determined that an abnormality determination is not performed in the hydraulic pressure sensor 40, the current routine is quickly terminated thereafter. On the other hand, if it is determined that an abnormality determination is performed in the hydraulic pressure sensor 40, a processing of step 212 is next performed.

In step 212, it is determined whether or not an on-signal is output from the brake switch 84. In the present routine, it is determined whether or not the hydraulic pressure sensor 40 is normal based on whether or not a suitable change is generated in the detected value $SP_{M/C}$ according to an operation of the brake pedal 30. Accordingly, if it is determined that the on signal is not output from the brake switch 84, that is, the brake pedal is not operated, the current routine is terminated without any further processings. On the other hand, if it is determined that the on signal is output from the brake switch 84, a processing of step 214 is next performed.

In step 214, it is determined whether or not a change rate $\Delta SP_{M/C}$ equal to or more than a predetermined value $\varepsilon$ is generated in the detected value $Sp_{M/C}$ in the hydraulic pressure sensor 40 between the preceding processing time and the current processing time. As a result, in the case that the formula $\Delta SP_{M/C} \geqq \varepsilon$ is not established, it can not be determined that the hydraulic pressure sensor 40 is returned to the normal state. In the present case, the current routine is terminated without any further processings. When the routine is terminated in the above manner, a state of inhibiting an execution of the BA control is continued. On the other hand, if it is determined that the formula $\Delta SP_{M/C} \geqq \varepsilon$ is established, it can be determined that the hydraulic pressure sensor 40 is returned to the normal state. In the present case, a processing of step 216 is next performed.

In step 216, a processing for displaying that the detected value $SP_{M/C}$ of the hydraulic pressure sensor 40 is normal, in particular, a processing of resetting the flag expressing that an abnormality is generated in the hydraulic pressure sensor 40 at "0" is performed. When the above processing is terminated, the current routine is terminated after a processing for enabling an execution of the BA control is next performed in step 218.

According to the above processing, even when an abnormality is temporarily generated in the hydraulic pressure sensor 40, an execution of the BA control is enabled after the hydraulic pressure sensor 40 is returned to the normal state. Therefore, according to the braking force control apparatus of the present embodiment, a disadvantage that an execution of the BA control is unnecessarily inhibited in spite that the hydraulic pressure sensor 40 is normal can be avoided.

Further, in the above embodiment, the ECU 10 performs the processing in steps 210 to 214, whereby "abnormality cancellation detecting means" described in claims 8 and 9 can be realized and the ECU 10 performs the processing in step 218, whereby "hydraulic control enabling means" described in claim 8 can be realized, respectively.

Next, a braking force control apparatus according to a seventh embodiment of the present invention will be described below with reference to Figs. 14 to 22.

Fig. 14 shows a system structure view of a hydro booster type braking force control apparatus (hereinafter, simply refer to a braking force control apparatus) corresponding to an embodiment of the present invention. The braking force control apparatus according to the present embodiment is controlled by an ECU 310.

The braking force control apparatus is provided with a brake pedal 312. A brake switch 314 is arranged near the brake pedal 312. The brake switch 314 outputs an on signal in accordance that the brake pedal 312 is stepped down. An output signal of the brake switch 314 is supplied to the ECU 310. The ECU 310 determines whether or not the brake pedal 312 is stepped down based on the output signal of the brake switch 314.

The brake pedal 312 is connected to a master cylinder 316. A reservoir tank 318 is arranged in an upper portion of the master cylinder 316. A return passage 320 for circulating a brake fluid to the reservoir tank 318 is communicated with the reservoir tank 318. A supply passage 322 is further communicated with the reservoir tank 318. The supply passage 322 is communicated with a suction side of a pump 324. An accumulator passage 326 is communicated with a discharge side of the pump 322. A constant pressure releasing valve 327 opened in the case that an excess pressure is generated in the accumulator passage 326 is arranged between the accumulator passage 326 and the supply passage 322.

An accumulator 328 for storing a liquid pressure discharged from the pump 324 is communicated with the accumulator passage 326. An upper limit side pressure switch 330 and a lower limit side pressure switch 332 are further connected to the accumulator passage 326. The upper limit side pressure switch 330 generates an on output in the case that a pressure of the accumulator passage 326 (hereinafter, refer to an accumulator pressure $P_{ACC}$) is over a predetermined upper limit value. On the other hand, the lower limit side pressure switch 332 generates an on signal in the case that the accumulator pressure $P_{ACC}$ is over a predetermined lower limit value.

The pump 324 is kept in an on-state until an on output is generated by the upper limit side pressure switch 330 after an on output is generated from the lower limit side pressure switch 332, that is, the accumulator pressure $P_{ACC}$ reaches the upper limit value after being below the lower limit value. Accordingly, the accumulator pressure $P_{ACC}$ is always maintained between the upper limit value and the lower limit value.

A regulator 334 is integrally assembled in the master cylinder 316. The accumulator passage 326 is communicated with the regulator 334. Hereinafter, the master cylinder 316 and the regulator 334 are totally called as a hydro booster 336.

A piston 40 is arranged within the hydro booster 336. An assist hydraulic pressure chamber 46 is formed in a side of the brake pedal 312 of the piston 40. Further, a first hydraulic pressure chamber 356 and a second hydraulic pressure chamber 358 are separately formed within the hydro booster 336. The hydro booster 336 is structured such as to generate a hydraulic pressure having a ratio with a predetermined times of pedal depressing force in both of the first hydraulic pressure chamber 356 and the second hydraulic pressure chamber 58 by the accumulator pressure $P_{ACC}$ supplied through the accumulator passage 326 as a hydraulic pressure source. Hereinafter, a hydraulic pressure generated in the first hydraulic pressure chamber 356 and the second hydraulic pressure chamber s358 of the hydro booster 336 is called as a master cylinder pressure $P_{M/C}$.

A first hydraulic pressure passage 382 and a second hydraulic pressure passage 384 are respectively communicated with the first hydraulic pressure chamber 356 and the second hydraulic pressure chamber 358 of the hydro booster 336. A first assist solenoid 386 (hereinafter, refer to $SA_{-1}$ 386) and a second assist solenoid 388 (hereinafter, refer to $SA_{-2}$ 386) are communicated with the first hydraulic pressure passage 382. On the other hand, a third assist solenoid 390 (hereinafter, refer to $SA_{-3}$ 390) is communicated with the second hydraulic pressure passage 384.

Further, a control pressure passage 392 is communicated with the $SA_{-1}$386 and $SA_{-2}$388. The control pressure passage 392 is communicated with the accumulator passage 326 through a regulator switching solenoid 394 (hereinafter, refer to STR394). The STR 394 corresponds to a two-positional solenoid valve structured such as to make the accumulator passage 326 and the control pressure passage 392 in a closed state by being set to an off-state and make them in a conductive state by being set to an on-state.

A hydraulic pressure passage 396 provided in correspondence to a front right wheel FR is communicated with the $SA_{-1}$ 386. In the same manner, a hydraulic pressure passage 398 provided in correspondence to a front left wheel FL is communicated with the $SA_{-2}$ 388. The $SA_{-1}$ 386 corresponds to a two-positional solenoid valve structured such as to realize a first state of conducting the hydraulic pressure passage 396 with the first hydraulic pressure passage 382 by being set to an off-state, and realize a second state of conducting the hydraulic pressure passage 396 with the control pressure passage 392 by being set to an on-state. Further, the $SA_{-2}$ 388 corresponds to a two-positional solenoid valve structured such as to realize a first state of conducting the hydraulic pressure passage 398 with the first hydraulic pressure passage 382 by being set to an off-state, and realize a second state of conducting the hydraulic pressure passage 398 with the control pressure passage 392 by being set to an on-state.

A hydraulic pressure passage 400 provided in correspondence to right and rear left wheels RL and RR is communicated with the $SA_{-3}$ 390. The $SA_{-3}$ 390 corresponds to a two-positional solenoid valve structured such as to make the second hydraulic pressure passage 384 and the hydraulic pressure passage 400 in a conductive state by being set to an off-state and make them in a closed state by being set to an on-state. A check vale 402 for enabling only a flow of a fluid toward the hydraulic pressure passage 400 from the second hydraulic pressure passage 384 is arranged between the second hydraulic pressure passage 384 and the hydraulic pressure passage 400.

A front right wheel holding solenoid 404 (hereinafter, SFRH 404) is communicated with the hydraulic pressure passage 396 corresponding to the front right wheel FR. In the same manner, a front left wheel holding solenoid 406 (hereinafter, refer to SFLH 406) is communicated with the hydraulic pressure passage 396 corresponding to the front left wheel FL, and a rear right wheel holding solenoid 408 (hereinafter, refer to SRRH 408) and a rear left wheel holding solenoid 410 (hereinafter refer to SRLH 410) are communicated with the hydraulic pressure passage 400 corresponding to the left and rear right wheels RL and RR, respectively. Hereinafter, these solenoids are totally called as "holding solenoids S**H" in the case of being referred as a whole.

A front right wheel pressure reducing solenoid 412 (hereinafter, SFRR 412) is communicated with the SFRH. In the same manner, a front left wheel pressure reducing solenoid 414 (hereinafter, refer to SFLR 414), a rear right wheel pressure reducing solenoid 416 (hereinafter, refer to SRRR 416) and a rear left wheel pressure reducing solenoid 418 (hereinafter, refer to SRLR 418) are communicated with the SFLH 406, SRRH 408 and SRLH 410. Hereinafter, these solenoids are totally called as "pressure reducing solenoids S**R" in the case of being referred as a whole.

Further, a wheel cylinder 420 in the front right wheel FR is communicated with the SFRH 404. In the same manner, a wheel cylinder 422 in the front left wheel FL, a wheel cylinder 424 in the rear right wheel RR and a wheel cylinder 426 in the rear left wheel RL are communicated with the SFLH 406, SRRH 408 and SRLH 410, respectively.

A check vale 428 for enabling a flow of a fluid toward the hydraulic pressure passage 396 from the wheel cylinder 420 by bypassing the SFRH 404 is arranged between the hydraulic pressure passage 396 and the wheel cylinder 420. In the same manner, check vales 430, 432 and 434 for enabling a flow of a fluid by respectively bypassing the SFLH 406, SRRH 408 and SRLH 410 are arranged between the hydraulic pressure passage 398 and the wheel cylinder 422, between the hydraulic pressure passage 400 and the wheel cylinder 424 and between the hydraulic pressure passage 400 and the wheel cylinder 426, respectively.

The SFRH 404 corresponds to a two-positional solenoid valve structured such as to make the hydraulic pressure passage 396 and the wheel cylinder 420 in a conductive state by being set to an off-state and make them in a closed state by being set to an on-state. In the same manner, the SFLH 406, SRRH 408 and SRLH 410 respectively correspond to two-positional solenoid valves structured such as to make a passage connecting between the hydraulic pressure passage 398 and the wheel cylinder 422, a passage connecting between the hydraulic pressure passage 400 and the wheel cylinder 424 and a passage connecting between the hydraulic pressure passage 400 and the wheel cylinder 426 in a closed state by being set to an on-state.

A return passage 320 is communicated with the SFRR 412, SFLR 414, SRRR 416 and SRLR 418. The SFRR 412 corresponds to a two-positional solenoid valve structured such as to make the wheel cylinder 420 and the return passage 320 in a closed state by being set to an off-state and make the wheel cylinder 420 and the return passage 320 in a conductive state by being set to an on-state. In the same manner, the SFLR 414, SRRR 416 and SRLR 418 respectively correspond to two-positional solenoid valves structured such as to make a passage connecting between the wheel cylinder 422 and the return passage 320, a passage connecting between the wheel cylinder 424 and the return passage 320 and a passage connecting between the wheel cylinder 426 and the return passage 320 in a conductive state by being set to an on-state, respectively.

A wheel speed sensor 436 is arranged near the front right wheel FR. The wheel speed sensor 436 outputs a pulse signal at a period corresponding to a rotational speed of the front right wheel FR. In the same manner, wheel speed sensors 438, 440 and 442 for respectively outputting pulse signals at periods corresponding to rotational speeds of the respective wheels are arranged near the front left wheel FL, the rear right wheel RR and the rear left wheel RL. The output signals of the wheel speed sensors 436 to 442 are supplied to the ECU 310. The ECU 310 detects a rotational speed Vw of each of the wheels based on the output signal of each of the wheel speed sensors 436 to 442.

A hydraulic pressure sensor 444 is arranged in the second hydraulic pressure passage 384 communicated with the second hydraulic pressure chamber 358 of the hydro booster 336. The hydraulic pressure sensor 444 outputs an electric signal pMC corresponding to a hydraulic pressure generated within the second hydraulic pressure chamber 358, that is, the master cylinder pressure $P_{M/C}$ generated by the hydro booster 336. The output signal pMC of the hydraulic pressure sensor 444 is supplied to the ECU 310. The ECU 310 detects the master cylinder pressure $P_{M/C}$ based on the output signal pMC of the hydraulic pressure sensor 444.

Next, an operation of the braking force control apparatus according to the present embodiment will be described below. The braking force control apparatus according to the present embodiment realizes (1) a function corresponding to a normal brake apparatus, (2) a function corresponding to an antilock brake system (3) a function of generating a great brake force in the case that a quick start of the brake force is required in comparison with the normal time (a brake assist function) by switching a state of various kinds of electromagnetic valves arranged within a hydraulic circuit.

Fig. 14 shows a state of the braking force control apparatus for realizing (1) the function corresponding to the normal brake apparatus (hereinafter, refer to a normal brake function). That is, (1) the normal brake function can be realized, as shown in Fig. 14, by making all the electromagnetic valves provided in the braking force control apparatus in an off-state. Hereinafter, the state shown in Fig. 14 is called as a normal brake state. Further, a control for realizing the normal brake function in the braking force control apparatus is called as a normal brake control.

In Fig. 14, the wheel cylinders 420 and 422 of the left and front right wheels FL and FR are communicated with the first hydraulic pressure chamber 356 of the hydro booster 334 through the first hydraulic pressure passage 382. Further, the wheel cylinders 424 and 426 of the left and rear right wheels RL and RR are communicated with the second hydraulic pressure chamber 358 of the hydro booster 336 through the second hydraulic pressure passage 384. In the present case, the wheel cylinder pressure $P_{W/C}$ of the wheel cylinders 420 to 426 is always controlled to be equal to the master cylinder pressure $P_{M/C}$. accordingly, according to the state shown in Fig. 14, the normal brake function can be realized.

Fig. 15 shows a state of the braking force control apparatus for realizing (2) the function corresponding to the antilock brake system (hereinafter, refer to an ABS function). That is, (2) the ABS function can be realized, as shown in Fig. 15, by making the $SA_{-1}$ 386 and $SA_{-2}$ 388 in an on-state and suitably driving the holding solenoids S**H and the pressure reducing solenoids S**R in response to a requirement of the ABS. Hereinafter, a state shown in Fig. 15 is called as an ABS operation state. Further, a control for realizing the ABS function in the braking force control apparatus is called as an ABS control.

The ECU 310 starts the ABS control in the case that the vehicle is in a braking state and an excess slip ratio is detected in any one of the wheels. During the ABS control, the hydraulic pressure passages 396 and 398 provided in correspondence to the front wheels are communicated with the second hydraulic pressure chamber 358 of the hydro booster 336 in the same manner as that of the hydraulic pressure passage 400 provided in correspondence to the rear wheels. Accordingly, during the ABS control, the wheel cylinder pressure $P_{W/C}$ of all the wheels is increased by the second hydraulic pressure chamber 358 as a hydraulic pressure source.

The wheel cylinder pressure $P_{W/C}$ in each of the wheels can be increased by making the holding solenoids S**H in a valve-released state and making the pressure reducing solenoids S**R in a valve-closed state during an execution of the ABS control. Hereinafter, the state is called as (i) a pressure increasing mode. The wheel cylinder pressure $P_{W/C}$ of each of the wheels can be held by making both of the holding solenoids S**H and the pressure reducing solenoids S**R in a valve-closed state during the ABS control. Hereinafter, the state is called as (ii) a hold mode. Further, the wheel cylinder pressure $P_{W/C}$ of each of the wheels can be reduced by making the holding solenoids S**H in a valve-closed state during the ABS control and making the pressure reducing solenoids S**R in a valve-released state. Hereinafter, the state is called as (iii) a pressuer reducing mode.

The ECU 310 controls the holding solenoids S**H and the pressure reducing solenoids S**R according to a slip state of each of the wheels during the ABS control so that (i) the pressure increasing mode, (ii) the holding mode and (iii) the pressuer reducing mode can be suitably realized at each of the wheels. When the holding solenoids S**H and the pressure reducing solenoids S**R are controlled in the above manner, the wheel cylinder pressures $P_{W/C}$ of all the wheels are controlled to a pressure which does not generate an excess slip ratio in the corresponding wheels. Accordingly, in the above control, the ABS function can be realized in the braking force control apparatus.

Figs. 16 to 18 show a state of the braking force control apparatus for realizing (3) the brake assist function (hereinafter, refer to a BA function). The ECU 310 realizes the BA function by suitably realizing a state shown in Figs. 16 to 18 after the braking operation for requiring a quick start of the brake force, that is, an emergency braking operation is performed by a driver of the vehicle. Hereinafter, a control for realizing the BA function in the braking force control apparatus is called as a BA control.

Fig. 16 shows an increased assist pressure state realized during an execution of the BA control. The increased assist pressure state can be realized in the case that it is required to increase the wheel cylinder pressure $P_{W/C}$ in each of the wheels during an execution of the BA control. In the system of the present embodiment, the increased assist pressure state can be realized, as shown in Fig. 16, by making the $SA_{-1}$ 386, $SA_{-2}$ 388, $SA_{-3}$ 390 and STR 394 in an on-state.

In the increased assist pressure state, all the wheel cylinders 420 to 426 are communicated with the accumulator passage 326 through the STR 394. Accordingly, when the increased assist pressure state is realized, it is possible to increase the wheel cylinder pressure $P_{W/C}$ in all the wheels by the accumulator 328 as a hydraulic pressure source. A high pressure accumulator pressure $P_{ACC}$ is stored in the accumulator 328. Accordingly, due to the increased assist pressure state, the wheel cylinder pressure $P_{W/C}$ of all the wheels can be increased in comparison with the master cylinder pressure $P_{M/C}$.

Here, in the increased assist pressure state shown in Fig. 16, the hydraulic pressure passages 396, 398 and 400 are communicated with the accumulator passage 326 as mentioned above and communicated with the second hydraulic pressure passage 384 through the check valve 402. Accordingly, in the case that the master cylinder pressure $P_{M/C}$ introduced to the second hydraulic pressure passage 384 is greater than the wheel cylinder pressure $P_{W/C}$ in each of the wheels, the wheel cylinder pressure $P_{W/C}$ can be increased by the hydro booster 336 as a hydraulic pressure source even in the increased assist pressure state.

Fig. 17 shows a held assist pressure state realized during an execution of the BA control. The held assist pressure state is realized in the case that it is necessary to hold the wheel cylinder pressure $P_{W/C}$ in each of the wheels during an execution of the BA control. The held assist pressure state can be realized, as shown in Fig. 17, by making the $SA_{-1}$ 386, $SA_{-2}$ 388, $SA_{-3}$ 390 and STR 394 in an on-state and further making all the holding solenoids S**H in an on-state (a valve close state).

In the held assist pressure state, the hydro booster 336 and the wheel cylinders 420 to 426 are made in a closed state, the return passage 320 and the wheel cylinders 420 to 426 are made in a closed state, and the flow of the fluid from the accumulator 328 toward the wheel cylinders 420 to 426 is prevented. Accordingly, in the held assist pressure state, it is possible to hold the wheel cylinder pressure $P_{W/C}$ in all the wheels to a fixed value.

Fig. 18 shows a reduced assist pressure state realized during an execution of the BA control. The reduced assist pressure state is realized in the case that it is necessary to reduce the wheel cylinder pressure $P_{W/C}$ in each of the wheels during an execution of the BA control. The reduced assist pressure state can be realized, as shown in Fig. 18, by making the $SA_{-1}$ 386 and $SA_{-2}$ 388 in an on-state.

In the reduced assist pressure state, the accumulator 328 and the wheel cylinders 420 to 426 are made in a closed state, the return passage 320 and the wheel cylinders 420 to 426 are made in a closed state, and the hydro booster 336 and the wheel cylinders 420 to 426 are made in a conductive state. Accordingly, in the reduced assist pressure state, it is possible to reduce the wheel cylinder pressure $P_{W/C}$ in all the wheels by setting the master cylinder pressure $P_{M/C}$ to be a lower limit value.

Fig. 19 shows a change generated in the master cylinder pressure $P_{M/C}$ and the wheel cylinder pressure $P_{W/C}$ in the case that the emergency braking operation is performed by the driver of the vehicle. When the emergency braking operation is performed by the driver of the vehicle, as shown by a broken line in Fig. 19, a sudden pressure increase is generated in the master cylinder pressure $P_{M/C}$. The ECU 310 starts the BA control after detecting the emergency braking operation performed based on the output signal pMC of the hydraulic pressure sensor 444.

When the BA control is started in the braking force control apparatus, at first (I) a start pressure increasing mode is performed (a period T1 in Fig. 19). (I) the start pressure increasing mode can be realized by maintaining the braking force control apparatus in an increased assist pressure state shown in Fig. 16 for a predetermined pressure increasing time $T_{STA}$. As described above, according to the increased assist pressure state, it is possible to increase the wheel cylinder pressure $P_{W/C}$ in each of the wheels by the accumulator 328 as a hydraulic pressure source. Therefore, according to (I) the start pressure increasing mode, it is possible to quickly increase the wheel cylinder pressure $P_{W/C}$ in each of the wheels to a pressure over the master cylinder pressure $P_{M/C}$ after the BA control is started.

In the braking force control apparatus, when (I) the start pressure increasing mode is terminated, any one of (II) an assist pressure increasing mode, (III) an assist pressure reducing mode, (IV) an assist pressure holding mode, (V) an assist pressure gradual increasing mode and (VI) an assist pressure gradual reducing mode is performed in correspondence to the braking operation by the driver of the vehicle, thereafter.

In the case that the master cylinder pressure $P_{M/C}$ is suddenly increased during an execution of the BA control, it can be determined that the driver of the vehicle requires a greater brake force. According to the braking force control apparatus of the present embodiment, in the present case, (II) the assist pressure increasing mode is performed (a period T5 in Fig. 19). (II) the assist pressure increasing mode can be realized by making the braking force control apparatus in an increased assist pressure state in the same manner as that of (I) the start pressure increasing mode mentioned above. According to the increased assist pressure state, it is possible to rapidly increase the wheel cylinder pressure $P_{W/C}$ in each of the wheels in a range over the master cylinder pressure $P_{M/C}$. Therefore, according to (II) the assist pressure increasing mode, it is possible to accurately reflect an intention of the driver of the vehicle in the wheel cylinder pressure $P_{W/C}$ under the state that the master cylinder pressure $P_{M/C}$ is rapidly increased.

In the case that the master cylinder pressure $P_{M/C}$ is suddenly reduced during an execution of the BA control, it can be determined that the driver of the vehicle intends to quickly reduce the brake force. According to the present embodiment, in the present case, (III) the assist pressure reducing mode is performed (a period T7 in Fig. 19). (III) the assist pressure reducing mode can be realized by maintaining the reduced assist pressure state shown in Fig. 18. According to the reduced assist pressure state, as mentioned above, it is possible to quickly reduce the wheel cylinder pressure $P_{W/C}$ in each of the wheels to the master cylinder pressure $P_{M/C}$. Therefore, according to (III) the assist pressure reducing mode, it is possible to accurately reflect an intention of the driver of the vehicle in the wheel cylinder pressure $P_{W/C}$.

In the case that the master cylinder pressure $P_{M/C}$ is maintained at a substantially constant value during an execution of the BA control, it can be determined that the driver of the vehicle intends to hold the brake force. According to the present embodiment, in the present case, (IV) the assist pressure holding mode is performed (a period T6 in Fig. 19). (IV) the assist pressure holding mode can be realized by maintaining the held assist pressure state shown in Fig. 17. According to the held assist pressure state, as described above, it is possible to maintain the wheel cylinder pressure $P_{W/C}$ in each of the wheels at a constant value. Therefore, according to (IV) the assist pressure holding mode, it is possible to accurately reflect an intention of the driver of the vehicle in the wheel cylinder pressure $P_{W/C}$.

In the case that the master cylinder pressure $P_{M/C}$ is slowly increased during an execution of the BA control, it can be determined that the driver of the vehicle intends to slowly start the brake force. According to the present embodiment, in the present case, (V) the assist pressure gradual increasing mode (not shown) is performed. (V) the assist pressure gradual increasing mode can be realized by repeating the increased assist pressure state shown in Fig. 16 and the held assist pressure state shown in Fig. 17. According to (V) the assist pressure gradual increasing mode, it is possible to increase the wheel cylinder pressure $P_{W/C}$ in each of the wheels to the accumulator pressure PAC step by step. Therefore, according to (V) the assist pressure gradual increasing mode, it is possible to accurately reflect an intention of the driver of the vehicle in the wheel cylinder pressure $P_{W/C}$ under a condition that the master cylinder pressure $P_{M/C}$ is gradually increased.

In the case that the master cylinder pressure $P_{M/C}$ is slowly reduced during an execution of the BA control, it can be determined that the driver of the vehicle intends to slowly reduce the brake force. According to the present embodiment, in the present case, (VI) the assist pressure gradual reducing mode is performed (a period T3 in Fig 19). (VI) the assist pressure gradual reducing mode can be realized by repeating the reduced assist pressure state shown in Fig. 18 and the held assist pressure state shown in Fig. 17. According to (VI) the assist pressure gradual reducing mode, it is possible to reduce the wheel cylinder pressure $P_{W/C}$ in each of the wheels to the master cylinder pressure $P_{M/C}$ step by step. Therefore, according to (V) the assist pressure gradual reducing mode, it is possible to accurately reflect an intention of the driver of the vehicle in the wheel cylinder pressure $P_{W/C}$ under a condition that the master cylinder pressure $P_{M/C}$ is slowly reduced.

As described above, according to the braking force control apparatus, after the emergency braking operation is performed by the driver of the vehicle, it is possible to generate the wheel cylinder pressure $P_{W/C}$ greater than that at the normal time and in which the intention of the driver of the vehicle is accurately reflected.

In the system of the present embodiment, the ECU 310 detects the master cylinder pressure $P_{M/C}$ based on the output signal pMC of the hydraulic pressure sensor 444 and performs the BA control based on the detected value. The output signal pMC of the hydraulic pressure sensor 444 is bonded to "0V", for example, in the case that a short circuit is generated between the terminals of the hydraulic pressure sensor 444. Further, there is a case that it is bonded to a constant value in the case that a trouble on a hardware is generated in the hydraulic pressure sensor 444.

In the system of the present embodiment, in the case that the abnormality is generated in the hydraulic pressure sensor 444, it is not possible to properly execute the BA control. Accordingly, in the case that these failures are generated in the hydraulic pressure sensor 444, it is desirable that the BA control is not performed.

According to the present embodiment, the BA control is started in the case that the emergency braking operation is detected, that is, a sudden change of the master cylinder pressure $P_{M/C}$ is detected. Accordingly, the BA control is not started after an abnormality of bonding the output signal pMC to a constant value is generated in the hydraulic pressure sensor 444.

However, there is a case that the abnormality of the hydraulic pressure sensor 444 is generated after the BA control is started. In the present case, in order to prevent the brake force from being controlled to an improper value, it is preferable that the BA control is quickly terminated after the abnormality is generated in the hydraulic pressure sensor 444. The braking force control apparatus of the present embodiment is characterized by realizing the above function. Hereinafter, a characteristic portion of the braking force control apparatus according to the present embodiment will be described below.

In the system of the present embodiment, when the output signal pMC of the hydraulic pressure sensor 444 is maintained at a constant value, the assist pressure holding mode is performed. The output signal pMC of the hydraulic pressure sensor 444 is maintained at a constant value in both of the case that a driver of the vehicle maintains the pedal depressing force at a constant value and the case that the bonding abnormality is generated in the hydraulic pressure sensor 444. Accordingly, when the bonding abnormality is generated in the hydraulic pressure sensor 444 after the BA control is started, there occurs a matter that the assist pressure holding mode is maintained for a long time.

In the system of the present embodiment, in the case that the assist pressure holding mode is performed for a long time during an execution of the BA control, a forcible pressure increase of the master cylinder pressure $P_{M/C}$ is performed. Then, in the case that no change is generated in the output signal pMC according to the pressure increase, it is determined that a bonding abnormality is generated in the hydraulic pressure sensor 444, so that the BA control is quickly terminated. Contents of a processing performed by the ECU 310 so as to realize the above function will be described below with reference to Figs. 20 to 22.

Fig. 20 shows an embodiment of a flow chart of a routine performed by the ECU 310 so as to determine whether or not the BA control is required. The routine shown in Fig. 20 corresponds to a timed interruption routine operated at every predetermined times. When the routine shown in Fig. 20 is started, at first, a processing of step 450 is performed.

In step 450, it is determined whether or not an emergency braking operation is performed. Such a determination is performed, as mentioned above, based on whether or not a change speed $\Delta P_{M/C}$ of the master cylinder pressure $P_{M/C}$ is over a predetermined value. In step 450, when it is determined that the emergency braking operation is performed, a processing of step 452 is next performed. On the other hand, it is determined that the emergency braking operation is not performed, the current routine is terminated without executing the processing thereafter.

In step 452, a flag $F_{BA}$ is set. In the present case, the flag $F_{BA}$ corresponds to a flag showing that a start condition for the BA control (hereinafter, refer to a BA start condition) is established. When the processing of the present step 452 is performed, the above BA control is started according to the other routine performed by the ECU 310, thereafter. When the processing of the present step 452 is terminated, the current routine is terminated.

Figs. 21 and 22 show a flow chart of a routine performed by the ECU 310 so as to detect an abnormality in the hydraulic pressure sensor 444 during an execution of the BA control. The routine shown in Figs. 21 and 22 corresponds to a timed interruption routine operated at every predetermined times. When the routine shown in Figs. 21 and 22 is started, at first, a processing of step 460 is performed.

In step 460, it is determined whether or not the BA control is performed. As a result, when it is determined that the BA control is not performed, the current routine is terminated without executing the processing thereafter. On the other hand, when it is determined that the BA control is performed in step 460, a processing of step 462 is next performed.

In step 462, it is determined whether or not the assist pressure holding mode is performed. As a result, when it is determined that the assist pressure holding mode is not performed, it can be determined that a change is generated in the output signal pMC of the hydraulic pressure sensor 444, that is, the bonding abnormality is not generated in the hydraulic pressure sensor 444. In the present case, the current routine is terminated without executing the processing thereafter. On the other hand, if it is determined that the assist pressure holding mode is performed in step 462, a processing of step 464 is next performed.

In step 464, whether or not a first flag $F_{1st}$ is reset to "0". The first flag $F_{1st}$ corresponds to a flag structured such as to be set to "0" at every time when a change is recognized in the output signal pMC of the hydraulic pressure sensor 444 and to be set to "1" at every time of a processing cycle performed next to the processing cycle set to "0", as mentioned below. If it is determined that a formula $F_{1st} = 0$ is established in the present step 464, a processing of step 466 is performed. On the other hand, in the case that the formula $F_{1st} = 0$ is not established, step 466 is jumped and a processing of step 468 is next performed.

In step 466, the output signal pMC of the hydraulic pressure sensor 444 is substituted for variables $pMC_{max}$ and $pMC_{min}$. The variables $pMC_{max}$ and $pMC_{min}$ respectively correspond to variables for which a maximum value and a minimum value of the output signal pMC are substituted. According to the above processing, it is possible to substitute the output signal pMC of the hydraulic pressure sensor 444 as an initial value for the variables $pMC_{max}$ and $pMC_{min}$ at every time when the change is recognized in the output signal pMC of the hydraulic pressure sensor 444 and the first flag $F_{1st}$ is reset to 0.

In step 468, it is determined whether or not the value of the variable $pMC_{max}$ is smaller than the output signal pMC. As a result, if it is determined that a formula $pMC_{max} < pMC$ is established, a processing of step 470 is next performed. On the other hand, if it is determined that the formula $pMC_{max} < pMC$ is not established, a processing of step 472 is next performed.

In step 470, the output signal pMC is substituted for the variable $pMC_{max}$. According to the above processing, only in the case that the output signal pMC is changed to a value greater than the variable $pMC_{max}$, the variable $pMC_{max}$ is renewed to the greater value. When the processing of step 470 is terminated, a processing of step 476 shown in Fig. 22 is next performed.

In step 472, it is determined whether or not the value of the variable $pMC_{min}$ is larger than the output signal pMC. As a result, if it is determined that a formula $pMC_{min} > pMC$ is established, a processing of step 474 is next performed. On the other hand, if it is determined that the formula $pMC_{min} > pMC$ is not established, step 474 is jumped and a processing of step 476 shown in Fig. 22 is next performed.

In step 474, the output signal pMC is substituted for the variable $pMC_{min}$. According to the above processing, only in the case that the output signal pMC is changed to a value smaller than the variable $pMC_{max}$, the variable $pMC_{max}$ is renewed to the smaller value. When the processing of step 474 is terminated, a processing of step 476 shown in Fig. 22 is next performed. The processes of steps 468 to 474 are repeatedly performed, whereby the variables $pMC_{max}$ and $pMC_{min}$ are respectively renewed to the maximum value and the minimum value of the output signal pMC generated after the hydraulic pressure sensor 444 is recognized to be normal.

In step 476, it is determined whether or not a value ($pMC_{max} - pMC_{min}$) is smaller than a predetermined value $\alpha$. In the present case, the predetermined value $\alpha$ is a threshold for determining whether or not a change is generated in the output signal pMC of the hydraulic pressure sensor 444. In the present embodiment, taking into consideration an error generated at a time of quantizing the output signal pMC, the predetermined value $\alpha$ is set to be a value corresponding to two bits of the quantized output signal pMC.

In the above step 476, if it is determined that a formula $(pMC_{max} - pMC_{min}) < \alpha$ is not established, it can be determined that a change is generated in the output signal pMC, that is, a bonding abnormality is not generated in the hydraulic pressure sensor 444. In the present case, a processing of step 478 is next performed.

In step 478, the first flag $F_{1st}$ is reset to "0". According to the above processing, it is possible to reset the first flag $F_{1st}$ to "0" at every time when the hydraulic pressure sensor 444 is recognized to be normal. When the processing of the present step 478 is terminated, a processing of step 480 is next performed.

In step 480, a sensor check counter C is reset to "0". The sensor check counter C corresponds to a counter for counting a repeating number at which the output signal pMC of the hydraulic pressure sensor 444 is determined to be fixed to a fixed value. When the processing of the present step 480 is terminated, the current routine is terminated.

In the present routine, the condition of the above step 476, that is, the formula $(pMC_{max} - pMC_{min}) < \alpha$ is established (1) in the case that the output signal pMC of the hydraulic pressure sensor 444 is not changed for a long time and (2) in the case that a sufficient time has not passed after the initial value is substituted for variables $pMC_{max}$ and $pMC_{min}$ (step 466). If it is determined that the above condition is established, a processing of step 482 is performed after step 476.

In step 482, it is determined whether or not the fist flag $F_{1st}$ is reset at "0" . As a result, if it is determined that a formula $F_{1st} = 0$ is established, it can be determined that the current processing cycle is a first cycle after the change is recognized in the output signal pMC of the hydraulic pressure sensor 444. In the present case, a processing of step 484 is next performed.

In step 484, a timer variable $T_m$ is reset to "0". The timer variable $T_m$ corresponds to a timer for counting a time at which the condition of the above step 476 is continuously established. When the processing of the present step 484 is terminated, a processing of step 486 is next performed.

In step 486, the first flag $F_{1st}$ is set at "1". According to the above processing, it is possible to set "1" to the first flag $F_{1st}$ at every time of a processing cycle immediately after the hydraulic pressure sensor 444 is recognized to be normal. When the processing of the present step 486 is terminated, a processing of step 492 is next performed.

In the present routine, if it is determined that the formula $F_{1st} = 0$ is not established, it can be determined that the current processing cycle is not a first cycle after the fluid sensor 444 is recognized to be normal. In the present case, a processing of step 490 is performed after step 482.

In step 490, a processing of incrementing the timer variable $T_m$ is performed. According to the above processing, it is possible to measure a time at which the condition of the above step 476 is continuously established by using the timer variable $T_m$. When the processing of the present step 490 is terminated, a processing of step 492 is next performed.

In step 492, it is determined whether or not the timer variable $T_m$ is equal to or more than a predetermined value $T_h$. As a result, if it is determined that a formula $T_m \geqq T_h$ is established, a change is not generated in the output signal pMC of the hydraulic pressure sensor 444 for a time equal to or more than the predetermined time $T_h$. In the present case, a processing of step 494 is next performed. On the other hand, if it is determined that the formula $T_m \geqq T_h$ is not established in step 492, the current routine is terminated without any further processings.

In step 494, a processing for checking a state of the hydraulic pressure sensor 444, in particular, a processing for communicating the hydraulic pressure sensor 444 with the accumulator 328 for a predetermined short time is performed. The processing of the present step 494 is performed on the assumption that the assist pressure holding mode is performed as mentioned above (refer to step 462). During an execution of the assist pressure holding mode, the held assist pressure state as shown in Fig. 17 is realized. In the case that the held assist pressure state is realized, the accumulator 328 and the hydraulic pressure sensor 444 can be communicated with each other without changing the wheel cylinder pressure $P_{W/C}$ in each of the wheels by switching the $SA_{-3}$ 390 to a valve-released state (hereinafter, the present state is called as a sensor check state). In the present step 494, a processing for realizing the above sensor check state is performed.

When the above sensor check state is realized, an internal pressure of the second hydraulic pressure passage 394 with which the hydraulic pressure sensor 444 is communicated is increased by the accumulator 328 as a hydraulic pressure source. According to the present routine, in order to determine whether or not a bonding abnormality is generated in the hydraulic pressure sensor 444, it is sufficient that a change over the predetermined value $\alpha$ (refer to step 476) is generated in the output signal pMC of the hydraulic pressure sensor 444. On the other hand, when the sensor check state is formed, whereby the hydraulic pressure higher than the master cylinder pressure $P_{M/C}$ intended by the driver of the vehicle is generated within the second hydraulic pressure passage 384, an execution of a proper BA control is prevented. Accordingly, in the above step 496, a processing of making the braking force control apparatus in a sensor check state for a short time necessary and sufficient for the predetermined value $\alpha$ increasing the internal pressure of the second hydraulic pressure passage 384 is performed. When the processing of the present step 476 is terminated, a processing of step 496 is next performed.

In step 496, the sensor check counter C is incremented. When the processing of the present step 496 is terminated, a processing of step 498 is next performed. In step 498, the timer $T_m$ is reset to "0". When the processing of the present step 498 is terminated, a processing of step 500 is next performed.

As described above, the sensor check counter C is reset to "0" at every time when it is determined that a change is recognized in the output signal pMC of the hydraulic pressure sensor 444 (refer to step 476). Accordingly, the counted value of the sensor check counter C coincides with a repeating number at which it is determined that the condition of the above step 492 is established without no generation of a change in the output signal pMC of the hydraulic pressure sensor 444.

The condition of the above step 492 is established by maintaining the pedal pedaling force to a fixed value for the predetermined time $T_h$ by the driver of the vehicle even when the hydraulic pressure sensor 444 is normal. However, in the case that the driver of the vehicle maintains the pedal pedaling force to a fixed value, whereby the condition of the above step 492 is established, the output signal pMC of the hydraulic pressure sensor 444 is forcibly changed by next executing the processing of the above step 494 (the sensor check processing).

Accordingly, in the case that the hydraulic pressure sensor 444 is normal, the condition of the above step 492 is not repeatedly established without recognizing a change in the output signal pMC of the hydraulic pressure sensor 444 even when the pedal pedaling force is maintained to a fixed value for a long time. Accordingly, in the present routine, in the case that the hydraulic pressure sensor 444 is normal, the counted value of the sensor check counter C does not become "2".

On the other hand, in the case that a bonding abnormality is generated in the hydraulic pressure sensor 444, a change is not generated in the output signal pMC of the hydraulic pressure sensor 444 even when the processing of the above step 494 (the sensor check processing) is performed after the condition of step 492 ($T_m \geqq T_h$) is first established. In the present case, the next processing cycle is started in a state that "1" is set to the first flat $F_{1st}$, "1" is counted in the sensor check counter C and the timer $T_m$ is reset to "0".

In the case that the bonding abnormality is generated in the hydraulic pressure sensor 444 and "1" is set to the first flag $F_{1st}$, the processing of step 490 (the processing of incrementing the timer $T_m$) is performed at every time when the present routine is started. Under the present condition, thereafter, the predetermined time $T_h$ has passed, whereby the condition of step 492 is again established. Accordingly, in the case that the bonding abnormality is generated in the hydraulic pressure sensor 444, a value equal to or more than "2" is counted in the sensor check counter C.

As described above, according to the present routine, the sensor check counter C is counted a value equal to or more than "2" only in the case that the bonding abnormality is generated in the hydraulic pressure sensor 444. Accordingly, in the system of the present embodiment, it is possible to accurately determine whether or not the bonding abnormality is generated in the hydraulic pressure sensor 444 based on whether or not a value equal to or more than "2" is counted in the sensor check counter C.

Here, according to the above processing, in the case that the driver of the vehicle maintains the pedal pedaling force to a fixed value, the sensor check processing (the processing of step 492) is performed at every time when the predetermined time $T_h$ has passed. Accordingly, in the braking force control apparatus of the present embodiment, in the case that the pedal pedaling force is maintained to a fixed value a pulsation of the hydraulic pressure is generated in the second hydraulic pressure passage 384 at every time of the predetermined time $T_h$. Therefore, in order to increase a controllability of the BA control, it is preferable to set the predetermined time $T_h$ to a long time and restrict a frequency of the pulsation.

On the other hand, when the predetermined time Th is set to a long time, a comparatively long time is required before the value equal to or more than "2" is counted in the sensor check counter C after the bonding abnormality is generated in the hydraulic pressure sensor 444. Accordingly, in order to quickly detect the bonding abnormality of the hydraulic pressure sensor 444, it is desirable that the predetermined time $T_h$ is a short time. In the present embodiment, taking two requirements into consideration, the predetermined time $T_h$ is set.

In step 500, it is determined whether or not the counted number of the sensor check counter C is over a predetermined value K. In the present embodiment, in order to avoid an erroneous detection of the bonding abnormality of the hydraulic pressure sensor 444, the K is set to "2". In the present case, the value of K is not limited to 2, and may be set to "1" or "a value equal to or more than 3". As a result of the above determination, if it is determined that a formula $C > K$ is not established, it is determined that an abnormality of the hydraulic pressure sensor 444 is no more determined. In the present case, thereafter, the current routine is quickly terminated. On the other hand, if it is determined that the formula $C > K$ is established, it is determined that the bonding abnormality is generated in the hydraulic pressure sensor 444. In the present case, a processing of step 502 is next performed.

In step 502, a processing for forcibly terminating the BA control, that is, a processing for making the braking force control apparatus in the normal brake state is performed. When the processing of the present step 502 is terminated, the current routine is terminated.

As described above, according to the braking force control apparatus of the present embodiment, it is possible to accurately determine whether or not the bonding abnormality is generated in the hydraulic pressure sensor 444 during an execution of the BA control. Then, in the case that the bonding abnormality of the hydraulic pressure sensor 444 is recognized, it is possible to quickly finish the BA control thereafter. Therefore, according to the braking force control apparatus of the present embodiment, it is possible to prevent the BA control from being improperly continued based on the erroneous output signal pMC after the bonding abnormality is generated in the hydraulic pressure sensor 444.

Further, in the above embodiment, the hydraulic pressure sensor 444 corresponds to "brake operating force detecting means" described in claim 1, and the ECU 310 performs the processing in steps 460 to 500, whereby "abnormality detecting means" described in claim 1 can be realized and the ECU 310 performs the processing in step 502, whereby "hydraulic control inhibiting means" described in claim 1 can be realized, respectively.

Still further, in the above embodiment, the ECU 310 performs the processing in steps 460 and 462 so as to recognize that the braking operation is performed, and the ECU 310 performs the processing in steps 476 and 492 so as to recognize that no change is generated in the output signal pMC of the hydraulic pressure sensor 444, whereby "first abnormality recognizing means" described in claim 6 can be realized.

Furthermore, in the above embodiment, the ECU 310 performs the processing in step 494, whereby "brake operating force changing means" described in claim 7 can be realized, and the ECU 310 performs the processing in steps 476 to 492 and 496 to 500, whereby "second abnormality recognizing means" described in claim 7 can be realized.

Next, an eighth embodiment according to the present invention will be described below with reference to Figs. 23 to 26. Fig. 23 shows a system structure view of a braking force control apparatus of a pump-up type (hereinafter, simply refer to a braking force control apparatus) corresponding to the eighth embodiment according to the present invention. Here, in Fig. 23, the same reference numerals are attached to the same elements as those shown in Fig. 14, and an explanation thereof will be omitted or simply given.

The braking force control apparatus according to the present embodiment corresponds to an apparatus suitable for a braking force control apparatus for a front engine and rear drive type vehicle (FR vehicle). The braking force control apparatus of the present embodiment is controlled by the ECU 310. The ECU 310 controls a motion of the braking force control apparatus by executing a control routine shown in Figs. 20 to 22 in the same manner as the case of the above seventh embodiment.

The braking force control apparatus is provided with a brake pedal 312. A brake switch 314 is arranged near the brake pedal 312. The ECU 310 determines whether or not the brake pedal 312 is stepped down based on the output signal of the brake switch 314.

The brake pedal 312 is connected to a vacuum booster 600. The vacuum booster 600 generates an assist force Fa having a predetermined times of ratio with respect to the pedal depressing force F in the case that the brake pedal 312 is stepped down. A master cylinder 602 is fixed to the vacuum booster 600. The master cylinder 602 corresponds to a tandem center valve type master cylinder, and is provided with a first hydraulic pressure chamber 604 and a second hydraulic pressure chamber 606 therewithin. A master cylinder pressure $P_{M/C}$ corresponding to a resultant force of the pedal depressing force F and the assist force Fa is generated in the first hydraulic pressure chamber 604 and the second hydraulic pressure chamber 606.

A reservoir tank 608 is arranged in an upper portion of the master cylinder 602. A front reservoir passage 610 and a rear reservoir passage 612 are communicated with the reservoir tank 608. A front reservoir cut solenoid 614 (hereinafter, refer to SRCF 614) is communicated with the front reservoir passage 610. In the same manner, a rear reservoir cut solenoid 616 (hereinafter, refer to SRCR 616) is communicated with the rear reservoir passage 612.

A front pump passage 618 is further communicated with the SRCF 614. In the same manner, a rear pump passage 620 is communicated with the SRCR 616. The SRCF 614 corresponds to a two-positional solenoid valve structured such as to shut the front reservoir passage 610 and the front pump passage 618 by being set to an off-state and conduct them by being set to an on-state. Further, the SRCR 616 corresponds to a two-positional solenoid valve structured such as to shut the rear reservoir passage 612 and the rear pump passage 620 by being set to an off-state and conduct them by being set to an on-state.

A first hydraulic pressure passage 622 and a second hydraulic pressure passage 624 are respectively communicated with the first hydraulic pressure chamber 604 and the second hydraulic pressure chamber 606 of the master cylinder 602. A front right master cut solenoid 626 (hereinafter, refer to SMFR 626) and a front left master cut solenoid 628 (hereinafter, refer to SMFL 628) are communicated with the first hydraulic pressure passage 622. On the other hand, a rear master cut solenoid 630 (hereinafter, refer to SMR 630) is communicated with the second hydraulic pressure passage 624.

A hydraulic pressure passage 632 provided in correspondence to the front right wheel FR is communicated with the SMFR 626. In the same manner, a hydraulic pressure passage 634 provided in correspondence to the front left wheel FL is communicated with the SMFL 628. Further, a hydraulic pressure passage 636 provided in correspondence to the left and rear right wheels RL and RR is communicated with the SMR 630.

Constant pressure releasing valves 638, 640 and 642 are respectively provided within the SMFR 626 the SMFL 628 and the SMR 630. The SMFR corresponds to a two-positional solenoid valve structured such as to make the first hydraulic pressure passage 622 and the hydraulic pressure passage 632 in a conductive state by being set to an off-state and communicate the first hydraulic pressure passage 622 with the hydraulic pressure passage 632 through the constant pressure releasing valve 638 by being set to an on-state. Further, the SMFL corresponds to a two-positional solenoid valve structured such as to make the first hydraulic pressure passage 622 and the hydraulic pressure passage 634 in a conductive state by being set to an off-state and communicate the first hydraulic pressure passage 622 with the hydraulic pressure passage 634 through the constant pressure releasing valve 640 by being set to an on-state. In the same manner, the SMR corresponds to a two-positional solenoid valve structured such as to make the second hydraulic pressure passage 624 and the hydraulic pressure passage 636 in a conductive state by being set to an off-state and communicate the second hydraulic pressure passage 424 with the hydraulic pressure passage 636 through the constant pressure releasing valve 642 by being set to an on-state.

A check valve 644 which enables only a flow of a fluid toward the hydraulic pressure passage 632 from the first hydraulic pressure passage 622 is arranged between the first hydraulic pressure passage 622 and the hydraulic pressure passage 632. In the same manner, a check valve 646 which enables only a flow of a fluid toward the hydraulic pressure passage 634 from the first hydraulic pressure passage 622 and a check valve 648 which enables only a flow of a fluid toward the hydraulic pressure passage 636 from the second hydraulic pressure passage 624 are respectively arranged between the first hydraulic pressure passage 622 and the hydraulic pressure passage 634 and between the second hydraulic pressure passage 624 and the hydraulic pressure passage 636.

The holding solenoids S**H, the pressure reducing solenoids S**R, the wheel cylinders 420 to 426 and the check valves 428 to 434 are communicated with the hydraulic pressure passages 632 and 634 provided in correspondence to the left and front right wheels and the hydraulic pressure passage 636 provided in correspondence to the left and rear right wheels, in the same manner as that of the seventh embodiment. Further, a front pressure decreasing passage 650 is communicated with the holding solenoids SFRR 412 and SFLR 414 in the left and front right wheels. Further, a rear pressure decreasing passage 652 is communicated with the holding solenoids SRRR 416 and SRLR 418 in the left and rear right wheels.

A front reservoir 654 and a rear reservoir 655 are respectively communicated with the front pressure decreasing passage 650 and the rear pressure decreasing passage 652. The front reservoir 654 and the rear reservoir 655 are respectively communicated with a suction side of the front pump 660 and a suction side of the rear pump 662 through the check valves 656 and 658. A discharge side of the front pump 660 and a discharge side of the rear pump 662 are communicated with dampers 664 and 666 for absorbing a pulsation of the discharged pressure. The damper 664 is communicated with a front right pump passage 668 provided in correspondence to the front right wheel FR and a front left pump passage 670 provided in correspondence to the front left wheel FL. On the other hand, the damper 666 is communicated with the hydraulic pressure passage 636.

The front right pump passage 668 is communicated with the hydraulic pressure passage 632 through a front right pump solenoid 672 (hereinafter, refer to SPFL 672). Further, the front left pump 670 is communicated with the hydraulic pressure passage 634 through a front left pump solenoid 674 (hereinafter, refer to SPFR 674). The SPFL 672 corresponds to a two-positional solenoid valve structured such as to make the front right pump passage 668 and the hydraulic pressure passage 632 in a conductive state by being set to an off-state and make them in a closed state by being set to an on-state. In the same manner, the SPFR 674 corresponds to a two-positional solenoid valve structured such as to make the front left pump passage 670 and the hydraulic pressure passage 634 in a conductive state by being set to an off-state and make them in a closed state by being set to an on-state.

A constant pressure releasing valve 676 which enables only a flow of a fluid toward the front right pump passage 668 from the hydraulic pressure passage 632 is arranged between the hydraulic pressure passage 632 and the front right pump passage 668. In the same manner, a constant pressure releasing valve 678 which enables only a flow of a fluid toward the front left pump passage 670 from the hydraulic pressure passage 634 is arranged between the hydraulic pressure passage 634 and the front left pump passage 670.

The wheel speed sensors 436, 438, 440 and 442 are arranged near the respective wheels. The ECU 310 detects a rotational speed Vw of each of the wheels based on the output signal of each of the wheel speed sensors 436 to 442. Further, the hydraulic pressure sensor 444 is arranged in the second hydraulic pressure passage 624 communicated with the master cylinder 602. The ECU 310 detects the master cylinder pressure $P_{M/C}$ based on the output signal of the hydraulic pressure sensor 444

Next, an operation of the braking force control apparatus according to the present embodiment will be described below. The braking force control apparatus according to the present embodiment realizes (1) a normal brake function, (2) an ABS function and (3) a BA function by switching a state of various kinds of electromagnetic valves arranged within a hydraulic circuit.

(1) the normal brake function can be realized, as shown in Fig. 23, by making all the electromagnetic valves provided in the braking force control apparatus in an off-state. Hereinafter, the state shown in Fig. 23 is called as a normal brake state. Further, a control for realizing the normal brake function in the braking force control apparatus is called as a normal brake control.

In the normal brake state shown in Fig. 23, the wheel cylinders 420 and 422 of the left and front right wheels FL and FR are both communicated with the first hydraulic pressure chamber 604 of the master cylinder 602 through the first hydraulic pressure passage 622. Further, the wheel cylinders 424 and 426 of the left and rear right wheels RL and RR are communicated with the second hydraulic pressure chamber 606 of the master cylinder 602 through the second hydraulic pressure passage 624. In the present case, the wheel cylinder pressure $P_{W/C}$ of the wheel cylinders 420 to 426 is always controlled to be equal to the master cylinder pressure $P_{M/C}$. Accordingly, in the state shown in Fig. 23, the normal brake function can be realized.

(2) the ABS function can be realized by making the front pump 660 and the rear pump 662 in an on-state and suitably driving the holding solenoids $**H and the pressure reducing solenoids S**R in response to a requirement of the ABS, in a state shown in Fig 23. Hereinafter, a control for realizing the ABS function in the braking force control apparatus is called as an ABS control.

The ECU 310 starts the ABS control in the case that the vehicle is in a braking state and an excess slip ratio is detected in any one of the wheels. The ABS control is started under a condition that the brake pedal 312 is stepped down, that is, the master cylinder 602 generates a high master cylinder pressure $P_{M/C}$.

During an execution of the ABS control, the master cylinder pressure $P_{M/C}$ is introduced to the hydraulic pressure passages 632 and 634 respectively provided in correspondence to the left and front right wheels and the hydraulic pressure passage 636 provided in correspondence to the left and rear right wheels through the first hydraulic pressure passage 622 and the second hydraulic pressure passage 624. Accordingly, under the above circumstance, when the holding solenoids S**H is made in a valve-released state and the pressure reducing solenoids S**R is made in a valve-closed state, the wheel cylinder pressure $P_{W/C}$ of each the wheels can be increased. Hereinafter, the state is called as (i) a pressure increasing mode.

Further, the wheel cylinder pressure $P_{W/C}$ of each of the wheels can be held by making both of the holding solenoids S**H and the pressure reducing solenoids S**R in a valve-closed state during the ABS control. Hereinafter, the state is called as (ii) a hold mode. Further, the wheel cylinder pressure $P_{W/C}$ of each of the wheels can be reduced by making the holding solenoids S**H in a valve-closed state during the ABS control and making the pressure reducing solenoids S**R in a valve-released state. Hereinafter, the state is called as (iii) a pressuer reducing mode.

The ECU 310 controls the holding solenoids S**H and the pressure reducing solenoids S**R according to a slip state of each of the wheels during the ABS control so that (i) the pressure increasing mode, (ii) the holding mode and (iii) the pressuer reducing mode can be suitably realized at each of the wheels. When the holding solenoids S**H and the pressure reducing solenoids S**R are controlled in the above manner, the wheel cylinder pressures $P_{W/C}$ of all the wheels are controlled to a suitable pressure which does not generate an excess slip ratio in the corresponding wheels. As described above, according to the above control, the ABS function can be realized in the braking force control apparatus.

Figs. 24 to 26 show a state of the braking force control apparatus for realizing (3) the BA function. The ECU 310 realizes the BA function by suitably realizing a state shown in Figs. 24 to 26 after the braking operation for requiring a quick start of the brake force, that is, an emergency braking operation is performed by a driver of the vehicle. Hereinafter, a control for realizing the BA function in the braking force control apparatus is called as a BA control.

Fig. 24 shows an increased assist pressure state realized during an execution of the BA control. The increased assist pressure state can be realized in the case that it is required to increase the wheel cylinder pressure $P_{W/C}$ in each of the wheels during an execution of the BA control, that is, an execution of (I) the start pressure increasing mode, (II) the assist pressure increasing mode and (V) the assist pressure gradual increasing mode is required during the BA control.

In the system of the present embodiment, the increased assist pressure state during the BA control can be realized, as shown in Fig. 24, by making the reservoir cut solenoids SRCF 614 and SRCR 616 and the master cut solenoids SMFR 626, SMFL 628 and SMR 630 in an on-state and making the front pump 660 and the rear pump 662 in an on-state.

When the increased assist pressure state shown in Fig. 24 is realized, the brake fluid stored in the reservoir tank 608 is pumped up to the front pump 660 and the rear pump 662 and supplied to the hydraulic pressure passages 632, 634 and 636. In the increased assist pressure state, the flow of the brake fluid from the hydraulic pressure passages 632, 634 and 636 to the master cylinder 602 is restricted by the SMFR 326, SMFL 328 and SMR 330 until the internal pressure of the hydraulic pressure passages 632, 634 and 636 is over the releasing valve pressure of the constant pressure releasing valves 638, 640 and 642 to a pressure higher than the master cylinder pressure $P_{M/C}$.

Accordingly, when the increased assist pressure state shown in Fig. 24 is realized, a hydraulic pressure higher than the master cylinder pressure $P_{M/C}$ is generated in the hydraulic pressure passages 632, 634 and 636. In the increased assist pressure state, the wheel cylinders 420 to 426 and the hydraulic pressure passages 332, 334 and 336 corresponding thereto are maintained in a communication state. Accordingly, when the increased assist pressure state is realized, the wheel cylinder pressure $P_{W/C}$ in all the wheels is quickly increased to a pressure over the master cylinder pressure $P_{M/C}$ by the front pump 660 and the rear pump 662 as a hydraulic pressure source, thereafter.

Here, in the increased assist pressure state shown in Fig. 24, the hydraulic pressure passages 634, 632 and 636 are communicated with the master cylinder through the check valves 644,646 and 648, respectively. Accordingly, in the case that the master cylinder pressure $P_{M/C}$ is greater than the wheel cylinder pressure $P_{W/C}$ in each of the wheels, the wheel cylinder pressure $P_{W/C}$ can be increased by the master cylinder 602 as a hydraulic pressure source even in the increased assist pressure state.

Fig. 25 shows a held assist pressure state realized during an execution of the BA control. The held assist pressure state is realized in the case that it is necessary to hold the wheel cylinder pressure $P_{W/C}$ in each of the wheels during an execution of the BA control, that is, in the case that (IV) the assist pressure holding mode is required during the BA control. The held assist pressure state can be realized, as shown in Fig. 25, by making the master cut solenoids SMFR 626, SMFL 628 and SMR 630 in an on-state.

In the held assist pressure state as shown in Fig. 25, the front pump 660 and the reservoir tank 608, and the rear pump 662 and the reservoir tank 608 are respectively made in a closed state by the SRCF 614 and 616. Accordingly, in the held assist pressure state, the fluid is not discharged to the hydraulic pressure passages 632, 634 and 636 from the front pump 660 and the rear pump 662. Further, in the held assist pressure state, the hydraulic pressure passages 632, 634 and 636 are substantially separated from the master cylinder 602 by the SMFR 626, SMFL 628 and SMR 630. Accordingly, it is possible to hold the wheel cylinder pressure $P_{W/C}$ in all the wheels to a fixed value.

Fig. 26 shows a reduced assist pressure state realized during an execution of the BA control. The reduced assist pressure state is realized in the case that it is necessary to reduce the wheel cylinder pressure $P_{W/C}$ in each of the wheels during an execution of the BA control, that is, in the case that an execution of (III) the assist pressure reducing mode and (VI) the assist pressure gradual reducing mode is required during the BA control. The reduced assist pressure state can be realized, as shown in Fig. 26, by making all the solenoids in an off-state.

In the reduced assist pressure state as shown in Fig. 26, the front pump 660 and the rear pump 662 are separated from the reservoir tank 608. Accordingly, the fluid is not discharged to the hydraulic pressure passages 632, 634 and 636 from the front pump 662 and the rear pump 662. Further, in the reduced assist pressure state, the wheel cylinders 420 to 426 in the respective wheels and the master cylinder 602 are in a communication state. Accordingly, when the reduced assist pressure state is realized, it is possible to reduce the wheel cylinder pressure $P_{W/C}$ in all the wheels by setting the master cylinder pressure $P_{M/C}$ to be a lower limit value.

According to the present embodiment, the ECU 310 realizes the BA function by combining the increased assist pressure state, the held assist pressure state and the reduced assist pressure state shown in Figs. 24 to 26 in the same manner as that of the above seventh embodiment, in the case that the emergency braking operation is performed by the driver of the vehicle. Accordingly, in the braking force control apparatus of the present embodiment, in the same manner as the case of the above seventh embodiment, when the emergency braking operation is performed by the driver of the vehicle, it is possible to generate the wheel cylinder pressure $P_{W/C}$ which is greater than the normal one and is accurately depended on the intention of the driver of the vehicle.

As described above, in the system of the present embodiment, the ECU 310 determines whether or not the BA control is required by executing the routine shown in Fig. 20 in the same manner as the case of the seventh embodiment. Then, if it is determined that the BA control is required, the BA function is performed by at first realizing (I) the start pressure increasing mode, and next, suitably realizing (II) the assist pressure increasing mode, (III) the assist pressure reducing mode, (IV) the assist pressure holding mode, (V) the assist pressure gradual increasing mode and (VI) the assist pressure gradual reducing mode by turns based on the output signal pMC of the hydraulic pressure sensor 444.

Further, the ECU 310 determines whether or not the bonding abnormality is generated in the hydraulic pressure sensor 444 by executing the routine shown in Figs. 21 and 22 in the same manner as the case of the seventh embodiment, and quickly finishes the BA control in the case that the bonding abnormality is recognized.

However, in the present embodiment, the sensor check processing shown in step 494 in Fig. 22 is realized by making the rear master cut solenoid SMR 630 in a valve-released state (an off-state), making the rear reservoir cut solenoid SRCR 616 in a valve-released state (an on-state) and making the holding solenoids SRRH 408 and SRLH 410 in a valve-closed state (an on-state) so as to supply the discharge pressure of the rear pump 662 to the second hydraulic pressure passage 624, under the circumstance that the braking force control apparatus is made in the held assist pressure state shown in Fig. 25.

According to the above processing, in the same manner as the case of the seventh embodiment, it is possible to accurately determine whether or not the bonding abnormality of the hydraulic pressure sensor 444 exists during an execution of the BA control. Then, in the case that the bonding abnormality of the hydraulic pressure sensor 444 is recognized, it is possible to quickly finish the BA control. Accordingly, in the braking force control apparatus of the present embodiment, in the same manner as the case of the seventh embodiment, it is possible to prevent the BA control from being improperly continued based on the erroneous output signal pMC in the case that the bonding abnormality is generated in the hydraulic pressure sensor 444.

Next, a ninth embodiment according to the present invention will be described below with reference to Figs. 27 to 30. Fig. 27 shows a system structure view of a braking force control apparatus of a pump-up type (hereinafter, simply refer to a braking force control apparatus) corresponding to the ninth embodiment according to the present invention. Here, in Fig. 27, the same reference numerals are attached to the same elements as those shown in Fig. 23, and an explanation thereof will be omitted or simply given.

The braking force control apparatus according to the present embodiment corresponds to an apparatus suitable for a braking force control apparatus for a front engine and front drive type vehicle (FF vehicle). The braking force control apparatus of the present embodiment is controlled by the ECU 310. The ECU 310 controls a motion of the braking force control apparatus by executing a control routine shown in Figs. 20 to 22 in the same manner as the case of the above seventh and eighth embodiments.

The braking force control apparatus is provided with a brake pedal 312. A brake switch 314 is arranged near the brake pedal 312. The ECU 310 determines whether or not the brake pedal 312 is stepped down based on the output signal of the brake switch 314.

The brake pedal 312 is connected to a vacuum booster 600. Further, the vacuum booster 600 is fixed to the master cylinder 602. A first hydraulic pressure chamber 604 and a second hydraulic pressure chamber 606 are formed within the master cylinder 602. A master cylinder pressure $P_{M/C}$ corresponding to a resultant force of the pedal depressing force F and the assist force Fa generated by the vacuum booster 600 is generated within the first hydraulic pressure chamber 604 and the second hydraulic pressure chamber 606.

A reservoir tank 608 is arranged in an upper portion of the master cylinder 600. A first reservoir passage 700 and a second reservoir passage 702 are communicated with the reservoir tank 608. A first reservoir cut solenoid 704 (hereinafter, refer to $SRC_{-1}$ 704) is communicated with the first reservoir passage 700. In the same manner, a second reservoir cut solenoid 706 (hereinafter, refer to $SRC_{-2}$ 706) is communicated with the second reservoir passage 702.

A first pump passage 708 is further communicated with the $SRC_{-1}$ 704. In the same manner, a second pump passage 710 is communicated with the $SRC_{-2}$ 706. The $SRC_{-1}$ 704 corresponds to a two-positional solenoid valve structured such as to shut the first reservoir passage 700 and the first pump passage 708 by being set to an off-state and conduct them by being set to an on-state. Further, the $SRC_{-2}$ 706 corresponds to a two-positional solenoid valve structured such as to shut the second reservoir passage 702 and the second pump passage 710 by being set to an off-state and conduct them by being set to an on-state.

A first hydraulic pressure passage 622 and a second hydraulic pressure passage 624 are respectively communicated with the first hydraulic pressure chamber 604 and the second hydraulic pressure chamber 606 of the master cylinder 602. A first master cut solenoid 712 (hereinafter, refer to $SMC_{-1}$ 712) is communicated with the first hydraulic pressure passage 622. On the other hand, a second master cut solenoid 714 (hereinafter, refer to $SMC_{-2}$ 714) is communicated with the second hydraulic pressure passage 624.

A first pump pressure passage 716 and a hydraulic pressure passage 718 provided in correspondence to the rear left wheel RL are communicated with the $SMC_{-1}$ 712. A first pump solenoid 720 (hereinafter, refer to $SMV_{-1}$ 720) is communicated with the first pump pressure passage 716. A hydraulic pressure passage 722 provided in correspondence to the front right wheel FR is communicated with the $SMV_{-1}$ 720. A constant pressure releasing valve 724 is provided within the $SMV_{-1}$ 720. The $SMV_{-1}$ 720 corresponds to a two-positional solenoid valve structured such as to make the first pump pressure passage 716 and the hydraulic pressure passage 722 in a conductive state by being set to an off-state and communicate them through the constant pressure releasing valve 724 by being set to an on-state. A check valve 726 which enables only a flow of a fluid toward the hydraulic pressure passage 722 from the first pump pressure passage 716 is arranged between the first pump pressure passage 716 and the hydraulic pressure passage 722.

A second pump pressure passage 728 and a hydraulic pressure passage 730 provided in correspondence to the rear right wheel RR are communicated with the $SMC_{-2}$ 714. A second pump solenoid 732 (hereinafter, refer to $SMV_{-2}$ 732) is communicated with the second pump pressure passage 728. A hydraulic pressure passage 734 provided in correspondence to the front left wheel FL is further communicated with the $SMV_{-2}$ 732. A constant pressure releasing valve 736 is provided within the $SMV_{-2}$ 732. The $SMV_{-2}$ 732 corresponds to a two-positional solenoid valve structured such as to make the second pump pressure passage 728 and the hydraulic pressure passage 734 in a conductive state by being set to an off-state and communicate them through the constant pressure releasing valve 736 by being set to an on-state. A check valve 738 which enables only a flow of a fluid toward the hydraulic pressure passage 736 from the second pump pressure passage 728 is arranged between the first pump passage 728 and the hydraulic pressure passage 734.

A constant pressure releasing valves 740 and 742 are provided within the $SMC_{-1}$ 712 and $SMC_{-2}$ 714. The $SMC_{-1}$ 712 corresponds to a two-positional solenoid valve structured such as to make the first hydraulic pressure passage 622 and the hydraulic pressure passage 718 (and the first pump pressure passage 716) in a conductive state by being set to an off-state and communicate them through the constant pressure releasing valve 740 by being set to an on-state. Further, the $SMC_{-2}$ 714 corresponds to a two-positional solenoid valve structured such as to make the second hydraulic pressure passage 624 and the hydraulic pressure passage 730 (and the second pump pressure passage 728) in a conductive state by being set to an off-state and communicate them through the constant pressure releasing valve 642 by being set to an on-state

A check valve 744 which enables only a flow of a fluid toward the hydraulic pressure passage 718 from the first hydraulic pressure passage 622 is arranged between the first hydraulic pressure passage 622 and the hydraulic pressure passage 718. In the same manner, a check valve 746 which enables only a flow of a fluid toward the hydraulic pressure passage 730 from the second hydraulic pressure passage 624 is arranged between the second hydraulic pressure passage 624 and the hydraulic pressure passage 730.

The holding solenoids S**H, the pressure reducing solenoids S**R, the wheel cylinders 420 to 426 and the check valves 428 to 434 are communicated with four hydraulic pressure passages 714, 722, 728 and 734 provided in correspondence to the left and front right wheels and the left and rear right wheels, in the same manner as that of the seventh embodiment. Further, a first pressure decreasing passage 748 is communicated with the pressure reducing solenoids SFRR 412 and SRLR 418 in the front right wheel FR and the rear left wheel RL. Further, a second pressure decreasing passage 750 is communicated with the pressure reducing solenoids SFLR 414 and SRRR 416 in the front left wheel FL and the rear right wheel RR.

A first reservoir 752 and a second reservoir 754 are respectively communicated with the first pressure decreasing passage 748 and the second pressure decreasing passage 750. Further, the first reservoir 752 and the second reservoir 754 are respectively communicated with a suction side of the first pump 760 and a suction side of the second pump 762 through the check valves 756 and 758. A discharge side of the first pump 760 and a discharge side of the second pump 762 are communicated with dampers 764 and 766 for absorbing a pulsation of the discharged pressure. The dampers 764 and 766 are respectively communicated with the hydraulic pressure passages 722 and 734.

The wheel speed sensors 436, 438, 440 and 442 are arranged near the respective wheels. The ECU 310 detects a rotational speed Vw of each of the wheels based on the output signal of each of the wheel speed sensors 436 to 442. Further, the hydraulic pressure sensor 444 is arranged in the second hydraulic pressure passage 324 communicated with the master cylinder 302. The ECU 310 detects the master cylinder pressure $P_{M/C}$ based on the output signal of the hydraulic pressure sensor 444

Next, an operation of the braking force control apparatus according to the present embodiment will be described below. The braking force control apparatus according to the present embodiment realizes (1) a normal brake function, (2) an ABS function and (3) a BA function by switching a state of various kinds of electromagnetic valves arranged within a hydraulic circuit.

(1) the normal brake function can be realized, as shown in Fig. 27, by making all the electromagnetic valves provided in the braking force control apparatus in an off-state. Hereinafter, the state shown in Fig. 27 is called as a normal brake state. Further, a control for realizing the normal brake function in the braking force control apparatus is called as a normal brake control.

In the normal brake state shown in Fig. 27, the wheel cylinder 420 of the front right wheels FR and the wheel cylinder 426 of the rear left wheel RL are both communicated with the first hydraulic pressure chamber 604 of the master cylinder 602 through the first hydraulic pressure passage 622. Further, the wheel cylinders 422 of the front left wheel FL and the wheel cylinder 424 of the rear right wheel RR are both communicated with the second hydraulic pressure chamber 606 of the master cylinder 602 through the second hydraulic pressure passage 624. In the present case, the wheel cylinder pressure $P_{W/C}$ of the wheel cylinders 420 to 426 is always controlled to be equal to the master cylinder pressure $P_{M/C}$. Accordingly, in the state shown in Fig. 27, the normal brake function can be realized.

(2) the ABS function can be realized by making the first pump 760 and the second pump 762 in an on-state and suitably driving the holding solenoids S**H and the pressure reducing solenoids S**R in response to a requirement of the ABS, in a state shown in Fig 27. Hereinafter, a control for realizing the ABS function in the braking force control apparatus is called as an ABS control.

During an execution of the ABS control, the high master cylinder pressure $P_{M/C}$ is introduced to all of four hydraulic pressure passages 718, 722, 730 and 734 provided in correspondence to the left and front right wheels and the left and rear right wheels. Accordingly, under the above circumstance, when the holding solenoids S**H is made in a valve-released state and the pressure reducing solenoids S**R is made in a valve-closed state, the wheel cylinder pressure $P_{W/C}$ of each the wheels can be increased. Hereinafter, the state is called as (i) a pressure increasing mode.

Further, the wheel cylinder pressure $P_{W/C}$ of each of the wheels can be held by making both of the holding solenoids S**H and the pressure reducing solenoids S**R in a valve-closed state during the ABS control. Hereinafter, the state is called as (ii) a hold mode. Further, the wheel cylinder pressure $P_{W/C}$ of each of the wheels can be reduced by making the holding solenoids S**H in a valve-closed state during the ABS control and making the pressure reducing solenoids S**R in a valve-released state. Hereinafter, the state is called as (iii) a pressuer reducing mode.

The ECU 310 controls the holding solenoids S**H and the pressure reducing solenoids S**R according to a slip state of each of the wheels during an execution of the ABS control so that (i) the pressure increasing mode, (ii) the holding mode and (iii) the pressuer reducing mode can be suitably realized at each of the wheels. When the holding solenoids S**H and the pressure reducing solenoids S**R are controlled in the above manner, the wheel cylinder pressures $P_{W/C}$ of all the wheels are controlled to a suitable pressure which does not generate an excess slip ratio in the corresponding wheels. As described above, according to the above control, the ABS function can be realized in the braking force control apparatus.

Figs. 28 to 30 show a state of the braking force control apparatus for realizing (3) the BA function. The ECU 310 realizes the BA function by suitably realizing a state shown in Figs. 28 to 30 after the braking operation for requiring a quick start of the brake force, that is, an emergency braking operation is performed by a driver of the vehicle. Hereinafter, a control for realizing the BA function in the braking force control apparatus is called as a BA control.

Fig. 28 shows an increased assist pressure state realized during an execution of the BA control. The increased assist pressure state can be realized in the case that it is required to increase the wheel cylinder pressure $P_{W/C}$ in each of the wheels during an execution of the BA control, that is, an execution of (I) the start pressure increasing mode, (II) the assist pressure increasing mode and (V) the assist pressure gradual increasing mode is required during the BA control.

In the system of the present embodiment, the increased assist pressure state during the BA control can be realized, as shown in Fig. 28, by making the reservoir cut solenoids $SRC_{-1}$ 704 and $SRC_{-2}$ 706 and the master cut solenoids $SMC_{-1}$ 712 and $SMC_{-2}$ 714 in an on-state and making the first pump 760 and the second pump 762 in an on-state.

When the increased assist pressure state is realized during an execution of the BA control, the brake fluid stored in the reservoir tank 608 is pumped up to the first pump 760 and the second pump 762 and supplied to the hydraulic pressure passages 722 and 734. In the increased assist pressure state, the hydraulic pressure passage 722 and the wheel cylinder 420 of the front right wheel FR and the wheel cylinder 426 of the rear left wheel RL are maintained in a conductive state. Further, in the increased assist pressure state, the flow of the fluid from the hydraulic pressure passages 722 to the master cylinder 602 is restricted by the $SMC_{-1}$ 712 until the pressure in the side of the hydraulic pressure passage 722 is over the releasing valve pressure of the constant pressure releasing valve 740 to a pressure higher than the master cylinder pressure $P_{M/C}$.

In the same manner, in the increased assist pressure state, the hydraulic pressure passage 734 and the wheel cylinder 422 of the front left wheel FL and the wheel cylinder 424 of the rear right wheel RR are maintained in a conductive state, and the flow of the fluid from the hydraulic pressure passages 734 to the master cylinder 602 is restricted by the $SMC_{-2}$ 714 until the internal pressure in the side of the hydraulic pressure passage 734 is over the releasing valve pressure of the constant pressure releasing valve 742 to a pressure higher than the master cylinder pressure $P_{M/C}$.

Accordingly, when the increased assist pressure state shown in Fig. 28 is realized, the wheel cylinder pressure $P_{W/C}$ in each of the wheels is quickly increased to a pressure over the master cylinder pressure $P_{M/C}$ by the first pump 760 and the second pump 762 as a hydraulic pressure source. As described above, according to the increased assist pressure state, it is possible to quickly start the brake force.

Here, in the increased assist pressure state, the hydraulic pressure passages 718, 722, 728 and 730 are communicated with the master cylinder 620 through the check valves 744 and 746, respectively. Accordingly, in the case that the master cylinder pressure $P_{M/C}$ is greater than the wheel cylinder pressure $P_{W/C}$ in each of the wheels, the wheel cylinder pressure $P_{W/C}$ can be increased by the master cylinder 602 as a hydraulic pressure source even in the BA operation state.

Fig. 29 shows a held assist pressure state realized during an execution of the BA control. The held assist pressure state is realized in the case that it is necessary to hold the wheel cylinder pressure $P_{W/C}$ in each of the wheels during an execution of the BA control, that is, in the case that (IV) the assist pressure holding mode is required during the BA control. The held assist pressure state can be realized, as shown in Fig. 29, by making the master cut solenoids $SMC_{-1}$ 712 and $SMC_{-2}$ 714 in an on-state.

In the held assist pressure state, the first pump 760 and the reservoir tank 608, and the second pump 762 and the reservoir tank 608 are respectively made in a closed state by the $SRC_{-1}$ 704 and $SRC_{-2}$ 706. Accordingly, in the held assist pressure state, the fluid is not discharged to the hydraulic pressure passages 722 and 734 from the first pump 760 and the second pump 762. Further, in the held assist pressure state, the hydraulic pressure passages 718, 722 and 730 are substantially separated from the master cylinder 602 by the $SMC_{-1}$ 712 and $SMC_{-2}$ 730. Accordingly, it is possible to hold the wheel cylinder pressure $P_{W/C}$ in all the wheels to a fixed value.

Fig. 30 shows a reduced assist pressure state realized during an execution of the BA control. The reduced assist pressure state is realized in the case that it is necessary to reduce the wheel cylinder pressure $P_{W/C}$ in each of the wheels during an execution of the BA control, that is, in the case that an execution of (III) the assist pressure reducing mode and (VI) the assist pressure gradual reducing mode is required during the BA control. The reduced assist pressure state can be realized, as shown in Fig. 30, by making all the solenoids in an off-state.

In the reduced assist pressure state as shown in Fig. 30, the first pump 760 and the second pump 762 are separated from the reservoir tank 608. Accordingly, the fluid is not discharged to the hydraulic pressure passages 722 and 734 from the first pump 760 and the second pump 762. Further, in the reduced assist pressure state, the wheel cylinders 420 to 426 in the respective wheels and the master cylinder 602 are in a communication state. Accordingly, when the reduced assist pressure state is realized, it is possible to reduce the wheel cylinder pressure $P_{W/C}$ in all the wheels by setting the master cylinder pressure $P_{M/C}$ to be a lower limit value.

According to the present embodiment, the ECU 310 realizes the BA function by combining the increased assist pressure state, the held assist pressure state and the reduced assist pressure state shown in Figs. 28 to 30 in the same manner as that of the above seventh embodiment, in the case that the emergency braking operation is performed by the driver of the vehicle. Accordingly, in the braking force control apparatus of the present embodiment, in the same manner as the case of the above seventh and eighth embodiments, when the emergency braking operation is performed by the driver of the vehicle, it is possible to generate the wheel cylinder pressure $P_{W/C}$ which is greater than the normal one and is accurately depended on the intention of the driver of the vehicle.

As described above, in the system of the present embodiment, the ECU 310 determines whether or not the BA control is required by executing the routine shown in Fig. 20 in the same manner as the case of the seventh embodiment and the eighth embodiment. Then, if it is determined that the BA control is required, the BA function is performed by at first realizing (I) the start pressure increasing mode, and next, suitably realizing (II) the assist pressure increasing mode, (III) the assist pressure reducing mode, (IV) the assist pressure holding mode, (V) the assist pressure gradual increasing mode and (VI) the assist pressure gradual reducing mode by turns based on the output signal pMC of the hydraulic pressure sensor 444.

Further, the ECU 310 determines whether or not the bonding abnormality is generated in the hydraulic pressure sensor 444 by executing the routine shown in Figs. 21 and 22 in the same manner as the case of the seventh embodiment and the eighth embodiment, and quickly finishes the BA control in the case that the bonding abnormality is recognized.

However, in the present embodiment, the sensor check processing shown in step 494 in Fig. 22 is realized by making the second master cut solenoid $SMC_{-2}$ 706 in a valve-released state (an off-state), making the second reservoir cut solenoid SRCR 616 in a valve-released state (an on-state) and making the holding solenoids SFLH 406 and SRRH 408 in a valve-closed state (an on-state) so as to supply the discharge pressure of the second pump 762 to the second hydraulic pressure passage 624, under the circumstance that the braking force control apparatus is made in the held assist pressure state shown in Fig. 29.

According to the above processing, in the same manner as the case of the seventh embodiment and the eighth embodiment, it is possible to accurately determine whether or not the bonding abnormality of the hydraulic pressure sensor 444 exists during an execution of the BA control. Then, in the case that the bonding abnormality of the hydraulic pressure sensor 444 is recognized, it is possible to quickly finish the BA control. Accordingly, in the braking force control apparatus of the present embodiment, in the same manner as the case of the seventh embodiment and the eighth embodiment, it is possible to prevent the BA control from being improperly continued based on the erroneous output signal pMC in the case that the bonding abnormality is generated in the hydraulic pressure sensor 444.

Next, a tenth embodiment according to the present invention will be described below with reference to Figs. 31 to 35 in addition to Fig 1. The braking force control apparatus according to the present embodiment is provided with a function for detecting an abnormality of the hydraulic pressure sensor 40 shown in Fig. 1 in the same manner as that of the first embodiment, the second embodiment, the fourth embodiment and the fifth embodiment mentioned above. In the first embodiment, the second embodiment, the fourth embodiment and the fifth embodiment mentioned above, a method of determining whether or not an abnormality of the hydraulic pressure sensor 40 exists during an execution of the braking operation is employed.

The braking force control apparatus according to the present embodiment is characterized by determining whether or not an abnormality exists in the hydraulic pressure sensor 40 under a circumstance that the braking operation is not performed, at every time when an ignition switch for the vehicle is turned on. The braking force control apparatus according to the present embodiment can be realized by making the ECU 10 to execute a control routine shown in Fig. 31 and a control routine shown in Figs. 32 to 35 in the system structure shown in Fig. 1.

Fig. 31 shows a flow chart of an embodiment of a main routine performed by the ECU 10 so as to realize the above function. The routine shown in Fig. 31 is operated at every predetermined times. When the routine is operated, at first, a processing of step 800 is performed.

In step 800, it is determined whether or not an execution end flag XEND is in an on-state. The execution end flag XEND corresponds to a flag which is made in an off-state by an initial processing and made in an on-state by a finish of the abnormality detecting processing with respect to the hydraulic pressure sensor 40. In the present step 800, if it is determined that a formula XEND = ON is established, it can be determined that the abnormality detecting processing has been already terminated. In the present case, the current routine is terminated without any further processings. On the other hand, if it is determined that the formula XEND = ON is not established, it can be determined that the abnormality detecting processing has not been performed yet. In the present case, a processing of step 802 is next performed.

In step 802, it is determined whether or not an on signal is output from the brake switch 84, that is, whether or not the braking operation is performed. In the system of the present embodiment, the wheel cylinder pressure $P_{W/C}$ in each of the wheels can not suitably controlled during an execution of the abnormality detecting processing with respect to the hydraulic pressure sensor 40. Accordingly, in the present embodiment, the abnormality detecting processing is performed only if it is determined that the on signal is not output from the brake switch 84. In the present step 802, in the case that the above determination is performed, a processing of step 804 is next performed.

In step 804, it is determined whether or not a vehicle speed SPD is equal to or more than 6 km/h. In the abnormality detecting processing of the hydraulic pressure sensor 40, a sound according to an operation of various kinds of solenoids is generated. Accordingly, it is proper that the abnormality detecting processing is performed in the case that the vehicle runs together with a proper running noise. In the present step 804, if it is determined that a formula SPD ≧ 6 km/h is not established, it can be determined that a proper running noise is not generated. In the present case, the current routine is terminated without any further processings. On the other hand, in the present step 804, if it is determined that the formula SPD ≧ 6 km/h is established, it can be determined that a proper running noise is generated. In the present case, a processing of step 806 is next performed.

In step 806, in order to require an execution of the abnormality detecting processing with respect to the hydraulic pressure sensor 40, a processing of making an execution requirement flag XREQ in an on-state is performed. When the processing of the present step 808 is performed, thereafter, the abnormality detecting processing with respect to the hydraulic pressure sensor 40 is performed according to the other control routine mentioned below. When the processing of the present step 806 is terminated, the current routine is terminated.

During the present routine, in the above step 802, if it is determined that an on signal is output from the brake switch 84, a processing of step 808 is next performed. In step 808, it is determined whether or not the execution requirement flag XREQ is in an on-state. In the case that a formula XREQ = ON is not established, it can be determined that the abnormality detecting processing has not been started yet. In the present case, the current routine is quickιy terminated without any further processings. On the other hand, in the present step 808, if it is determined that the formula XREQ = ON is established, it can be determined that the abnormality detecting processing has been already started. In the present case, thereafter, in order to forcibly terminate the abnormality detecting processing, a processing of step 810 is performed.

In step 810, a processing of making a forcible termination flag XSTOP in an on-state is performed. When the processing of the present step 810 is performed, thereafter, a processing for forcibly terminating the abnormality detecting processing and making the braking force control apparatus in a normal brake state is performed according to the other routine mentioned below. When the processing of the present step 810 is terminated, the processing of step 810 is next performed.

In step 810, a processing of making the execution requirement flag XREQ in an off-state is performed. When the processing of the present step 810 is performed, thereafter, an execution of the abnormality detecting processing is inhibited until the execution requirement flag XREQ is again made in an on-state in the above step 806.

Figs. 32 to 35 show a flow chart of an embodiment of a control routine performed by the ECU 10 so as to realize the abnormality detecting processing with respect to the hydraulic pressure sensor 40. The routine shown in Figs. 32 to 35 corresponds to a timed interruption routine operated at every predetermined times. When the present routine is started, at first a processing of step 820 is performed.

In step 820, it is determined whether or not an execution end flag XEND is in an on-state. As a result of the above determination, if it is determined that a formula XEND = ON is established, the current routine is terminated without any further processings. On the other hand, if it is determined that the formula XEND = ON is not established, that is, it is determined that the abnormality detecting processing has not been performed yet, a processing of step 822 is next performed.

In step 822, it is determined whether or not the forcible termination flag XSTOP is in an on-state. As a result, if it is determined that the formula XSTOP = ON is not established, it can be determined that it is required to forcibly terminate the abnormality detecting processing. In the present case, a processing of step 824 is performed after step 822.

In step 824, it is determined whether or not the execution requirement flag XREQ is in an on-state. As a result, in the case that the formula XREQ = ON is not established, it can be determined that an execution of the abnormality detecting processing is not required. In the present case, the current routine is quickιy terminated without any further processings. On the other hand, if it is determined that the formula XREQ = ON is established, in order to execute the abnormality detecting processing, a processing of step 826 shown in Fig. 33 is performed.

In step 826, it is determined whether or not an abnormality temporary flag XPFAIL is in an on-state. The abnormality dummy flag XPFAIL is made in an off-state by the initial processing. Accordingly, if the current processing cycle is a first processing after an execution of the abnormality detecting processing is required, it is determined that the formula XPFAIL = ON is not established. In the present case, a processing of step 828 is next performed.

In step 828, it is determined whether or not a processing of introducing a predetermined pressure P1 to a passage from the third hydraulic pressure passage 42 to the holding solenoids SRRH 68 and SRLH 70 of the rear wheels by the accumulator 20 as a hydraulic pressure source (hereinafter, refer to a P1 introduction processing) is terminated. In particular, it is determined whether or not a flag XP1END expressing that the P1 introduction processing is terminated is in an on-state. As a result, if it is determined that a formula XP1END = ON has not been established yet, a processing of step 830 is next performed.

In step 830, as well as a processing of making the braking force control apparatus in a pressure introduction state is performed, a processing of counting an elapsed time after the braking force control apparatus is made in the pressure introduction state is performed. When the processing of step 830 is terminated, the current routine is terminated. Thereafter, the processing of the current step 830 is repeatedly performed at every time when the present routine is started until the condition of step above 828 is established.

The pressure introduction state can be realized by making the STR 26 in an on-state, making the $SA_{-3}$ 54 in

an on-state and making the SRRH 68 and SRLH 70 in a valve-closed state in the braking force control apparatus shown in Fig. 1. When the pressure introduction state is realized, the accumulator pressure $P_{ACC}$ starts flowing into a passage from the STR 26 to the holding solenoids SRRH 68 and SRLH 70, that is, (1) the third hydraulic pressure path 42 and (2) a path from the $SA_{-3}$ 54 to the SRRH 68 and SRLH 70 (hereinafter, the present path is referred to a pressure accumulation path 831). Then, a hydraulic pressure corresponding to a time for which the braking force control apparatus is maintained in the pressure introduction state is stored in the third hydraulic pressure path 42 and the pressure accumulation path 831.

The braking force control apparatus is maintained in the pressure introduction state until the above condition of step 828 is established. In the present embodiment, the above condition of step 828 is set such as to be established at a time when a predetermined time has passed after the braking force control apparatus is made in a pressure introduction state. Further, the predetermined time is set to a time required for storing a predetermined pressure P1 in the third hydraulic pressure path 42 and the pressure accumulation path 831. Accordingly, in the present routine, it is determined that the above condition of step 828 is established at a time when the predetermined pressure P1 is stored in the third hydraulic pressure path 42 and the pressure accumulation path 831. Here, in the present embodiment, the predetermined pressure P1 is set to 10 atmosphere.

During the routine, when it is determined that the above condition of step 828 is established, a processing of step 832 is performed after step 828.

In step 832, it is determined whether or not a processing of supplying the hydraulic pressure stored in the pressure accumulation path 831 to the second hydraulic pressure passage 38 (hereinafter, refer to a pressure supply processing) is terminated. In particular, it is determined whether or not a flag XPSEND expressing that the pressure supply processing is terminated is in an on-state. As a result, if it is determined that a formula SPSEND = ON has not been established yet, a processing of step 834 is next performed.

In step 834, as well as a processing of making the braking force control apparatus in a pressure supply state is performed, a processing of counting an elapsed time after the braking force control apparatus is made in the pressure supply state is performed. When the processing of step 834 is terminated, the current routine is terminated. Thereafter, the processing of the current step 834 is repeatedly performed at every time when the present routine is started until the above condition of step 832 is established.

The pressure supply state can be realized by making the STR 26 in an off-state and making the $SA_{-3}$ 54 in an off-state in the braking force control apparatus shown in Fig. 1. When the pressure supply state is realized, the pressure accumulation path 831 and the second hydraulic pressure passage 38 are in a conductive state so as to supply the hydraulic pressure (10 atmospheres) stored in the pressure accumulation path 831 to the second hydraulic pressure passage 38 at a stroke.

The braking force control apparatus is maintained in the pressure supply state until the above condition of step 832 is established. In the present embodiment, the above condition of step 832 is set such as to be established at a time when a predetermined time has passed after the braking force control apparatus is made in a pressure supply state. Further, the predetermined time is set to a time required for opening the hydraulic pressure stored in the pressure accumulation path 831 to the second hydraulic pressure passage 38. Accordingly, in the present routine, it is possible to sufficiently supply the hydraulic pressure stored in the pressure accumulation path 831 to the second hydraulic pressure passage 38.

During the routine, when it is determined that the above condition of step 832 is established, a processing of step 836 is performed after step 832.

In step 836, it is determined whether or not the hydraulic pressure sensor 40 generates a proper output according to an execution of the above pressure supply processing. The above processing of steps 832 and 834, that is, the processing of supplying the hydraulic pressure to the second hydraulic pressure passage 38 is performed on the assumption that the braking operation is not performed. In the case that the braking operation is not performed, an internal pressure of the second hydraulic pressure chamber 32b in the master cylinder 32 is adjusted to an atmospheric pressure. Accordingly, when the above processing of steps 832 and 834 is performed, the internal pressure of the second hydraulic pressure passage 38 is converged to the atmospheric pressure after being temporarily increased.

In the above step 836, in the case that a maximum value detected by the hydraulic pressure sensor 40 in a processing that the internal pressure of the second hydraulic pressure passage 38 changes in the above manner is equal to a value to be detected when the hydraulic pressure sensor 40 is normal, it is determined that the detected value of the hydraulic pressure sensor 40 is a normal value. In the present case, a processing of step 838 is next performed. On the other hand, in the case that the maximum value detected by the hydraulic pressure sensor 40 is not equal to the value to be detected at the normal time, it is determined that the detected value of the hydraulic pressure sensor 40 is an abnormality value. In the present case, a processing of step 840 is next performed.

In step 838, a flag processing for expressing that the hydraulic pressure sensor 40 is normal and a state determination of the hydraulic pressure sensor 40 is determined is performed. When the processing of the present step 838 is terminated, a processing of step 862 shown in Fig. 35 is next performed.

In step 840, it is determined whether or not an abnormality dummy flag XPFAIL has been already in an on-state. As described above, the abnormality dummy flag XPFAIL is made in an off-state before the abnormality detecting processing is started. Accordingly, if the current processing is a first processing after a requirement for the abnormality detecting processing is generated, it is determined that a formula the abnormality dummy flag XPFAIL = ON is not established. In the present case, a processing of step 842 is next performed.

In step 842, a processing of making the abnormality dummy flag XPFAIL in an on-state is performed. According to the above processing, it is possible to make the abnormality dummy flag XPFAIL in an on-state at a time when the hydraulic pressure sensor 40 outputs an abnormality value once during an execution of the abnormality detecting processing. In other words, in the case that the formula XPFAIL = ON is established in the present routine, it is possible to determine that the hydraulic pressure sensor 40 outputs an abnormality value once or more. When the processing of the present step 842 is terminated, a processing of step 862 shown in Fig. 35 is next performed.

When the current routine is again started after the abnormality dummy flag XPFAIL is made in an on-state as mentioned above, in the above step 826, it is determined that the formula XPFAIL = ON is established. In the present case, a processing of step 844 is performed after step 826.

In step 844, it is determined whether or not a normality temporary flag XPNORMAL is in an on-state. In the present routine, in the case that the hydraulic pressure sensor 40 outputs an abnormality value as mentioned above, the hydraulic pressure sensor 40 is reexamined as mentioned below. The normality temporary flag XPNORMAL corresponds to a flag which is made in an off-state by the initial processing and made in an on-state in the case that the hydraulic pressure sensor 40 outputs a normal value at a time or reexamination. Accordingly, in the present step 844, if it is determined that the formula XPNORMAL = ON is established, it can be determined that the hydraulic pressure sensor 40 outputs an abnormality value in the first examination but outputs a normal value at a time of reexamination. In the present case, thereafter, the processing of step 828 and the following steps mentioned above is again performed. Hereinafter, a processing of steps 828 to 836 again performed is called as a re-reexamination.

In the re-reexamination of the hydraulic pressure sensor 40, if it is determined that an output value of the hydraulic pressure sensor 40 is a normal value, it can be determined that the hydraulic pressure sensor 40 outputs a normal value by two examinations among three examinations. According to the present embodiment, in the present case, it is determined that the hydraulic pressure sensor 40 is normal, and a processing of step 838 is performed after step 836. On the other hand, in the re-reexamination of the hydraulic pressure sensor 40, if it is determined that the output value of the hydraulic pressure sensor 40 is an abnormality value, a processing of step 840 is performed after step 836.

The re-reexamination of the hydraulic pressure sensor is performed after the abnormality dummy flag XPFAIL is made in an on-state. Accordingly, at a time of the re-reexamination, it is determined that the formula XPFAIL = ON is established in step 840. In the present routine, if it is determined that the formula XFAIL = ON is established in step 840, a processing of step 846 is next performed.

The processing of step 846 is performed, as mentioned above, at a time of the re-reexamination of the hydraulic pressure sensor 40, in the case that the hydraulic pressure sensor outputs an abnormality value. In the re-reexamination, in the case the it is recognized that the output value of the hydraulic pressure sensor 40 is an abnormality value, it can be determined that the hydraulic pressure sensor 40 outputs the abnormality value by two examinations among three examinations. According to the present routine, in the present case, it is determined that the hydraulic pressure sensor 40 is an abnormality. Accordingly, in the present step 846, a flag processing of expressing that an abnormality is generated in the hydraulic pressure sensor 40, a determination of the hydraulic pressure sensor 40 is determined and an execution of the BA processing is inhibited is performed. When the processing of the present step 846 is terminated, a processing of step 862 shown in Fig. 35 is next performed.

During the present routine, if it is determined that the formula XPNORMAL = ON is not established in step 844, it can be determined that the reexamination of the hydraulic pressure sensor 40 has not been performed yet after the abnormality dummy flag XPFAIL is made in an on-state. In the present case, a processing of step 848 shown in Fig. 34 is performed after step 844.

In step 848, it is determined whether or not a processing of introducing a predetermined pressure P2 to the third hydraulic pressure passage 42 and the hydraulic pressure passage 831 by the accumulator 20 as a hydraulic pressure source (hereinafter, refer to a P2 introduction processing) is terminated. In particular, it is determined whether or not a flag XP2END expressing that the P2 introduction processing is terminated is in an on-state. As a result, if it is determined that a formula XP2END = ON has not been established yet, a processing of step 850 is next performed.

In step 850, as well as a processing of making the braking force control apparatus in a pressure introduction state is performed, a processing of counting an elapsed time after the braking force control apparatus is made in the pressure introduction state is performed. In the same manner as the case of step 830 mentioned above, the pressure introduction state can be realized by making the STR 26 in an on-state, making the $SA_{-3}$ 54 in an on-state and making the SRRH 68 and SRLH 70 in a valve-closed state in the braking force control apparatus shown in Fig. 1. When the processing of step 850 is terminated, the current routine is terminated. Thereafter, the processing of the current step 850 is repeatedly performed at every time when the present routine is started until the above condition of step 848 is established.

In the present embodiment, the above condition of step 848 is set such as to be established at a time when a time required for storing a predetermined pressure P2 in the third hydraulic pressure passage 42 and the pressure accumulation path 831 has passed. Accordingly, in the present routine, it is determined that the above condition of step 848 is established at a time when the predetermined pressure P2 is stored in the third hydraulic pressure passage 42 and the pressure accumulation path 831. Here, in the present embodiment, the predetermined pressure P2 is set to 20 atmosphere.

During the routine, when it is determined that the above condition of step 848 is established, a processing of step 852 is performed after step 848.

In step 852, it is determined whether or not the pressure supply processing of supplying the hydraulic pressure stored in the pressure accumulation path 831 to the second hydraulic pressure passage 38 is terminated. In particular, it is determined whether or not a flag XPSEND expressing that the pressure supply processing is terminated is in an on-state. As a result, if it is determined that a formula SPSEND = ON has not been established yet, a processing of step 854 is next performed.

In step 854, as well as a processing of making the braking force control apparatus in a pressure supply state is performed, a processing of counting an elapsed time after the braking force control apparatus is made in the pressure supply state is performed. In the same manner as the case of the above step 834, the pressure supply state can be realized by making the STR 26 in an off-state and making the $SA_{-3}$ 54 in an off-state in the braking force control apparatus shown in Fig. 1. When the processing of step 854 is terminated, the current routine is terminated. Thereafter, the processing of the current step 854 is repeatedly performed at every time when the present routine is started until the above condition of step 852 is established.

When the pressure supply state is realized, the pressure accumulation path 831 and the second hydraulic pressure passage 38 are in a conductive state so as to supply the hydraulic pressure (20 atmospheres) stored in the pressure accumulation path 831 to the second hydraulic pressure passage 38 at a stroke. Accordingly, in the case that the hydraulic pressure sensor 40 is normal, it is expected that a change corresponding to the output value of the hydraulic pressure sensor 40 is generated after the pressure supply state is realized.

During the routine, when it is determined that the above condition of step 852 is established, a processing of step 856 is performed after step 852.

In step 856, it is determined whether or not the hydraulic pressure sensor 40 generates a proper output according to an execution of the above pressure supply processing. In particular, it is determined whether or not a maximum value detected by the hydraulic pressure sensor 40 according to an execution of the pressure supply processing is equal to a value to be detected when the hydraulic pressure sensor 40 is normal. As a result, in the case that the detected value of the hydraulic pressure sensor 40 is normal, a processing of step 358 is next performed. On the other hand, in the case that the detected value of the hydraulic pressure sensor 40 is an abnormality, a processing of step 860 is next performed.

In step 858, a processing of making the normality temporary flag XPNORMAL in an on-state is performed. According to the above processing, it is possible to make the normal temporary flag XPNORMAL in an on-state in accordance that the hydraulic pressure sensor 40 outputs a normal value during the reexamination of the hydraulic pressure sensor 40. When the processing of the present step 858 is terminated, a processing of step 862 shown in Fig. 35 is next performed.

The processing of step 860 is performed, as mentioned above, in the case that the hydraulic pressure sensor 40 outputs an abnormality value at a time of the reexamination of the hydraulic pressure sensor 40. In the reexamination, in the case that it is recognized that the output value of the hydraulic pressure sensor 40 is an abnormality, it can be determined that the hydraulic pressure sensor 40 subsequently outputs an abnormality value in two examinations. In the present embodiment, in the present case, it is determined that the hydraulic pressure sensor 40 is an abnormality. Accordingly, in the present step 860, a flag processing expressing that an abnormality is generated in the hydraulic pressure sensor 40, a determination of the hydraulic pressure sensor 40 is determined and an execution of the BA control is inhibited is performed. When the processing of the present step 860 is terminated, a processing of step 862 shown in Fig. 35 is next performed.

The processing of step 862 shown in Fig. 35 is performed, as mentioned above, (1) after the first examination of the hydraulic pressure sensor 40 in the abnormality detecting processing is terminated (after the above processing of step 838 or 842 is terminated), (2) the reexamination of the hydraulic pressure sensor 40 is terminated (the above processing of step 858 or 860 is terminated) and (3) the re-reexamination of the hydraulic pressure sensor 40 is terminated (the processing of step 838 or 846 is terminated).

As described above, in these examination processes, at first, the predetermined pressure P1 or P2 is stored in the third hydraulic pressure passage 42 and the pressure accumulation path 831. Next, the pressure stored in the pressure accumulation path 831 is supplied to the second hydraulic pressure passage 38. According to the above processing, the internal pressure of the pressure accumulation path 831 is reduced to the atmospheric pressure at a time when the examination processing is terminated, however, the predetermined pressure P1 or P2 is left in the third hydraulic pressure passage 42. Accordingly, after the examination processes are terminated, in order to return the braking force control apparatus to the state before the examination processing is started, it is necessary to reduce the hydraulic pressure left in the third hydraulic pressure passage 38.

In steps after step 862, in order to satisfy the requirement, a processing of reducing the hydraulic pressure left in the third hydraulic pressure passage 38 to the atmospheric pressure is performed. In particular, in step 862, a processing of opening the hydraulic pressure left in the third hydraulic pressure passage 42 to the reservoir tank and returning a communication between the wheel cylinders 44RL and 44RR of the rear wheels and the master cylinder 32 (hereinafter, refer to a pressure open processing) is terminated is determined. The ECU 10 makes the flag XPRED in an on-state when the pressure released state is terminated.

In the above step 862, it is determined whether or not the pressure open processing is terminated based on whether or not the formula XPRED = ON is established. As a result, if it is determined that the formula XPRED = ON is not established, a processing of step 864 is next performed after the above step.

In step 864, as well as a processing of making the braking force control apparatus in a pressure released state is performed, a processing of counting an elapsed time after the braking force control apparatus is made in the pressure released state is performed. The pressure released state can be realized by making the pressure reducing solenoids SFRH 58 and SFLH 64 of the left and front right wheels in an on-state (a valve-released state) and making all the other solenoids in an off-state (a state shown in Fig. 1) in the braking force control apparatus shown in Fig. 1.

When the pressure released state is realized by the above processing, as well as the wheel cylinders 44RL and 44RR of the left and rear right wheels and the master cylinder 32 are in a conductive state, the third hydraulic pressure passage 42 is communicated with the reservoir tank 16 through the pressure reducing solenoids SFRH 58 and SFLH 64 of the left and front right wheels. Accordingly, when the pressure released state is realized, the hydraulic pressure left in the third hydraulic pressure passage is quickly opened to the reservoir tank 16. When the processing of the present step 864 is terminated, the current routine is terminated. Thereafter, the processing of the present step 864 is repeatedly performed at every time when the present routine is started until the above condition of step 862 is established.

In the present embodiment, the above condition of step 862 is established at a time when a time necessary for the predetermined pressure P2 left in the third hydraulic pressure passage 42 to be lowered to the atmospheric pressure after the braking force control apparatus is made in a pressure released state has passed. Accordingly, in the present routine, it is possible to reduce the internal pressure of the third hydraulic pressure passage 42 to the atmospheric pressure until the above condition of step 862 is established.

During the routine, when the above condition of step 862 is established, a processing of step 866 is performed.

In step 866, it is determined whether or not the determination with respect to the state of the hydraulic pressure sensor 40 is determined. In the case that the flag processing of expressing that the hydraulic pressure sensor 40 is normal or that the hydraulic pressure sensor 40 is an abnormality is not performed, it is determined that the determination has not been determined yet. In the present case, thereafter, the current routine is terminated without any further processings. On the other hand, in the case that the flag processes are performed, it is determined that the determination has been determined, and a processing of step 868 is next performed.

In step 868, as well as the abnormality dummy flag XPFAIL is made in an off-state, the normality temporary flag XNORMAL is made in an off-state. When the processing of the present step 868 is terminated, a processing of step 870 is next performed.

In step 870, the execution end flag XEND is made in an on-state. According to the above processing, it is possible to quickly make the execution end flag XEND in an on-state after the determination with respect to the state of the hydraulic pressure sensor 40 is determined. When the processing of the present step 870 is terminated, a processing of step 872 is next performed.

In step 872, the execution requirement flag XREQ is made in an off-state. When the processing of the present step 872 is terminated, the current routine is terminated.

When the XEND is made in an on-state in the above step 870, thereafter, the main routine shown in Fig. 31 performs only the processing of step 800 at every time when the start is intended, and finishes the routine. In the same manner, the interruption routine shown in Figs. 32 to 35 performs only the processing of step 820 at every time when the start is intended, and finishes the routine. Therefore, according to the system of the present embodiment, after the determination with respect to the state of the hydraulic pressure sensor 40 is determined, the abnormality detecting processing is not again performed.

As described above, according to the main routine shown in Fig. 31 mentioned above, in the case that the execution requirement flag XREQ has been already in an on-state (step 808) when an on signal is output from the brake switch 84 (step 802) before the execution end flag XEND is made in an on-state (step 800), (1) the forcible termination flag XSTOP is made in an on-state and (2) the execution requirement flag XREQ is once returned to an off-state.

A state that the forcible termination flag XSTOP is made in an on-state and the execution requirement flag XREQ is switched from an on-state to an off-state by the main routine is formed (i) just at the time when the above abnormality detecting processing is performed and (ii) in the case that the braking operation is performed by the driver of the vehicle. When the routine shown in Figs. 32 to 35 is started after the above state is formed, it is determined that the formula XSTOP = ON is established in step 822 after it is determined that the formula XEND = ON is not established in step 820. In the present case, a processing of step 874 is next performed.

In the case that the braking operation is performed by the driver of the vehicle, it is proper to control the wheel cylinder pressure $P_{W/C}$ of each of the wheels to a hydraulic pressure corresponding to the pedal depressing force. The above control can be realized by making all the solenoids in an off-state so as to make the braking force control apparatus in the state shown in Fig. 1.

However, in the case that the abnormality detecting processing is started before the braking operation is started, there is a case that a high hydraulic pressure is stored within the third hydraulic pressure passage 42 and within the pressure accumulation path 831. In the present case, when all the solenoids are made in an off-state immediately after the braking operation is started, there is a case that the wheel cylinder pressure $P_{W/C}$ not corresponding to the pedal depressing force is temporarily generated.

Accordingly, in the case that the braking operation is started after the abnormality detecting processing is started, it is proper to return the braking force control apparatus to the state shown in Fig. 1 by making all the solenoids in an off-state after once reducing the hydraulic pressure stored in the third hydraulic pressure passage 42 and the pressure accumulation path 831. During the present routine, processings after the above step 874 are performed so as to realize the above function.

In step 874, a processing of making the braking force control apparatus in a forcibly terminating state is performed. The forcibly terminating state can be realized by making all the pressure reducing solenoids S**R in an on-state (a valve-released state) and making all the other solenoids in an off-state (the state shown in Fig. 1). According to the above forcibly terminating state, the third hydraulic pressure passage 42 is communicated with the reservoir tank 16 through the holding solenoids SFRH 50 and SFLH 52 in the front wheels and the pressure reducing solenoids SFRR 58 and SFLR 64 in the front wheels. Further, the pressure accumulation path 831 is communicated with the reservoir tank 16 through the holding solenoids SRRH 68 and SRLH 70 in the rear wheels and the pressure reducing solenoids SRRR 74 and SRLR 80 in the front wheels. Accordingly, when the processing of the present step 874 is performed, thereafter, the hydraulic pressure within the third hydraulic pressure passage 42 and the hydraulic pressure within the pressure accumulation path 831 are quickly reduced. When the processing of the present step 874 is terminated, a processing of step 874 is next performed.

In the present step 874, it is determined whether or not the forcibly terminating processing is completed. In particular, it is determined whether or not a flag XSTOPEND expressing that the forcibly terminating processing is terminated is in an on-state. As a result, if it is determined that a formula XSTOPEND = ON has not been established yet, the current routine is quickly terminated thereafter. The processing of steps 820, 822, 874 and 876 is repeatedly performed at every time when the present routine is started thereafter until it is determined that the forcibly terminating processing is completed in the present step 874.

In the present embodiment, the flag XSTOPEND is made to be an on-state at a time when a time which is enough to reduce the hydraulic pressure stored within the third hydraulic pressure passage 42 and within the pressure accumulation path 831 has passed after the braking force control apparatus is made in a forcibly terminating state. Accordingly, in the above step 876, it is determined that the forcibly terminating processing is completed in synchronous with the time when the internal pressure of the third hydraulic pressure passage 42 and the internal pressure of the pressure accumulation path 831 are suitably reduced. When the above determination is performed, a processing of step 878 is performed after step 876.

In step 878, the forcible termination flag XSTOP is made in an off-state. When the processing of the present step 878 is terminated, the current routine is terminated.

According to the above main routine shown in Fig. 31, the processing of making the forcible termination flag XSTOP in an on-state (step 810) is not performed unless the execution requirement flag XREQ is in an on-state (step 808) even when an on signal is output from the brake switch (step 802). Accordingly, when the routine shown in Figs. 32 to 35 is again started after the forcible termination flag XSTOP is made in the above off state in step 878, it is determined that the formula XSTOP = ON is not established in step 822.

Further, according to the main routine shown in Fig. 31, the execution requirement flag XREQ once made in an off-state is maintained in an off-state as long as the brake switch 84 outputs an on signal. Accordingly, the execution requirement flag XREQ is maintained in an off-state at least during the time when the braking operation is continued after the forcible flag XSTOP is made in the above off state in step 878.

According to the above interruption routine shown in Figs. 32 to 35, in the case that the execution requirement flag XREQ is in an off-state (step 824), the abnormality detecting processing is not performed. Accordingly, the braking force control apparatus according to the present embodiment is controlled in the normal brake state shown in Fig. 1 at least during the time when the braking operation is continued after the forcible termination flag XSTOP is made in the above off state in step 878. Accordingly, in the braking force control apparatus of the present embodiment, it is possible to accurately generate the wheel cylinder pressure $P_{W/C}$ corresponding to the pedal depressing force in the wheel cylinder 44** in each of the wheels after the forcibly terminating processing is terminated.

As described above, according to the braking force control apparatus of the present embodiment, it is possible to accurately detect whether or not an abnormality is generated in the hydraulic pressure sensor 40 by supplying the predetermined hydraulic pressure P1 or P2 to the hydraulic pressure sensor 40 in the case that the braking operation is not performed. Then, in the case that an abnormality of the hydraulic pressure sensor 40 is recognized, thereafter, it is possible to inhibit an execution of the BA control. Therefore, according to the braking force control apparatus of the present embodiment, in the case that an abnormality is generated in the hydraulic pressure sensor 40, it is possible to prevent the BA control from being improperly continued.

Here, in the above embodiment, the hydraulic pressure sensor 40 corresponds to "brake operating force detecting means" described in claim 1, and the ECU 10 performs the processing in steps 826 to 844 and 848 to 858, whereby "abnormality detecting means" described in claim 1 can be realized and the ECU 10 performs the processing in steps 846 to 860, whereby "hydraulic control inhibiting means" described in claim 1 can be realized, respectively.

Further, in the above embodiment, the accumulator 20 corresponds to "a high pressure source" described in claim 10, and the ECU 10 performs the processing in steps 828 to 834 and 848 to 854, whereby "high pressure introduction means" described in claim 10 can be realized and the ECU 10 performs the processing in steps 836 and 856, whereby "abnormality recognizing means" described in claim 10 is realized, respectively.

Here, in the above embodiment, it is structured such as to control a hydraulic pressure supplied to the hydraulic pressure sensor 40 by adjusting the hydraulic pressure stored in the pressure accumulation path 831, however, a method of controlling the hydraulic pressure supplied to the hydraulic pressure sensor 40 is not limited to the present. For example, it may be possible to control the hydraulic pressure supplied to the hydraulic pressure sensor 40 by storing a sufficiently high pressure to the pressure accumulation path 831 and adjusting a time for supplying the hydraulic pressure to the hydraulic pressure sensor 40 from the pressure accumulation path 831.

Next, an eleventh embodiment according to the present invention will be described below with reference to Figs. 14 and 31 to 35. A braking force control apparatus according to the present embodiment is realized making the ECU 310 to execute the main routine shown in Fig. 31 and the control routine shown in Figs. 32 to 35 in the system structure shown in Fig. 14.

During the main routine shown in Fig. 31, the state of the brake switch and the vehicle speed SPD are referred. The braking force control apparatus shown in Fig. 14 is provided with the brake switch 314 and the wheel speed sensors 436, 438, 440 and 442. Accordingly, the ECU 310 shown in Fig. 14 can execute the main routine in the same manner as that of the ECU 10 shown in Fig. 1.

In the control routine shown in Figs. 32 to 35, it is required to make the braking force control apparatus in a state of (1) to (4).

(1) A pressure introduction state of introducing the accumulator pressure $P_{ACC}$ to a predetermined hydraulic pressure passage (steps 828 and 848)

(2) A pressure supply state of supplying the hydraulic pressure introduced to the predetermined hydraulic pressure passage to the hydraulic pressure sensor (steps 832 and 852).

(3)) A pressure released state of opening the hydraulic pressure left in the hydraulic pressure passage after the detecting processing of the hydraulic pressure sensor is terminated (step 864).

(4) A forcibly terminating state of forcibly releasing the hydraulic pressure stored in the hydraulic pressure passage in the case that the braking operation is started during an execution of the abnormality detecting processing (step 874).

In the braking force control apparatus shown in Fig. 14, (1) the pressure introduction state can be realized by making the STR 394 in a valve-released state (an on-state), making the $SA_{-3}$ 390 in a valve-closed state (an on-state) and making the holding solenoids SRRH 408 and SRLH 410 of the rear wheels in a valve-closed state (an on-state). According to the above pressure introduction state, it is possible to introduce the accumulator pressure $P_{ACC}$ to the control hydraulic pressure passage 392.

In the braking force control apparatus shown in Fig. 14, (2) the pressure supply state can be realized by making the STR 394 in a valve-closed state (an off-state) and making the $SA_{-3}$ 390 in a valve-released state (an off-state) after (1) the above pressure introduction state is maintained for a predetermined time. According to the above pressure supply state, it is possible to supply the hydraulic pressure stored in the control hydraulic pressure passage 392 to the hydraulic pressure sensor 444 at a stroke. In the present case, the hydraulic pressure supplied to the hydraulic pressure sensor 444 can be controlled by (1) the time for maintaining the pressure introduction state, (2) the time for maintaining the pressure supply state and the like.

In the braking force control apparatus shown in Fig. 14, (3) the pressure released state can be realized by making the holding solenoids SRRH 408 and SRLH 410 of the rear wheels in a valve-released state (an off-state) and making the pressure reducing solenoids SRRR 416 and SRLR 418 of the rear wheels in a valve-released state (an on-state) after (2) the above pressure supply state is maintained for a predetermined time. According to the above pressure released state, it is possible to communicate the control hydraulic pressure passage 392 and the second hydraulic pressure passage 384 with the reservoir tank 314 so as to open the hydraulic pressure left within them to the reservoir tank 318.

In the braking force control apparatus shown in Fig. 14, (4) the forcibly terminating state can be realized by making the pressure reducing solenoids SRRR 416 and SRLR 418 of the rear wheels in a valve-closed state (an off-state) after a predetermined time, after forming the same state as (3) the above pressure released state. According to the above forcibly terminaitng state, it is possible to make the braking force control apparatus in a normal brake state shown in Fig. 14 after quickly opening the hydraulic pressure stored in the control hydraulic pressure passage 392 to the reservoir tank 318.

As described above, according to the braking force control apparatus shown in Fig. 14, it is possible to realize all the states required according to an execution of the control routines shown in Figs. 32 to 35. Accordingly, in the braking force control apparatus of the present embodiment, in the same manner as the case of the tenth embodiment, it is possible to determine the state of the hydraulic pressure sensor 40 when the braking operation is not operated, and prevent the BA control from being improperly continued thereafter in the case that an abnormality is recognized in the hydraulic pressure sensor 40.

Next, a twelfth embodiment according to the present invention will be described below with reference to Figs. 23 and 31 to 35. A braking force control apparatus according to the present embodiment is realized making the ECU 310 to execute the main routine shown in Fig. 31 and the control routine shown in Figs. 32 to 35 in the system structure shown in Fig. 23.

During the main routine shown in Fig. 31, the state of the brake switch and the vehicle speed SPD are referred. The braking force control apparatus shown in Fig. 23 is provided with the brake switch 314 and the wheel speed sensors 436, 438, 440 and 442. Accordingly, the ECU 310 shown in Fig. 23 can execute the main routine in the same manner as that of the ECU 10 shown in Fig. 1.

In the control routine shown in Figs. 32 to 35, it is required to make the braking force control apparatus in (1) a pressure introduction state, (2) a pressure supply state, (3) a pressure released state and (4) a forcibly terminaitng state, as mentioned above.

In the braking force control apparatus shown in Fig. 23, (1) the pressure introduction state can be realized by making the rear reservoir cut solenoid SRCR 616 in a valve-released state (an on-state), making the rear pump 662 in an on-state, making the holding solenoids SRRH 408 and SRLH 410 of the rear wheels in a valve-closed state (an on-state) and making the rear master cut solenoid SMR 630 in a valve-closed state (an on-state). According to the above pressure introduction state, it is possible to store the hydraulic pressure within the hydraulic pressure passage 636 to a pressure for opening the constant pressure releasing valve 642 as an upper limit.

In the braking force control apparatus shown in Fig. 23, (2) the pressure supply state can be realized by making the rear reservoir cut solenoid SRCR 616 in a valve-closed state (an off-state), making the rear pump 662 in an off-state and making the rear master cut solenoid SMR 630 in a valve-released state (an off-state) after (1) the above pressure introduction state is maintained for a predetermined time. According to the above pressure supply state, it is possible to supply the hydraulic pressure stored in the hydraulic pressure passage 636 to the hydraulic pressure sensor 444 at a stroke. In the present case, the hydraulic pressure supplied to the hydraulic pressure sensor 444 can be controlled by (1) the time for maintaining the pressure introduction state, (2) the time for maintaining the pressure supply state and the like.

In the braking force control apparatus shown in Fig. 23, (3) the pressure released state can be realized by making the holding solenoids SRRH 408 and SRLH 410 of the rear wheels in a valve-released state (an off-state) and making the pressure reducing solenoids SRRR 416 and SRLR 418 of the rear wheels in a valve-released state (an on-state) after (2) the above pressure supply state is maintained for a predetermined time. According to the above pressure released state, it is possible to communicate the hydraulic pressure passage 636 and the second hydraulic pressure passage 624 with the rear reservoir 655 so as to open the hydraulic pressure left within them to the rear reservoir 655.

In the braking force control apparatus shown in Fig. 23, (4) the forcibly terminaitng state can be realized by making the pressure reducing solenoids SRRR 416 and SRLR 418 of the rear wheels in a valve-closed state (an off-state) after a predetermined time, after forming the same state as (3) the above pressure released state. According to the above forcibly terminating state, it is possible to make the braking force control apparatus in a normal brake state shown in Fig. 23 after quickly opening the hydraulic pressure stored in the hydraulic pressure passage 636 and the second hydraulic pressure passage 624 to the rear reservoir 655.

As described above, according to the braking force control apparatus shown in Fig. 23, it is possible to realize all the states required according to an execution of the control routines shown in Figs. 32 to 35. Accordingly, in the braking force control apparatus of the present embodiment, in the same manner as the case of the tenth embodiment and the eleventh embodiment, it is possible to determine the state of the hydraulic pressure sensor 40 when the braking operation is not operated, and prevent the BA control from being improperly continued thereafter in the case that an abnormality is recognized in the hydraulic pressure sensor 40.

Next, a thirteenth embodiment according to the present invention will be described below with reference to Figs. 27 and 31 to 35. A braking force control apparatus according to the present embodiment is realized making the ECU 310 to execute the main routine shown in Fig. 31 and the control routine shown in Figs. 32 to 35 in the system structure shown in Fig. 27.

During the main routine shown in Fig. 31, the state of the brake switch and the vehicle speed SPD are referred. The braking force control apparatus shown in Fig. 27 is provided with the brake switch 314 and the wheel speed sensors 436, 438, 440 and 442. Accordingly, the ECU 310 shown in Fig. 27 can execute the main routine in the same manner as that of the ECU 10 shown in Fig. 1.

In the control routine shown in Figs. 32 to 35, it is required to make the braking force control apparatus in (1) a pressure introduction state, (2) a pressure supply state, (3) a pressure released state and (4) a forcibly terminating state, as mentioned above.

In the braking force control apparatus shown in Fig. 27, (1) the pressure introduction state can be realized by making the second reservoir cut solenoid $SRC_{-2}$ 706 in a valve-released state (an on-state), making the second pump 762 in an on-state, making the holding solenoids SFLH 406 and SRRH 406 of the front left wheel and the rear right wheel in a valve-closed state (an on-state) and making the second master cut solenoid $SMC_{-2}$ 714 in a valve-closed state (an on-state). According to the above pressure introduction state, it is possible to store the hydraulic pressure within the hydraulic pressure passage 730 to a pressure for opening the constant pressure releasing valve 742 as an upper limit.

In the braking force control apparatus shown in Fig. 27, (2) the pressure supply state can be realized by making the second reservoir cut solenoid $SRC_{-2}$ 706 in a valve-closed state (an off-state), making the second pump 762 in an off-state and making the second master cut solenoid $SMC_{-2}$ 714 in a valve-released state (an off-state) after (1) the above pressure introduction state is maintained for a predetermined time. According to the above pressure supply state, it is possible to supply the hydraulic pressure stored in the hydraulic pressure passage 730 to the hydraulic pressure sensor 444 at a stroke. In the present case, the hydraulic pressure supplied to the hydraulic pressure sensor 444 can be controlled by (1) the time for maintaining the pressure introduction state, (2) the time for maintaining the pressure supply state and the like.

In the braking force control apparatus shown in Fig. 27, (3) the pressure released state can be realized by making the holding solenoids SFLH 406 and SRRH 406 of the front left wheel FL and the rear right wheel RR in a valve-released state (an off-state) and making the pressure reducing solenoids SFLR 414 and SRRR 416 of the front left wheel FL and the rear right wheel RR in a valve-released state (an on-state) after (2) the above pressure supply state is maintained for a predetermined time. According to the above pressure released state, it is possible to communicate the hydraulic pressure passages 728, 730 and 734 and the second hydraulic pressure passage 624 with the second reservoir 754 so as to open the hydraulic pressure left within them to the second reservoir 754.

In the braking force control apparatus shown in Fig. 27, (4) the forcibly terminating state can be realized by making the pressure reducing solenoids SFLR 414 and SRRR 416 of the front left wheel FL and the rear right wheel RR in a valve-closed state (an off-state) after a predetermined time, after forming the same state as (3) the above pressure released state. According to the above forcibly terminating state, it is possible to make the braking force control apparatus in a normal brake state shown in Fig. 27 after quickly opening the hydraulic pressure stored in the hydraulic pressure passages 728, 730 and 734 and the second hydraulic pressure passage 624 to the second reservoir 754.

As described above, according to the braking force control apparatus shown in Fig. 27, it is possible to realize all the states required according to an execution of the control routines shown in Figs. 32 to 35. Accordingly, in the braking force control apparatus of the present embodiment, in the same manner as the case of the tenth embodiment and the eleventh embodiment, it is possible to determine the state of the hydraulic pressure sensor 40 when the braking operation is not operated, and prevent the BA control from being improperly continued thereafter in the case that an abnormality is recognized in the hydraulic pressure sensor 40.

Next, a fourteenth embodiment according to the present invention will be described below with reference to Fig. 36 in addition to Figs. 1, 14, 23 and 27. A braking force control apparatus according to the present embodiment is realized making the ECU 10 or 310 to execute the control routine shown in Fig. 36 in any one of the system structures shown in Figs. 1, 14, 23 and 27.

The system according to the present embodiment is characterized by accurately renewing a 0 point of the hydraulic pressure sensors 40 and 444 for detecting the master cylinder pressure $P_{M/C}$. Fig. 36 shows a flow chart of an embodiment of a control routine performed by the ECU 10 or 310 in the system of the present embodiment in order to realize the above function. The routine shown in Fig. 36 corresponds to a timed interruption routine operated at every predetermined times. When the present routine is started, at first, a processing of step 874 is performed.

In step 874, it is determined whether or not the brake switch 84 or 314 outputs an on signal. As a result, if it is determined that the brake switch 84 or 314 outputs an on signal, a processing of step 876 is next performed.

In step 876, a flag XSTP is set at "1". According to the above processing, it is possible to set the flag XSTP at "1" when the braking operation is performed by the driver of the vehicle. When the processing of the present step 876 is terminated, the current routine is terminated.

During the present routine, in the above step 874, if it is determined that the output signal of the brake switch 84 or 314 is not an on signal, a processing of step 878 is next performed.

In step 878, it is determined whether or not the flag XSTP is set at "1". As a result, in the case that the formula XSTP = 1 is not established, it is determined that the output signal of the brake switch 84 has been in an off-state before the preceding processing cycle, that is, the braking operation has not been performed from the time before the preceding processing cycle. In the present case, thereafter, the current routine is terminated without any further processings. On the other hand, in the case that the formula XSTP = 1 is established, it is determined that the braking operation is terminated between the preceding processing cycle and the current processing cycle. In the present case, a processing of step 880 is next performed.

In step 880, a processing of reading the output signal pMC of the hydraulic pressure sensor 40 or 444 is performed.

In step 882, the output signal pMC read in the above manner is stored as a 0 point signal pMC0 of the hydraulic pressure sensor 40 or 444. According to the above processing, it is possible to renew the 0 point signal pMC0 of the hydraulic pressure sensor 40 or 444 at every time when the output signal of the brake switch 84 or 310 changes from an on-state to an off-state in accordance that the braking operation is terminated.

In step 884, a processing of resetting the flag XSTP to "0" is performed. When the present step 884 is terminated, the current routine is terminated.

As described above, according to the system of the present embodiment, it is possible to accurately renew the 0 point signal pMC0 of the hydraulic pressure sensor 40 or 444 at every time when the braking operation is terminated. Accordingly, in the system of the present embodiment, even in the case that a drift is generated in the output signal pMC due to a periodical change of the hydraulic pressure sensor 40 or 444 and the like, it is possible to continue an accurate hydraulic pressure control.

As described above, according to the invention described in claim 1, in the case that an abnormality is generated in the brake operating force detecting means, it is possible to inhibit the brake hydraulic pressure control. Therefore, according to the braking force control apparatus of the present invention, it is possible to execute a proper fuel safe with respect to an abnormality in the brake operating force detecting means.

According to the invention described in claim 2, it is possible to accurately determine whether or not the detected value of the brake operating force detecting means is a normal value based on whether or not the detected value of the brake operating force detecting means and the vehicle body decreasing speed satisfy a proper relation. Therefore, according to the braking force control apparatus of the present invention, it is possible to accurately detect an abnormality in the brake operating force detecting means so as to properly execute a fuel safe.

According to the invention described in claim 3, it is possible to accurately determine whether or not the detected value of the brake operating force detecting means is a normal value based on whether or not the detected value of the brake operating force detecting means and the slip ratio of the wheel satisfy a proper relation. Therefore, according to the braking force control apparatus of the present invention, it is possible to accurately detect an abnormality in the brake operating force detecting means so as to properly execute a fuel safe.

According to the invention described in claim 4, in the case that an abnormality in the brake operating force detecting means is detected, it is possible to accurately understand an aspect of the abnormality. Therefore, according to the braking force control apparatus of the present invention, it is possible to easily analyze a reason of an abnormality in the brake operating force detecting means.

According to the invention described in claim 5, it is possible to accurately determine whether or not an abnormality is generated in the brake operating force detecting means based on whether or not a certain mutual relation is recognized between the detected value of the brake operating force detecting means and the accumulator pressure. Therefore, according to the braking force control apparatus of the present invention, it is possible to accurately detect an abnormality in the brake operating force detecting means so as to properly execute a fuel safe.

According to the invention described in claims 6 and 7, it is possible to accurately determine whether or not the brake operating force detecting means is in an abnormal state of outputting a fixed value by monitoring the detected value of the brake operating force detecting means. Therefore, according to the braking force control apparatus of the present invention, it is possible to accurately detect an abnormality in the brake operating force detecting means so as to properly execute a fuel safe.

According to the invention described in claim 8, it is possible to again enable an execution of the brake hydraulic pressure control after an abnormality in the brake operating force detecting means is released.

According to the invention described in claim 9, in the case that a change is generated in the detected value of the brake operating force detecting means due to the braking operation, it is possible to determine that an abnormality in the brake operating force detecting means is released. Therefore, according to the braking force control apparatus of the present invention, it is possible to again enable an execution of the brake hydraulic pressure control after such a phenomenon is generated.

Further, according to the invention described in claim 10, it is possible to accurately detect an abnormality in the hydraulic pressure sensor for a short time regardless of whether or not an execution of the braking operation is performed.

**Claims**

**1.** A braking force control apparatus having a brake operating force detecting means (40; 444) for detecting brake operating force and executing a braking hydraulic pressure control based on a value detected by the brake operating force detecting means, comprising:

abnormality detecting means (10, 106 to 128; 10, 112 to 128, 130 to 134; 10, 164 to 176; 10, 195 to 202; 310, 460 to 500; 10, 826 to 844, 848 to 858) for detecting abnormality in the brake operating force detecting means and,
hydraulic pressure control inhibiting means (10, 122; 10, 180; 10, 192; 310, 502; 846, 860) for inhibiting execution of the braking hydraulic pressure control when abnormality exists in the brake operating force detecting means.

**2.** The braking force control apparatus according to claim 1, comprising:

vehicle deceleration detecting means (10) for detecting deceleration of a vehicle,
wherein the abnormality detecting means detects abnormality in the brake operating force detecting means when either a first state where unreasonably small deceleration is detected relative to the detected value detected by the brake operating force detecting means or a second state where unreasonably large deceleration is detected relative to the detected value detected by the brake operating force detecting means is determined to continue over a predetermined period.

**3.** The braking force control apparatus according to claim 1, comprising:

slip ratio detecting means (10) for detecting a slip ratio of a wheel,
wherein the abnormality detecting means detects abnormality in the brake operating force detecting means when either a first state where a small slip ratio is detected relative to the detected value detected by the brake operating force detecting means or a second state where a large slip ratio is detected relative to the detected value detected by the brake operating force detecting means is determined to continue over a predetermined term.

**4.** The braking force control apparatus according to claim 2 or claim 3, comprising:

anomalous state estimation means (10) for determining an anomalous state of the brake operating force detecting means based on which of the first or second state is the basis on which the abnormality is detected in the brake operating force detecting means.

**5.** The braking force control apparatus according to claim 1, comprising:

an accumulator (20) as a liquid pressure source of a braking hydraulic pressure control and,
accumulator pressure detecting means (88) for detecting the internal pressure of the accumulator,
wherein the abnormality detecting means detects abnormality in the brake operating force detecting means based on the comparison of a detected value detected by the brake operating force detecting means and a detected value detected by the accumulator pressure detecting means.

**6.** The braking force control apparatus according to claim 1,
wherein the abnormality detecting means comprises a first abnormality recognition means (10, 195 to 202; 310, 476, 492) for recognizing abnormality in the brake operating force detecting means when a detected value ($\gamma$) shows execution of the braking operation while change rate of the detected value ($\gamma$) continues to be below a predetermined value ($\delta$) over a predetermined period ($C_0$).

**7.** The braking force control apparatus according to claim 6, wherein the abnormality detecting mans comprises:

brake operating force changing means (310, 494) for changing a brake operating force when abnormality in the brake operating force detecting means is detected by the first abnormality recognition means and,
second abnormality recognition means (310, 476 to 492; 496 to 500) for recognizing abnormality in the brake operating force detecting means when a detected value from the brake operating force detecting means shows any change while a brake operating force is changed by the brake operating force changing means.

**8.** The braking force control apparatus according to claim 1, comprising:

abnormality clearance detecting means (10, 140 to 152; 10, 210 to 214) for detecting that abnormality in the brake operating force detecting means is cleared and,
braking hydraulic pressure control means (10, 154; 10, 218) for permitting execution of the hydraulic pressure control when abnormality in the brake operating force detecting means is cleared.

**9.** The braking force control apparatus according to claim 8,
wherein the abnormality clearance detecting means determines that the abnormality in the brake operating force detecting means is cleared when the detected value detected by the brake operating force detecting means has changed along with execution of a braking operation.

**10.** The braking force control apparatus according to claim 1 comprising;

a master cylinder (32) for generating master cylinder pressures corresponding to a brake operating force and,
a high pressure source (20) for generating predetermined hydraulic pressures independently of the brake operating force,
wherein the brake operating force detecting means comprises a hydraulic pressure sensor (40) for detecting the master cylinder pressures and,
wherein the abnormality detecting means comprises a high pressure introducing means (10, 828 to 834, 848 to 854) for introducing a liquid pressure generated by the high pressure source under a predetermined condition to the hydraulic pressure sensor and an abnormality detecting means (10, 836, 856) for determining abnormality in the hydraulic pressure sensors based on output values generated by the hydraulic pressure sensor when the liquid pressure is introduced by the high pressure introducing means.

Fig. 1

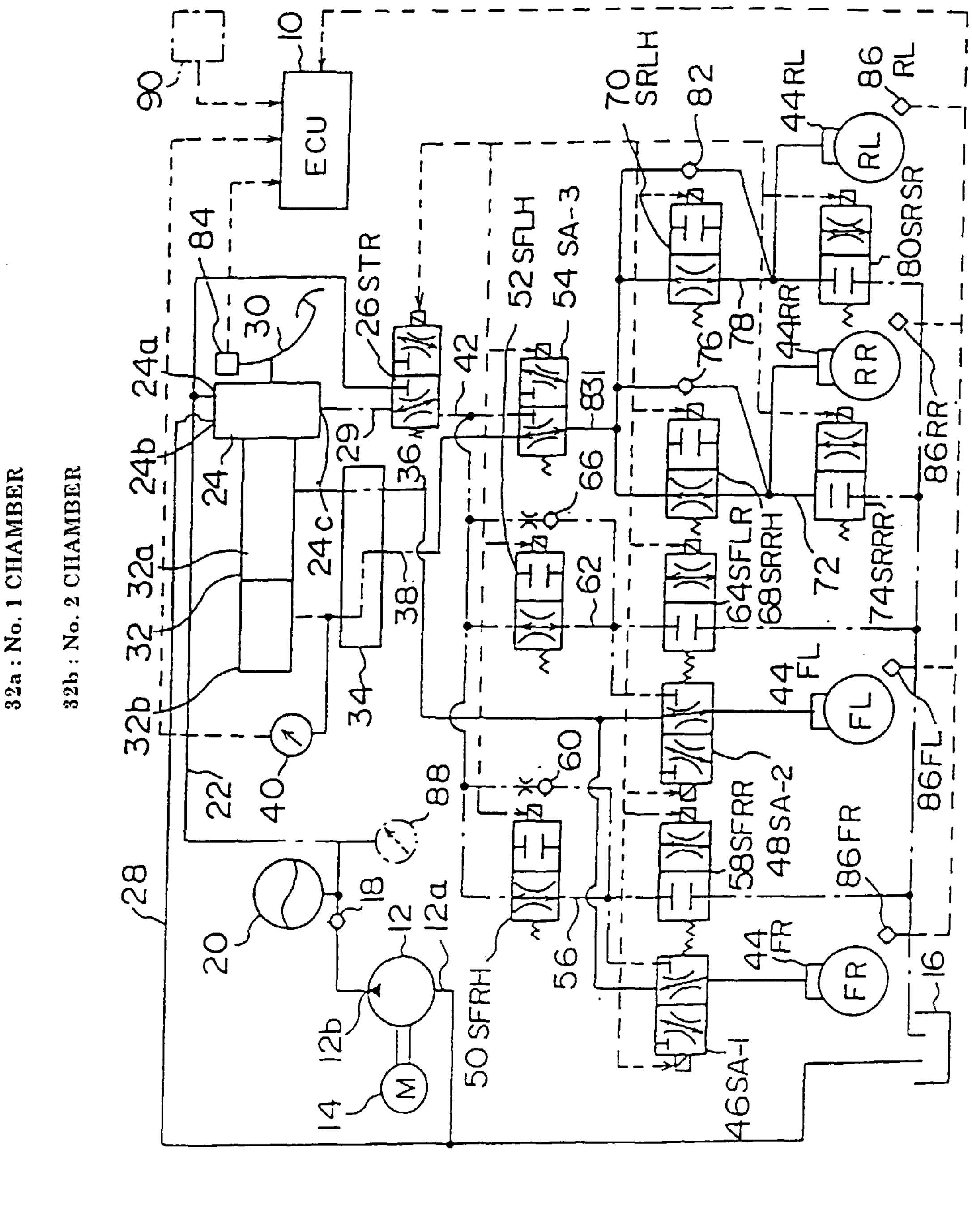
32a : No. 1 CHAMBER
32b : No. 2 CHAMBER
ECU
10
90
84
30
24a
24b
24
24c
26STR
29
42
36
38
32a
32
32b
34
40
22
28
20
18
12
12a
12b
14
M
88
52SFLH
54 SA-3
831
66
62
60
50SFRH
56
46SA-1
48SA-2
58SFRR
64SFLR
68SRRH
70
SRLH
82
76
78
72
74SRRR
80SRSR
44RL
RL
44RR
RR
44
FL
44
FR
86
RL
86RR
86FL
86FR
16

Fig. 2

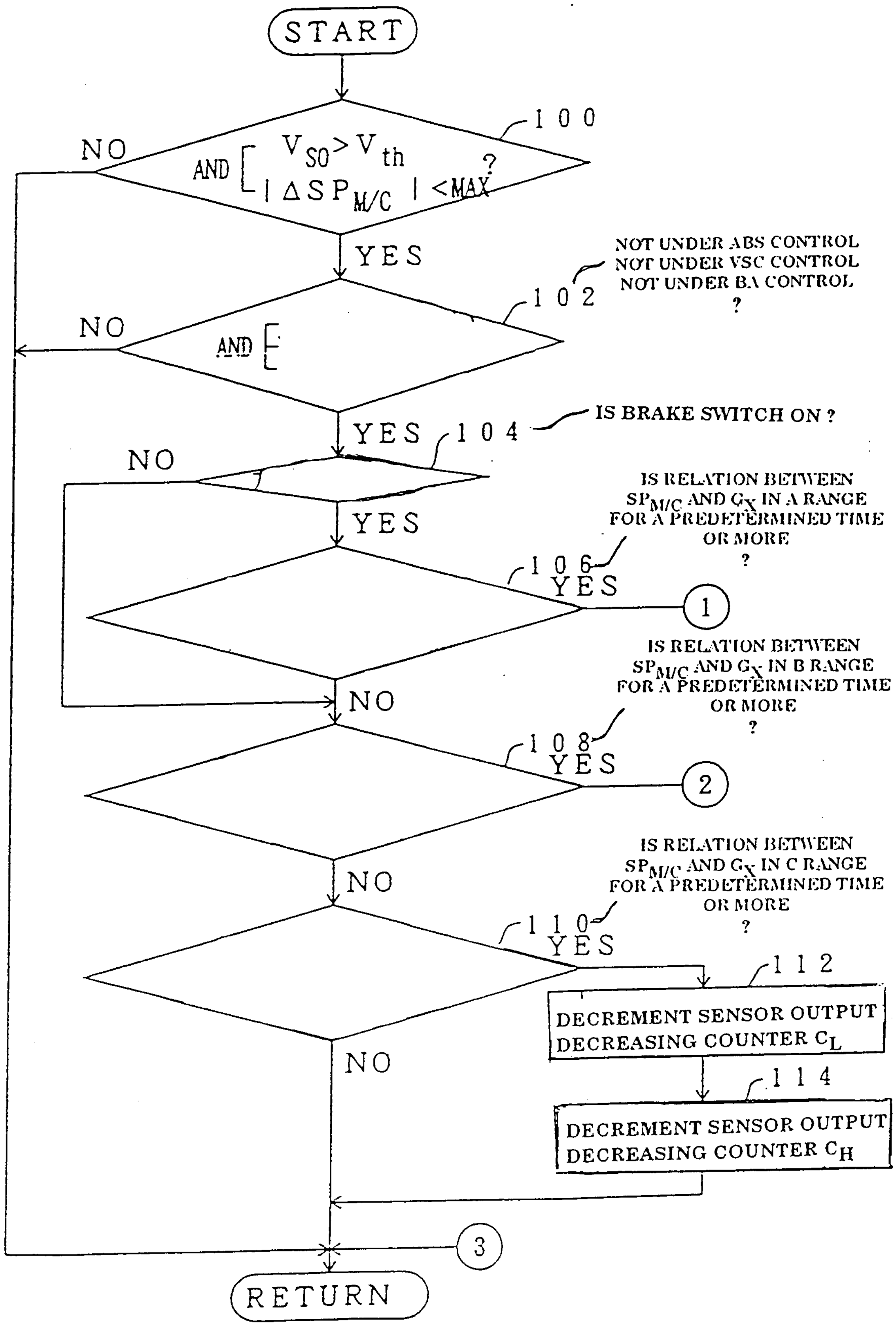
START
100
AND [ $V_{SO} > V_{th}$ / $|\Delta SP_{M/C}| < MAX$ ?
NO
YES
102
NOT UNDER ABS CONTROL
NOT UNDER VSC CONTROL
NOT UNDER BA CONTROL
?
AND [
104
IS BRAKE SWITCH ON ?
106
IS RELATION BETWEEN $SP_{M/C}$ AND $G_X$ IN A RANGE FOR A PREDETERMINED TIME OR MORE ?
1
108
IS RELATION BETWEEN $SP_{M/C}$ AND $G_X$ IN B RANGE FOR A PREDETERMINED TIME OR MORE ?
2
110
IS RELATION BETWEEN $SP_{M/C}$ AND $G_X$ IN C RANGE FOR A PREDETERMINED TIME OR MORE ?
112
DECREMENT SENSOR OUTPUT DECREASING COUNTER $C_L$
114
DECREMENT SENSOR OUTPUT DECREASING COUNTER $C_H$
3
RETURN

Fig. 3

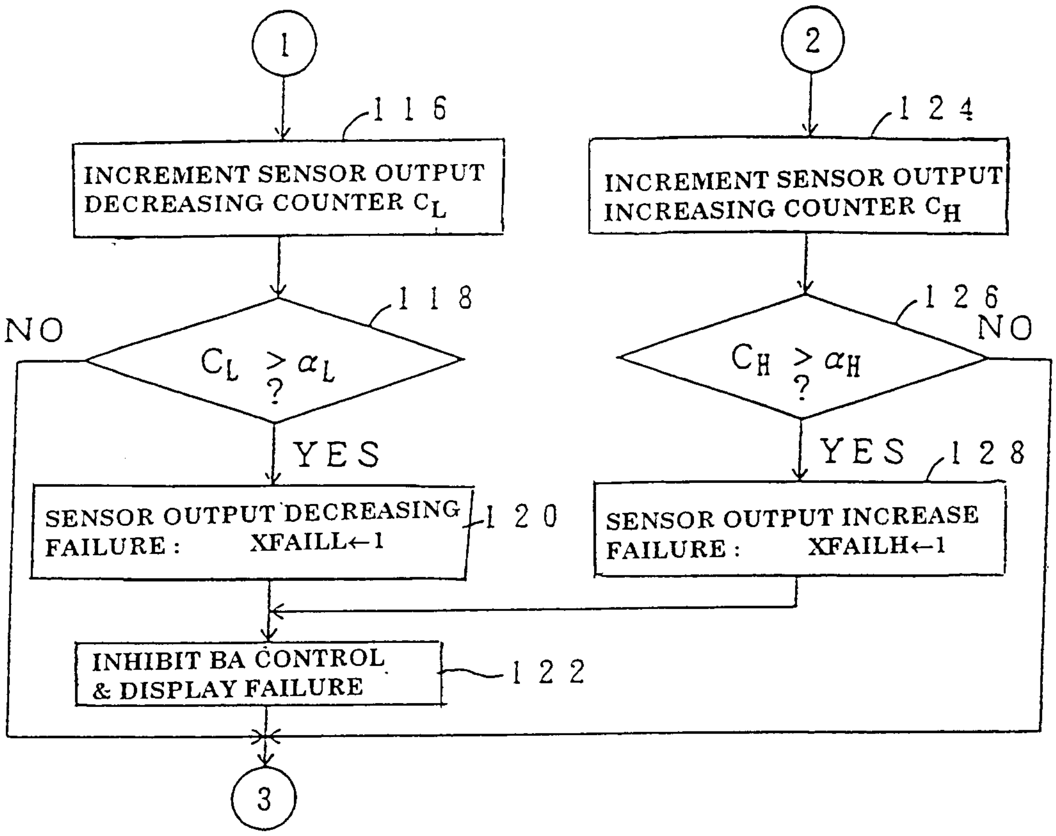
1
116
INCREMENT SENSOR OUTPUT DECREASING COUNTER $C_L$
118
NO
$C_L \geq \alpha_L$ ?
YES
SENSOR OUTPUT DECREASING FAILURE : XFAILL←1
120
2
124
INCREMENT SENSOR OUTPUT INCREASING COUNTER $C_H$
126
NO
$C_H \geq \alpha_H$ ?
YES
128
SENSOR OUTPUT INCREASE FAILURE : XFAILH←1
INHIBIT BA CONTROL & DISPLAY FAILURE
122
3

Fig. 4

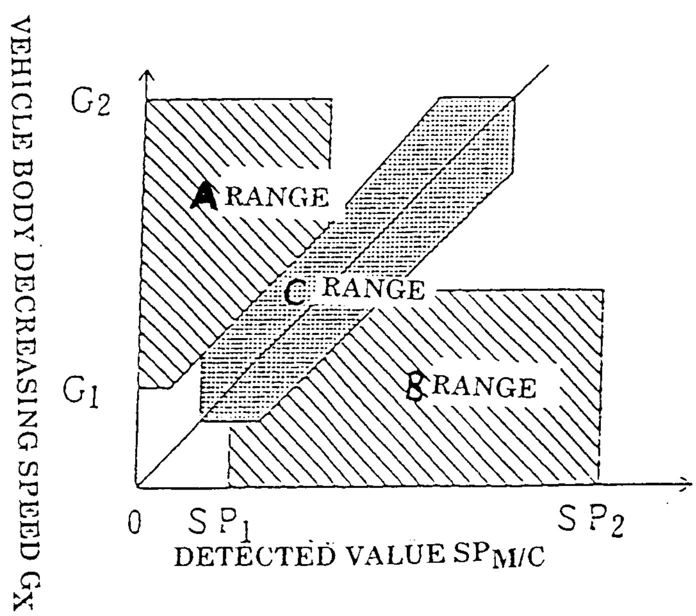
VEHICLE BODY DECREASING SPEED $G_X$
$G_2$
$G_1$
A RANGE
C RANGE
B RANGE
0
$SP_1$
$SP_2$
DETECTED VALUE $SP_{M/C}$

Fig. 5

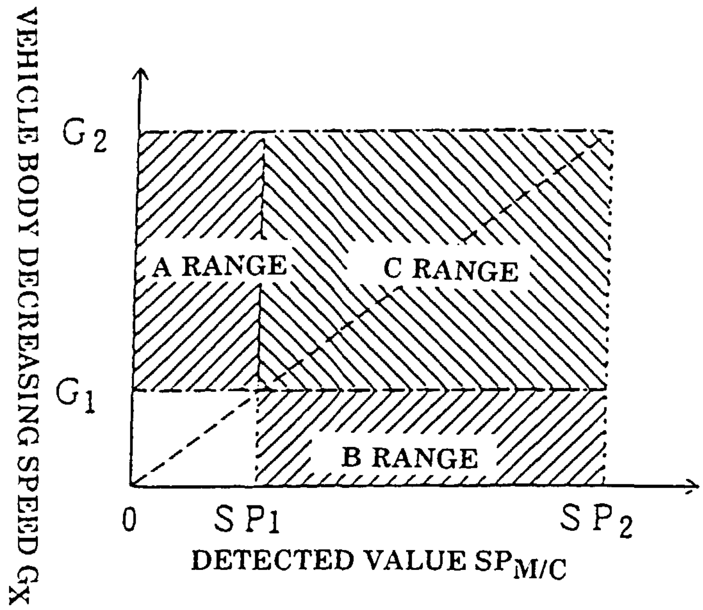
VEHICLE BODY DECREASING SPEED GX
G2
G1
A RANGE
C RANGE
B RANGE
0
SP1
SP2
DETECTED VALUE SPM/C

Fig. 6

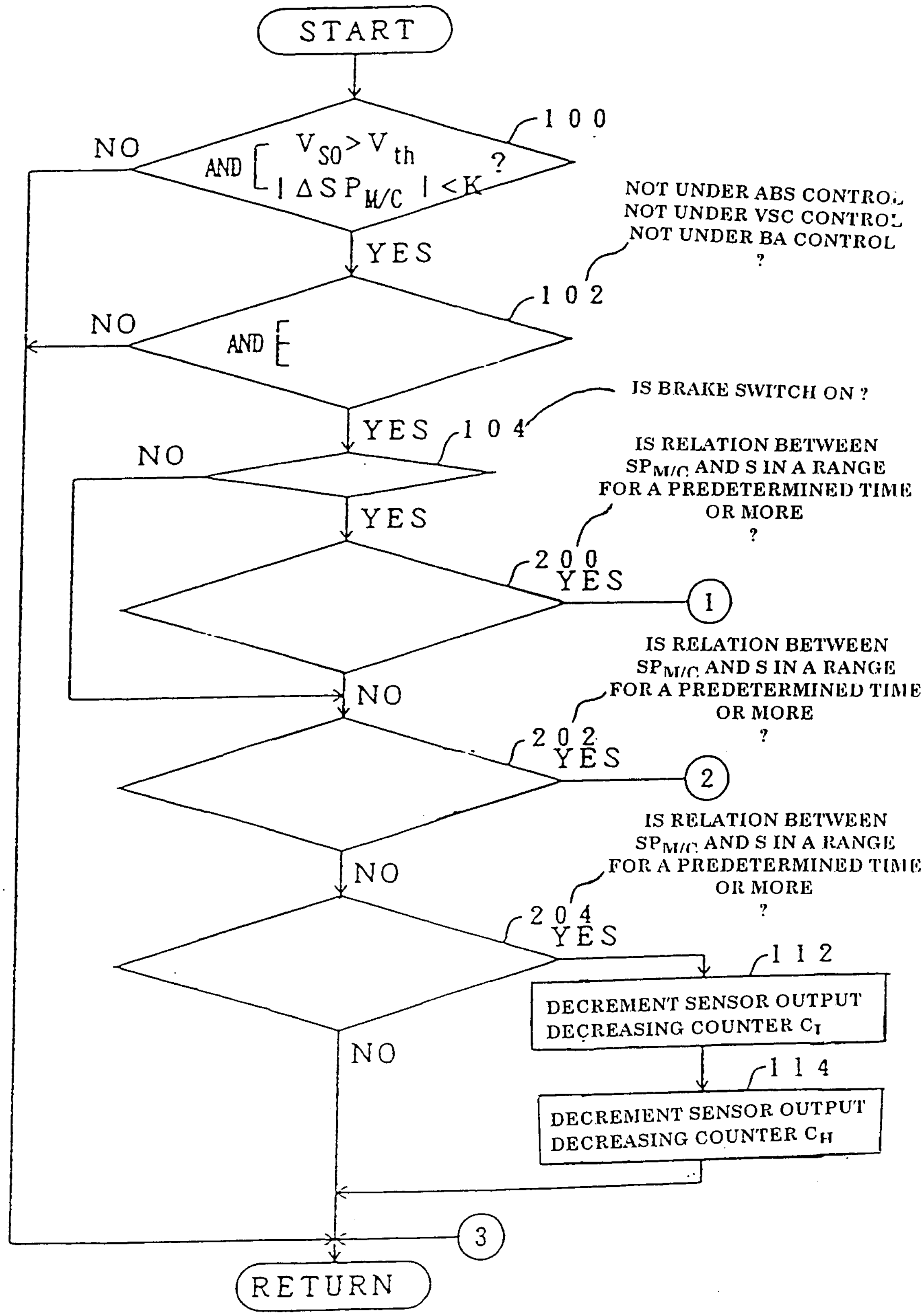
START
100
$V_{SO} > V_{th}$ AND $|\Delta SP_{M/C}| < K$ ?
NO
YES
NOT UNDER ABS CONTROL
NOT UNDER VSC CONTROL
NOT UNDER BA CONTROL
?
102
AND
NO
YES
IS BRAKE SWITCH ON ?
104
NO
YES
IS RELATION BETWEEN $SP_{M/C}$ AND S IN A RANGE FOR A PREDETERMINED TIME OR MORE ?
200
YES
1
NO
IS RELATION BETWEEN $SP_{M/C}$ AND S IN A RANGE FOR A PREDETERMINED TIME OR MORE ?
202
YES
2
NO
IS RELATION BETWEEN $SP_{M/C}$ AND S IN A RANGE FOR A PREDETERMINED TIME OR MORE ?
204
YES
112
DECREMENT SENSOR OUTPUT DECREASING COUNTER $C_I$
114
DECREMENT SENSOR OUTPUT DECREASING COUNTER $C_H$
NO
3
RETURN

Fig. 7

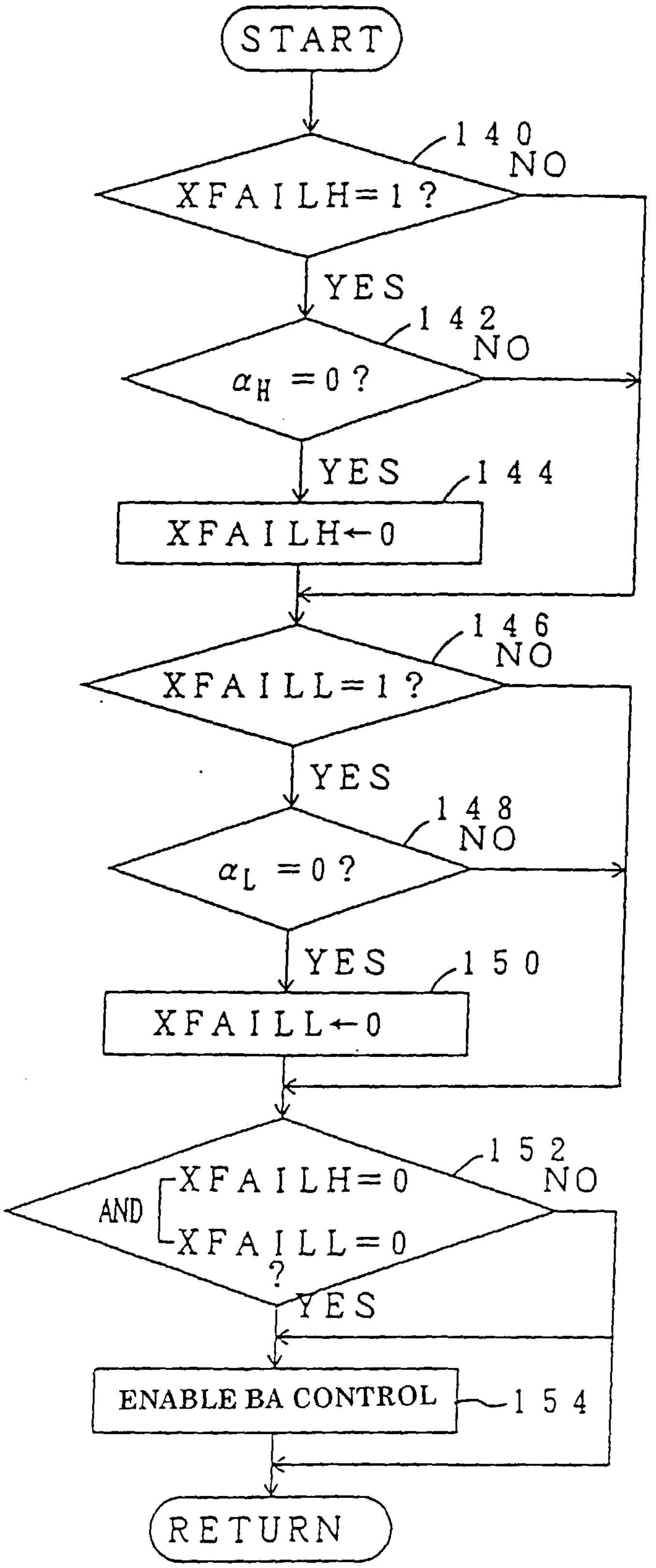
START
140
XFAILH=1 ?
NO
YES
142
$\alpha_H$ =0 ?
NO
YES
144
XFAILH←0
146
XFAILL=1 ?
NO
YES
148
$\alpha_L$ =0 ?
NO
YES
150
XFAILL←0
152
AND
XFAILH=0
XFAILL=0
?
NO
YES
ENABLE BA CONTROL
154
RETURN

Fig. 8

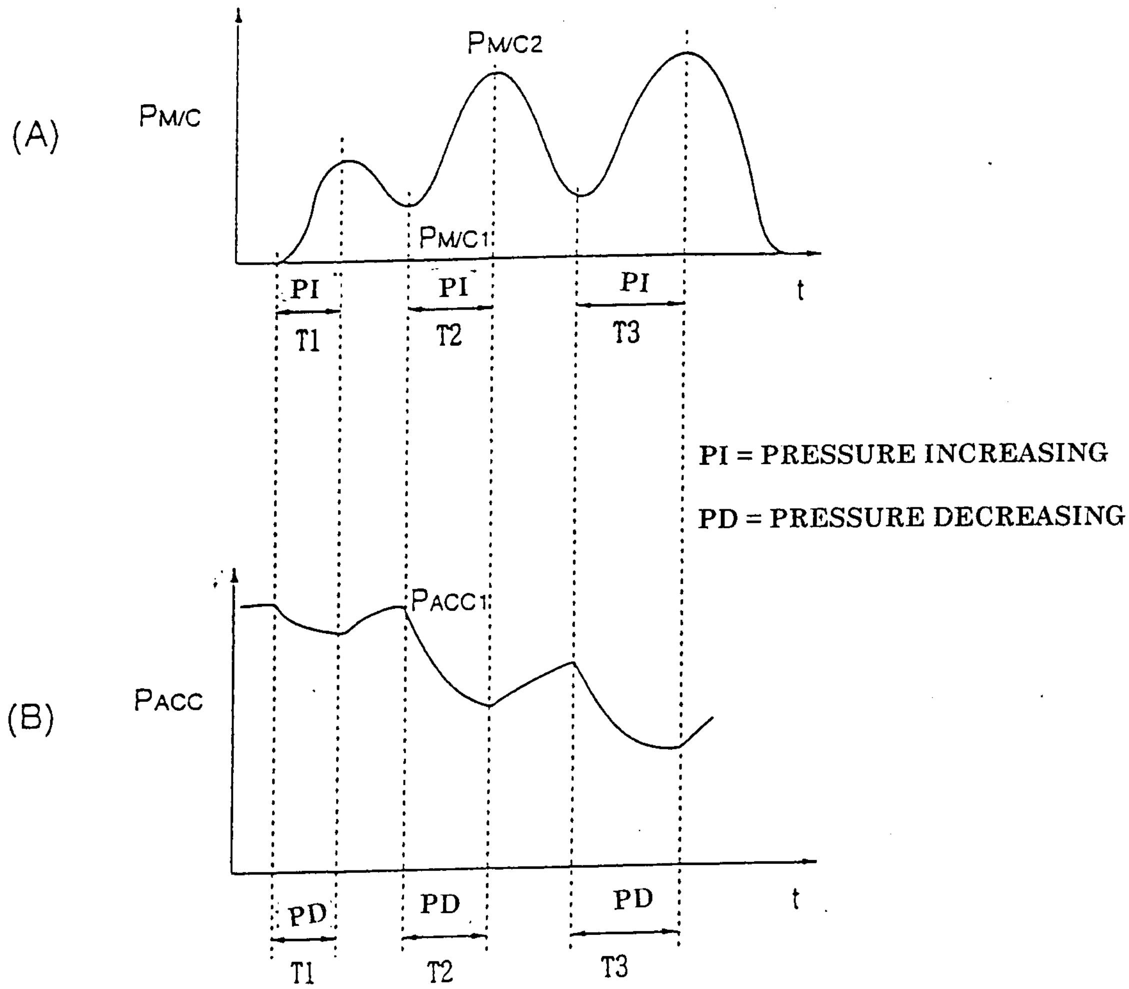
(A)
PM/C
PM/C2
PM/C1
PI
PI
PI
t
T1
T2
T3
PI = PRESSURE INCREASING
PD = PRESSURE DECREASING
(B)
PACC
PACC1
PD
PD
PD
t
T1
T2
T3

Fig. 9

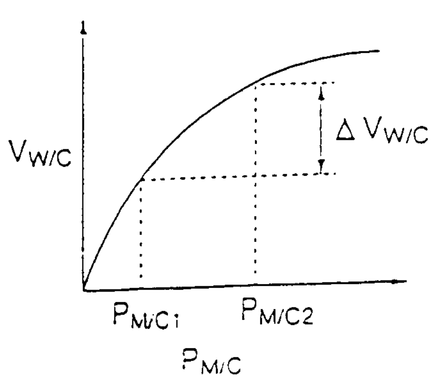
VW/C
Δ VW/C
PM/C1
PM/C2
PM/C

Fig. 10

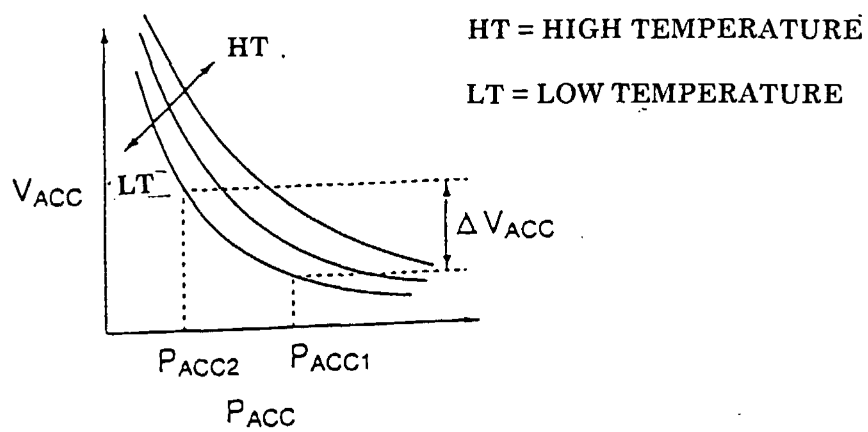
HT
LT
HT = HIGH TEMPERATURE
LT = LOW TEMPERATURE
$V_{ACC}$
$\Delta V_{ACC}$
$P_{ACC2}$
$P_{ACC1}$
$P_{ACC}$

Fig. 11

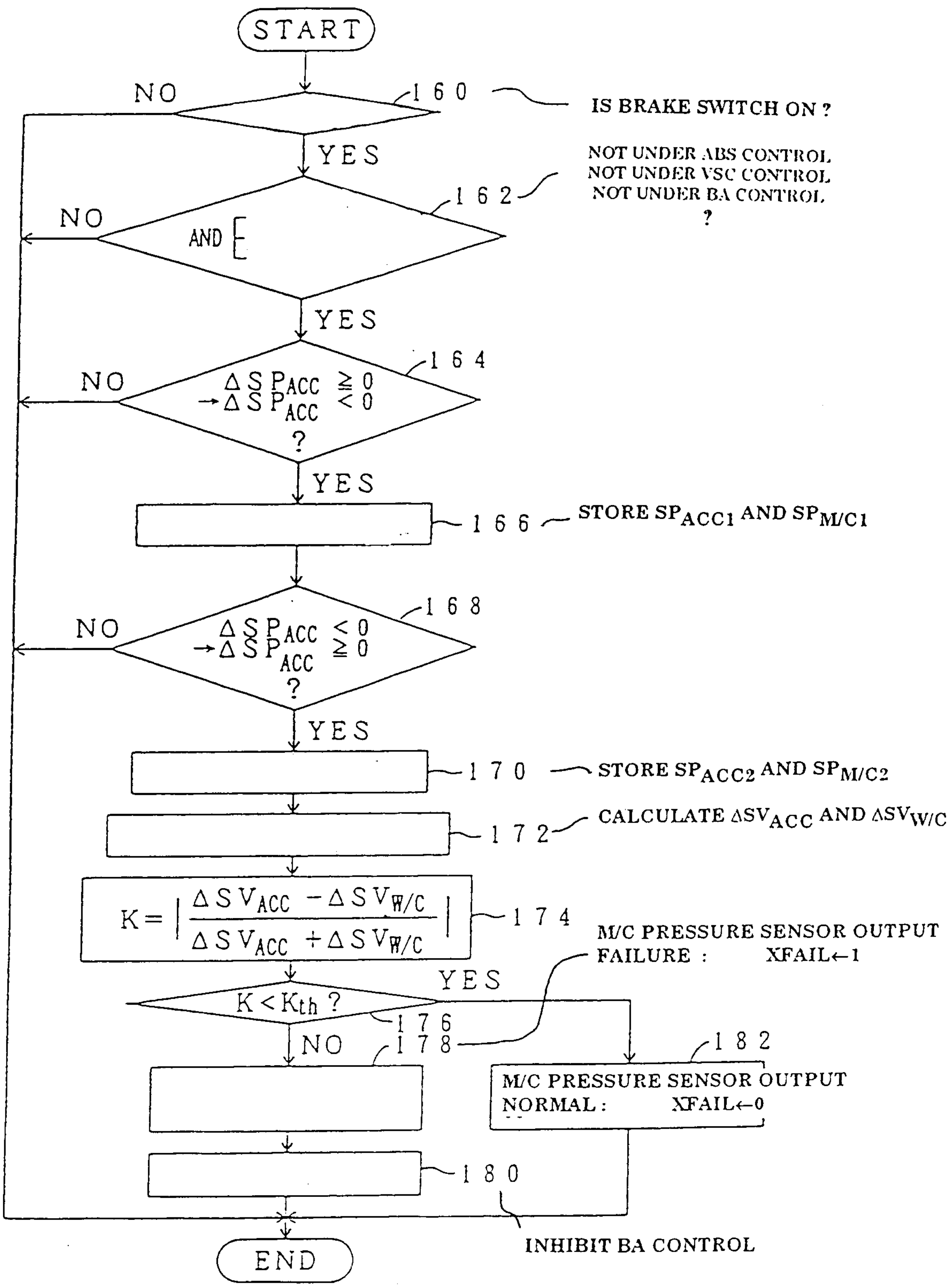
START
160
IS BRAKE SWITCH ON ?
NO
YES
162
NOT UNDER ABS CONTROL
NOT UNDER VSC CONTROL
NOT UNDER BA CONTROL
?
AND
NO
YES
164
ΔSPACC ≧ 0 →ΔSPACC < 0 ?
NO
YES
166
STORE SPACC1 AND SPM/C1
168
ΔSPACC ≦ 0 →ΔSPACC ≧ 0 ?
NO
YES
170
STORE SPACC2 AND SPM/C2
172
CALCULATE ΔSVACC AND ΔSVW/C
174
K = |(ΔSVACC − ΔSVW/C) / (ΔSVACC + ΔSVW/C)|
M/C PRESSURE SENSOR OUTPUT
FAILURE : XFAIL←1
K < Kth ?
YES
176
NO
178
182
M/C PRESSURE SENSOR OUTPUT
NORMAL : XFAIL←0
180
INHIBIT BA CONTROL
END

Fig. 12

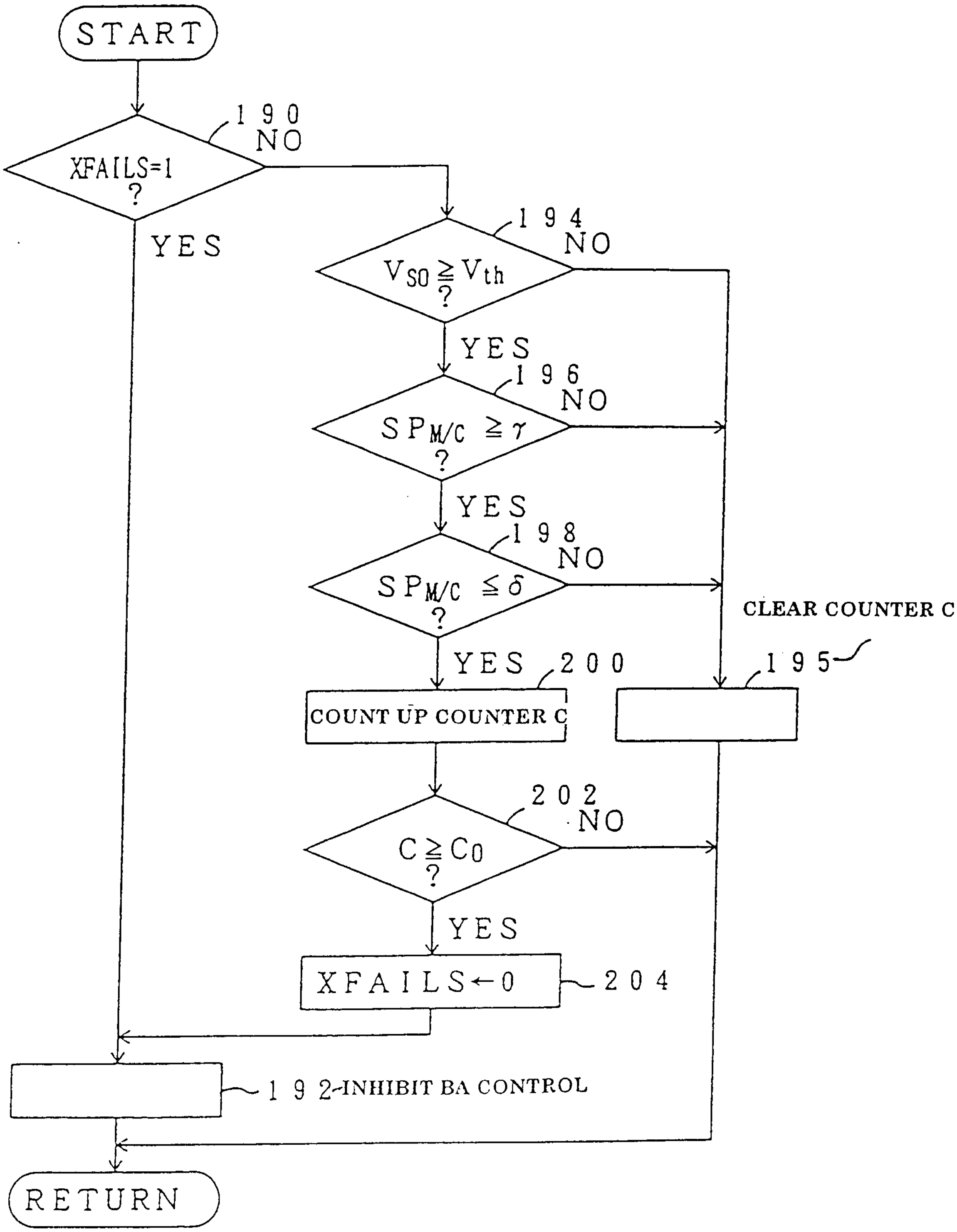
START
190
NO
XFAILS=1
?
YES
194
NO
$V_{S0} \geqq V_{th}$
?
YES
196
NO
$SP_{M/C} \geqq \gamma$
?
YES
198
NO
$SP_{M/C} \leqq \delta$
?
CLEAR COUNTER C
YES
200
195
COUNT UP COUNTER C
202
NO
$C \geqq C_0$
?
YES
XFAILS←0
204
192-INHIBIT BA CONTROL
RETURN

Fig. 13

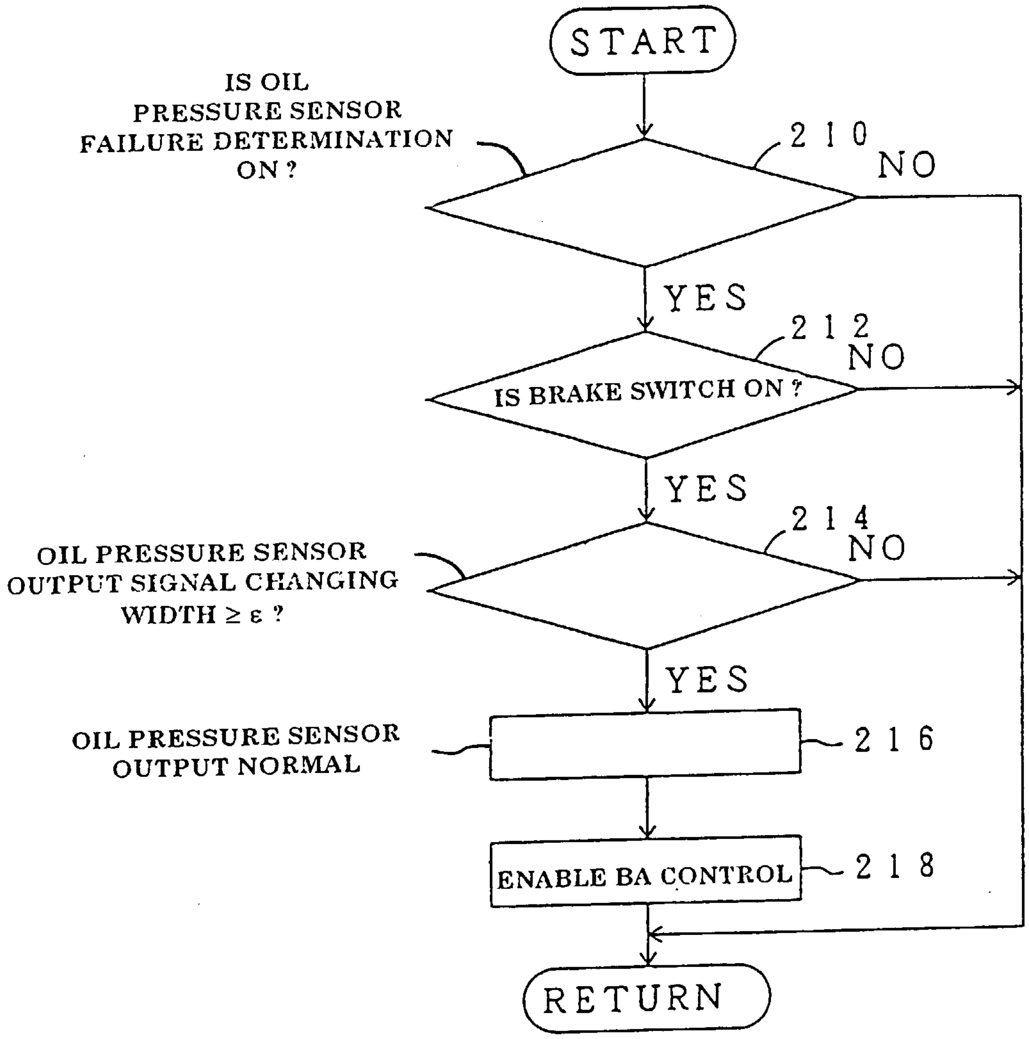
START
IS OIL PRESSURE SENSOR FAILURE DETERMINATION ON ?
210
NO
YES
IS BRAKE SWITCH ON ?
212
NO
YES
OIL PRESSURE SENSOR OUTPUT SIGNAL CHANGING WIDTH ≥ ε ?
214
NO
YES
OIL PRESSURE SENSOR OUTPUT NORMAL
216
ENABLE BA CONTROL
218
RETURN

Fig. 14

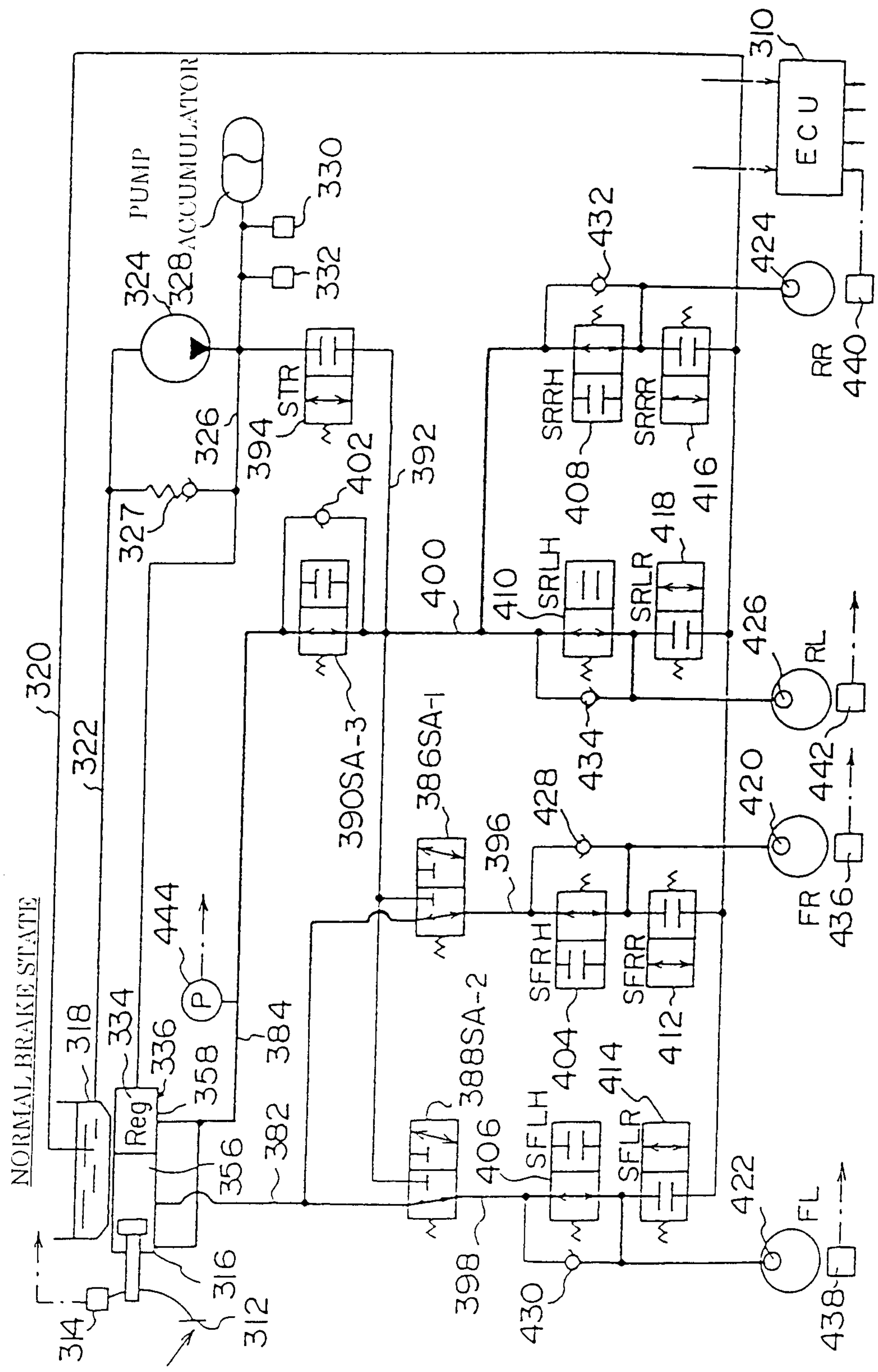
NORMAL BRAKE STATE
PUMP
ACCUMULATOR
ECU
Reg
P
STR
SA-1
SA-2
SA-3
SFLH
SFLR
SFRH
SFRR
SRLH
SRLR
SRRH
SRRR
FL
FR
RL
RR
310
312
314
316
318
320
322
324
326
327
328
330
332
334
336
356
358
382
384
386
388
390
392
394
396
398
400
402
404
406
408
410
412
414
416
418
420
422
424
426
428
430
432
434
436
438
440
442
444

Fig. 15

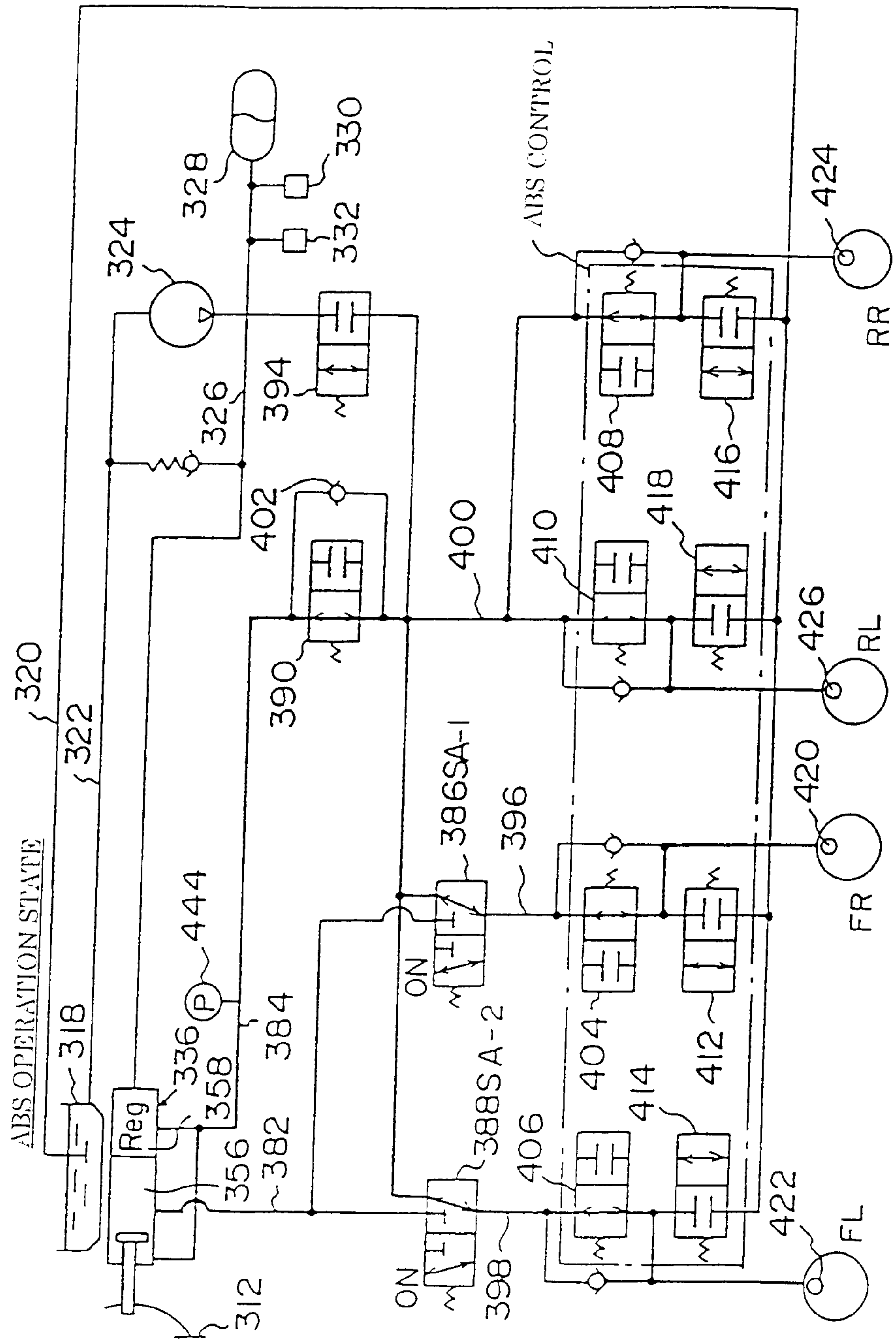
ABS OPERATION STATE
ABS CONTROL
320
322
318
324
326
328
330
332
336
358
356
382
384
444
P
Reg
312
386SA-1
388SA-2
ON
ON
390
394
396
398
400
402
404
406
408
410
412
414
416
418
420
422
424
426
FR
FL
RR
RL

**Fig. 16**

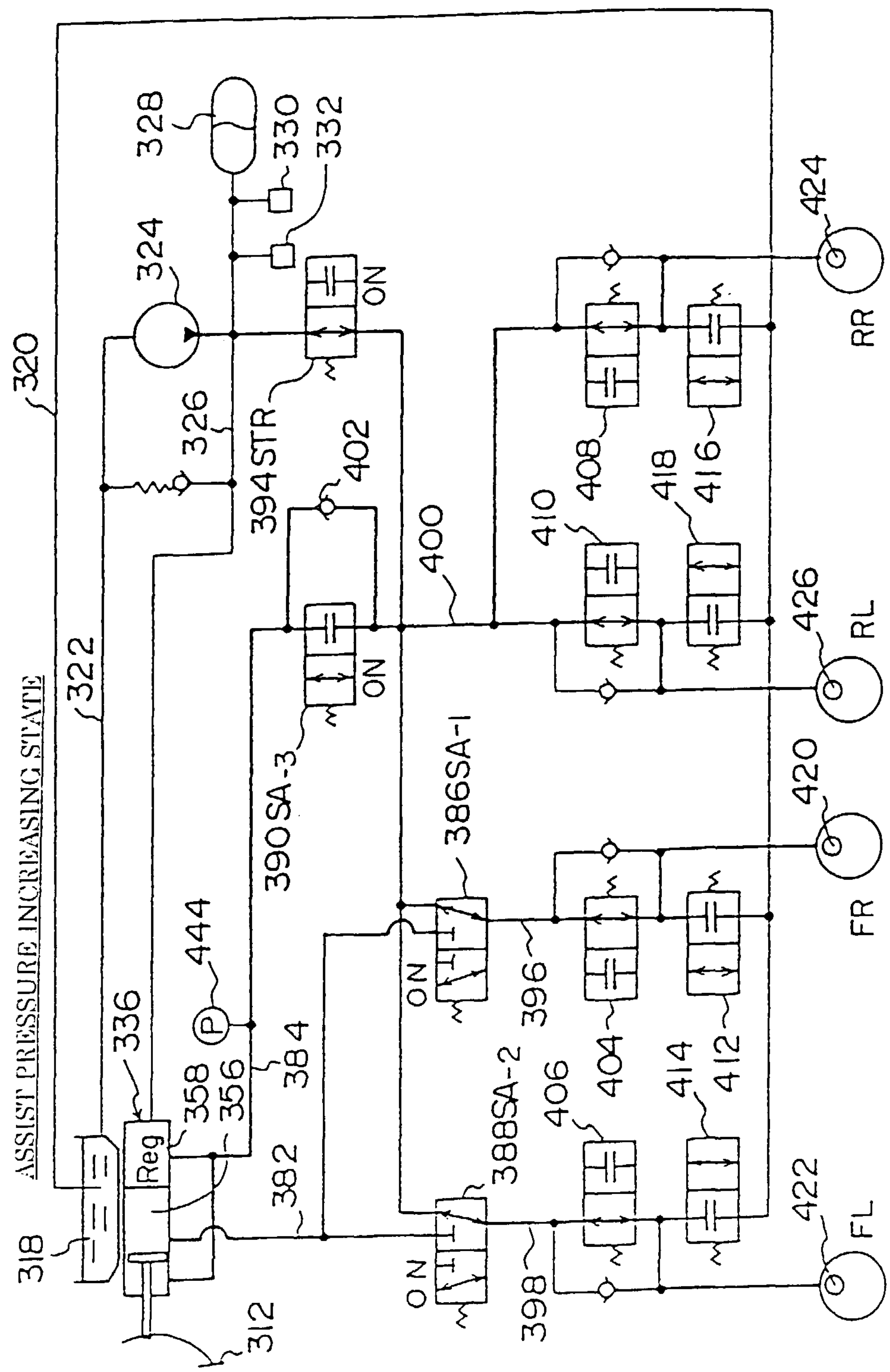
ASSIST PRESSURE INCREASING STATE
320
322
324
326
328
330
332
318
336
Reg
358
356
312
382
384
444
P
394STR
402
400
390SA-3
386SA-1
388SA-2
ON
396
398
404
406
408
410
412
414
416
418
420
422
424
426
FR
FL
RR
RL

**Fig. 17**

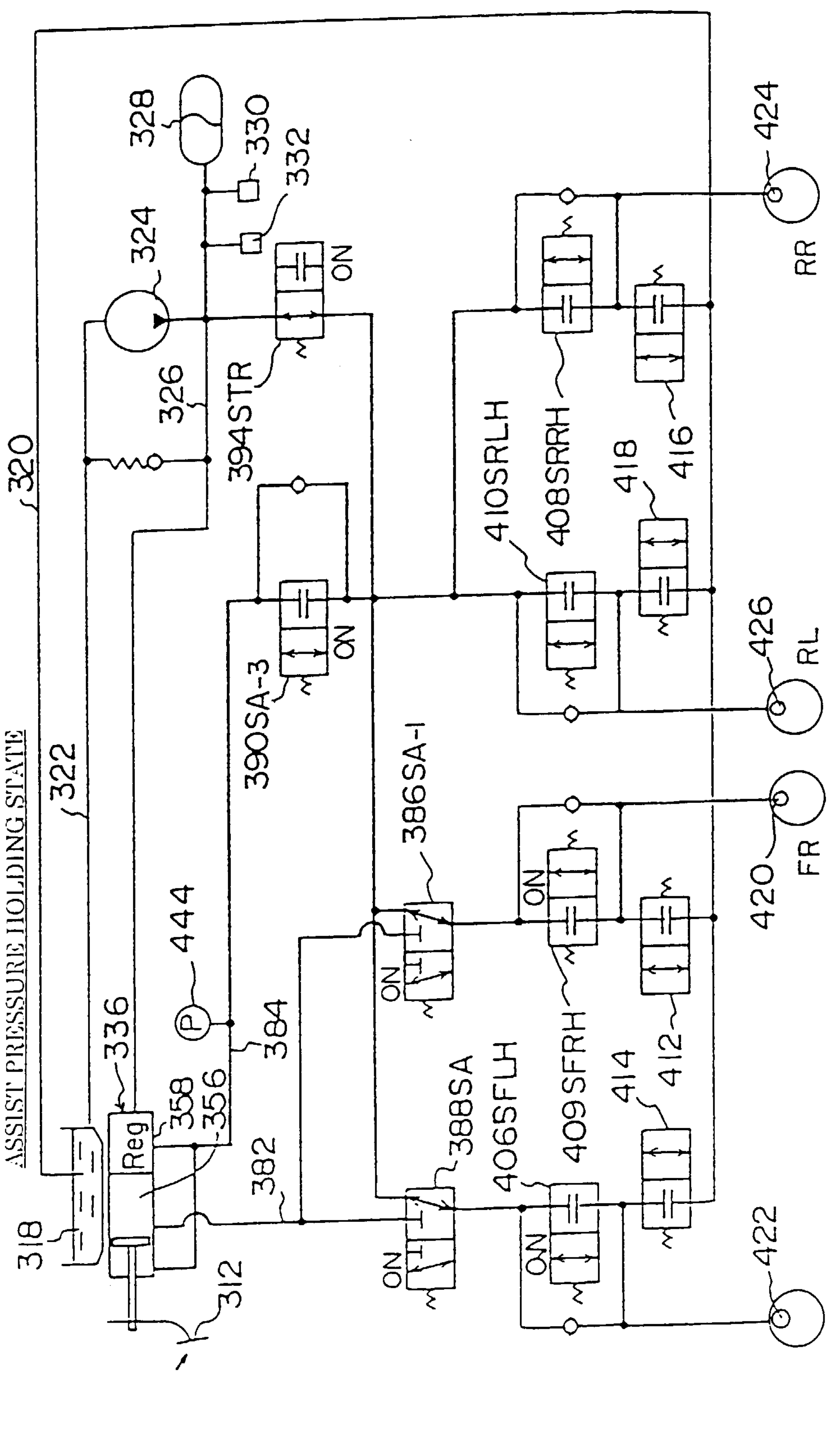
ASSIST PRESSURE HOLDING STATE
320
322
318
336
Reg
358
356
312
382
384
P
444
326
324
328
330
332
394STR
ON
390SA-3
386SA-1
388SA
406SFLH
409SFRH
414
412
410SRLH
408SRRH
418
416
420
FR
422
424
RR
426
RL

Fig. 18

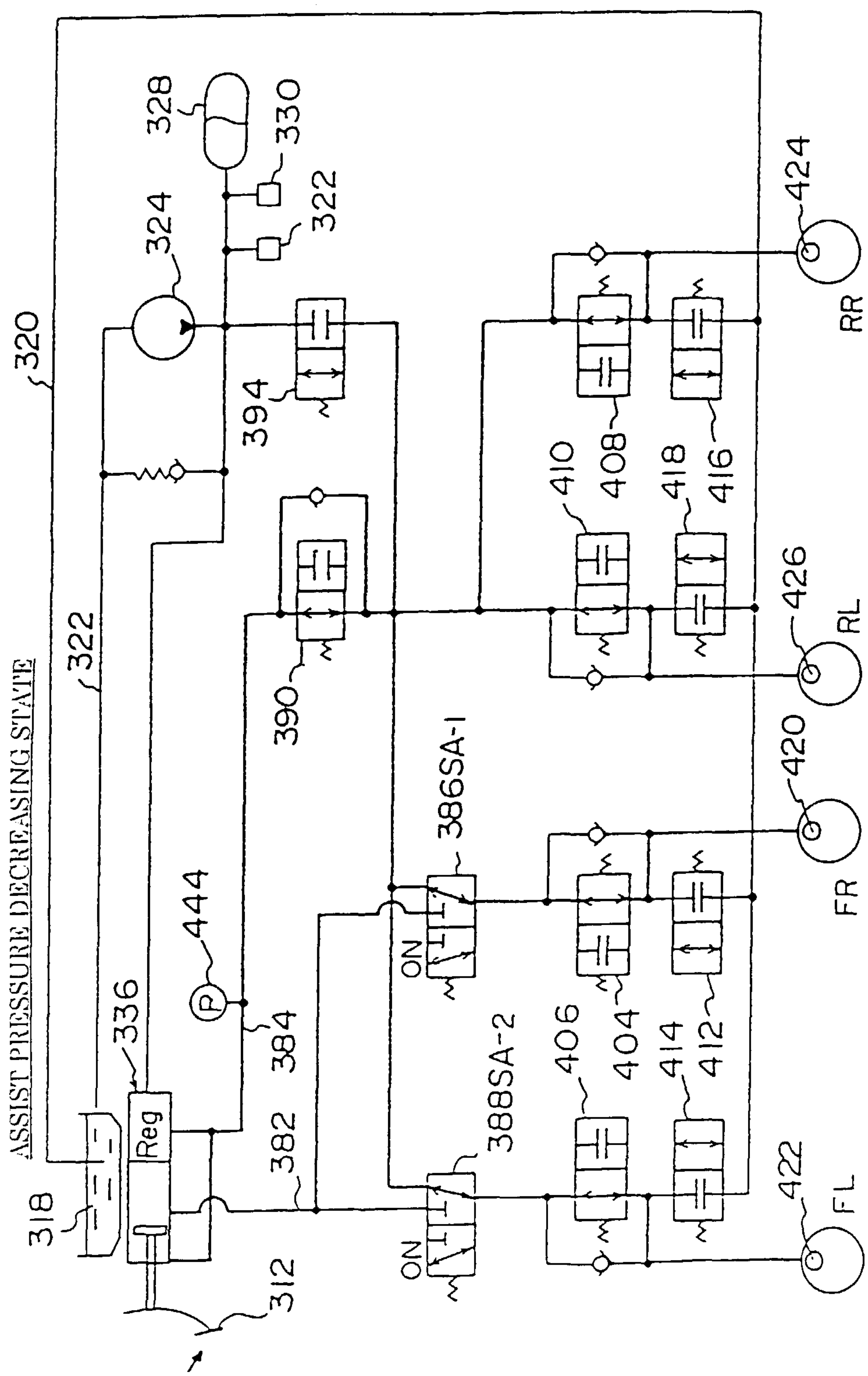
ASSIST PRESSURE DECREASING STATE
318
336
Reg
312
320
322
324
328
330
322
394
390
P
444
384
382
388SA-2
386SA-1
ON
ON
406
404
414
412
410
408
418
416
420
422
424
426
FL
FR
RL
RR

Fig. 19

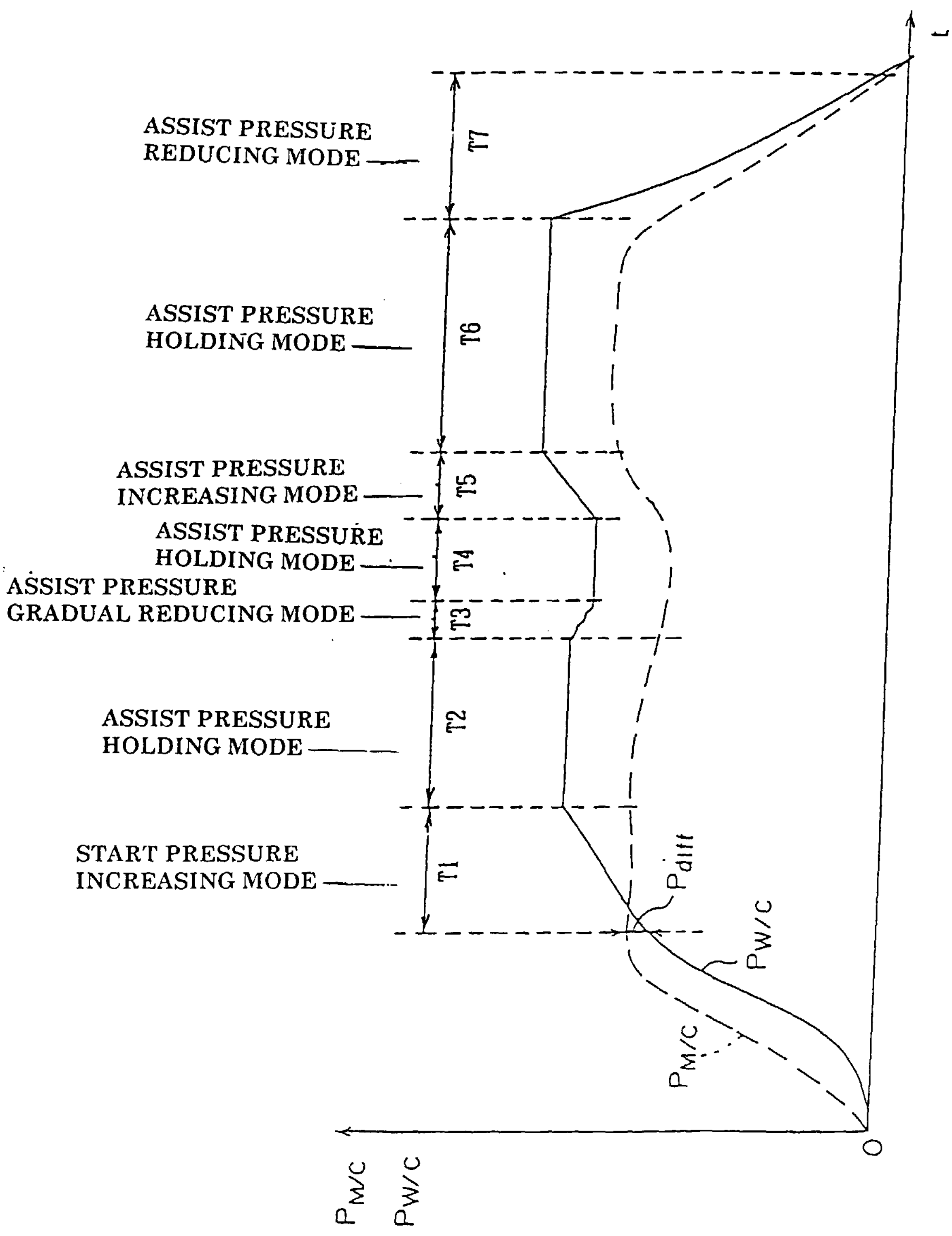
ASSIST PRESSURE
REDUCING MODE
T7
ASSIST PRESSURE
HOLDING MODE
T6
ASSIST PRESSURE
INCREASING MODE
T5
ASSIST PRESSURE
HOLDING MODE
T4
ASSIST PRESSURE
GRADUAL REDUCING MODE
T3
ASSIST PRESSURE
HOLDING MODE
T2
START PRESSURE
INCREASING MODE
T1
t
Pdiff
PW/C
PM/C
O
PM/C
PW/C

Fig. 20

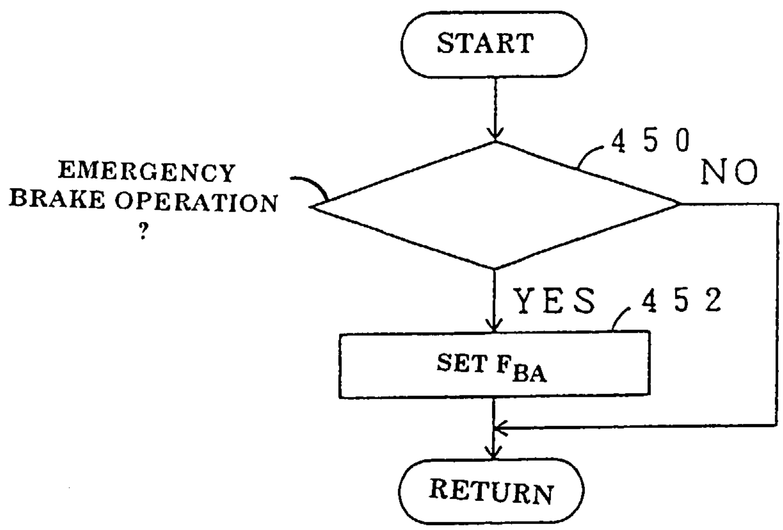
START
EMERGENCY BRAKE OPERATION ?
450
NO
YES
452
SET $F_{BA}$
RETURN

Fig. 21

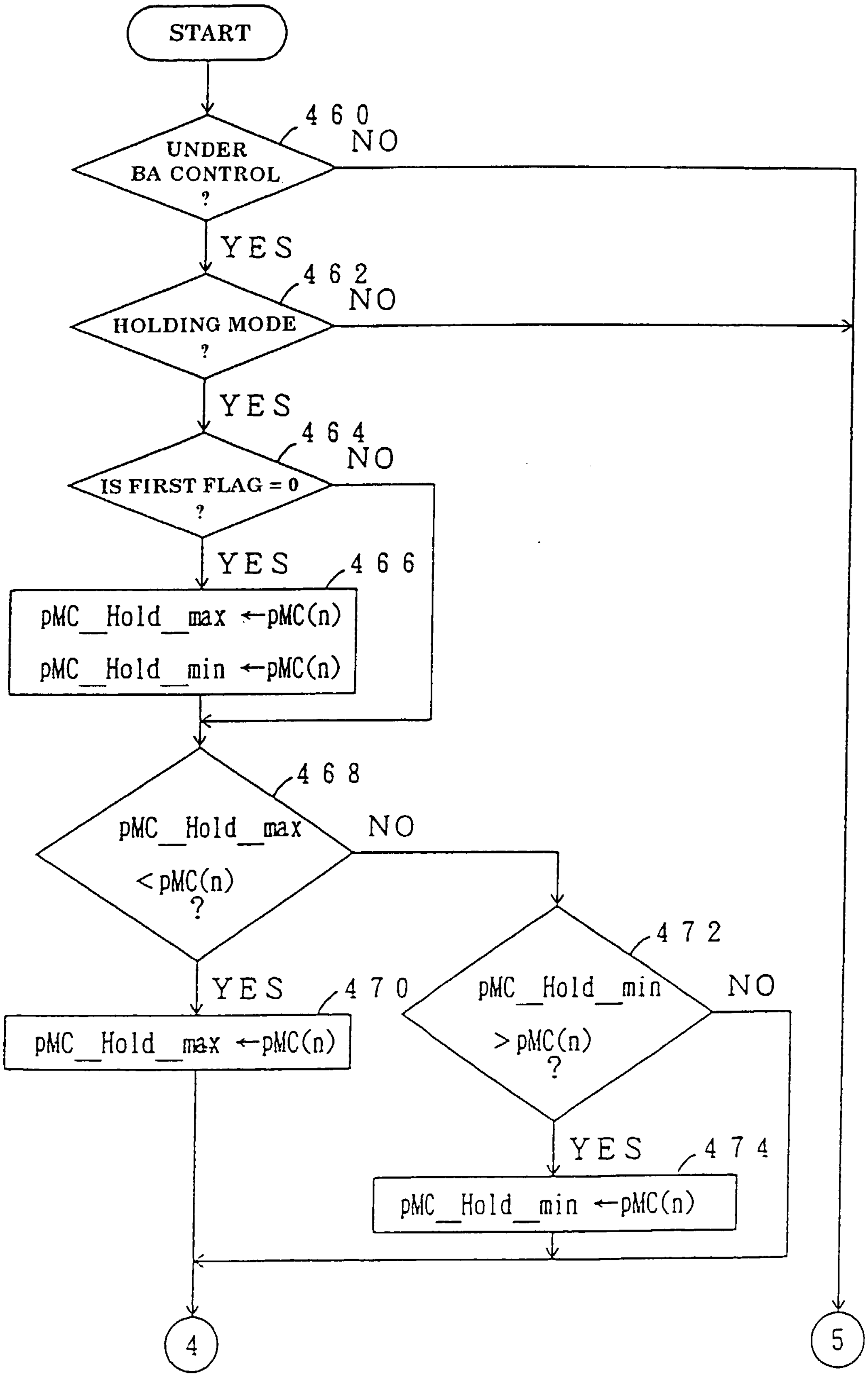
START
460
UNDER BA CONTROL ?
NO
YES
462
HOLDING MODE ?
NO
YES
464
IS FIRST FLAG = 0 ?
NO
YES
466
pMC_Hold_max ←pMC(n)
pMC_Hold_min ←pMC(n)
468
pMC_Hold_max < pMC(n) ?
NO
YES
470
pMC_Hold_max ←pMC(n)
472
pMC_Hold_min > pMC(n) ?
NO
YES
474
pMC_Hold_min ←pMC(n)
4
5

Fig. 22

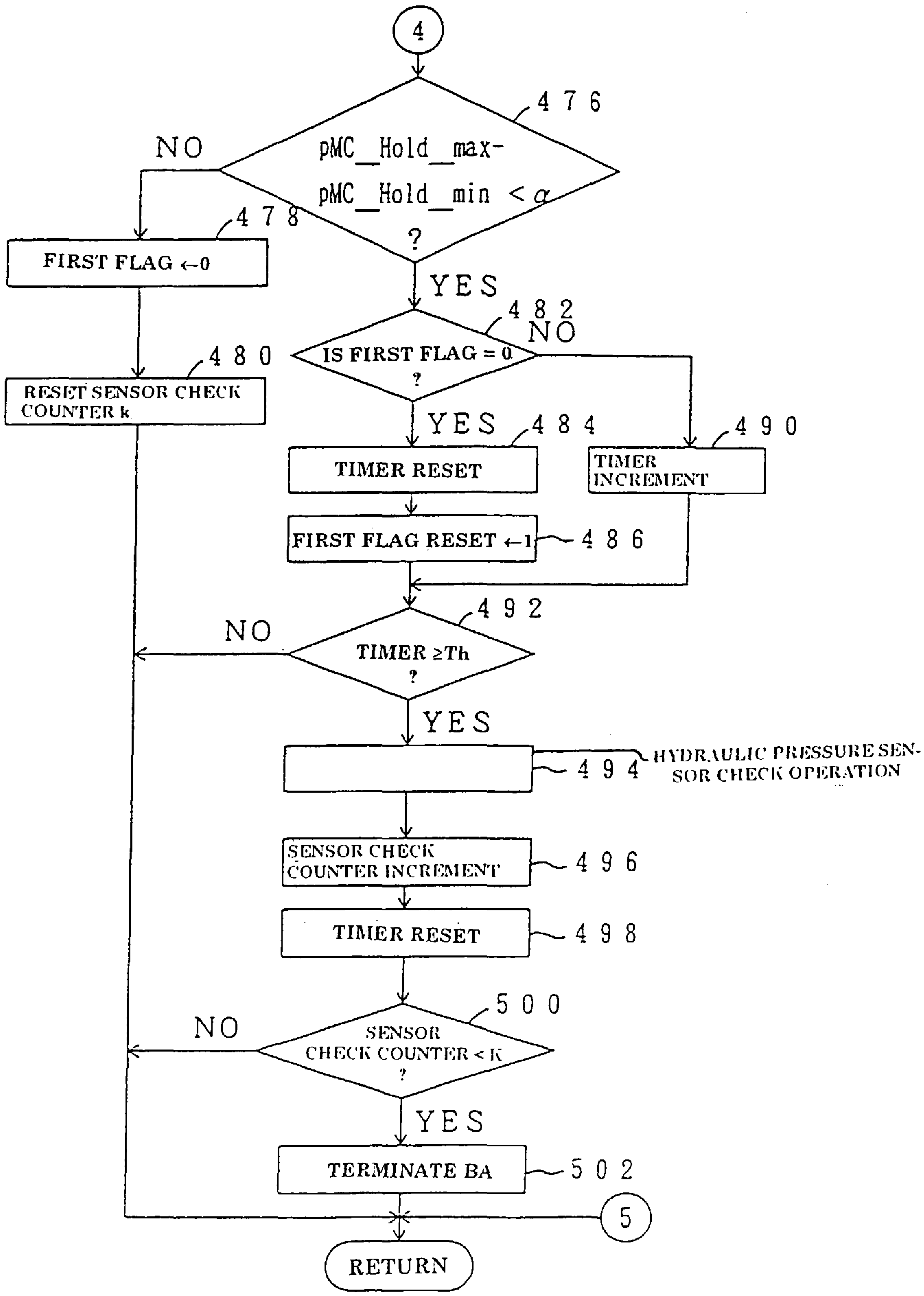
4
476
pMC_Hold_max-
pMC_Hold_min < α
?
NO
YES
478
FIRST FLAG ←0
482
IS FIRST FLAG = 0
?
NO
YES
480
RESET SENSOR CHECK COUNTER k
484
TIMER RESET
490
TIMER INCREMENT
FIRST FLAG RESET ←1
486
492
TIMER ≥Th
?
NO
YES
494
HYDRAULIC PRESSURE SENSOR CHECK OPERATION
SENSOR CHECK COUNTER INCREMENT
496
TIMER RESET
498
500
SENSOR CHECK COUNTER < K
?
NO
YES
TERMINATE BA
502
5
RETURN

Fig. 23

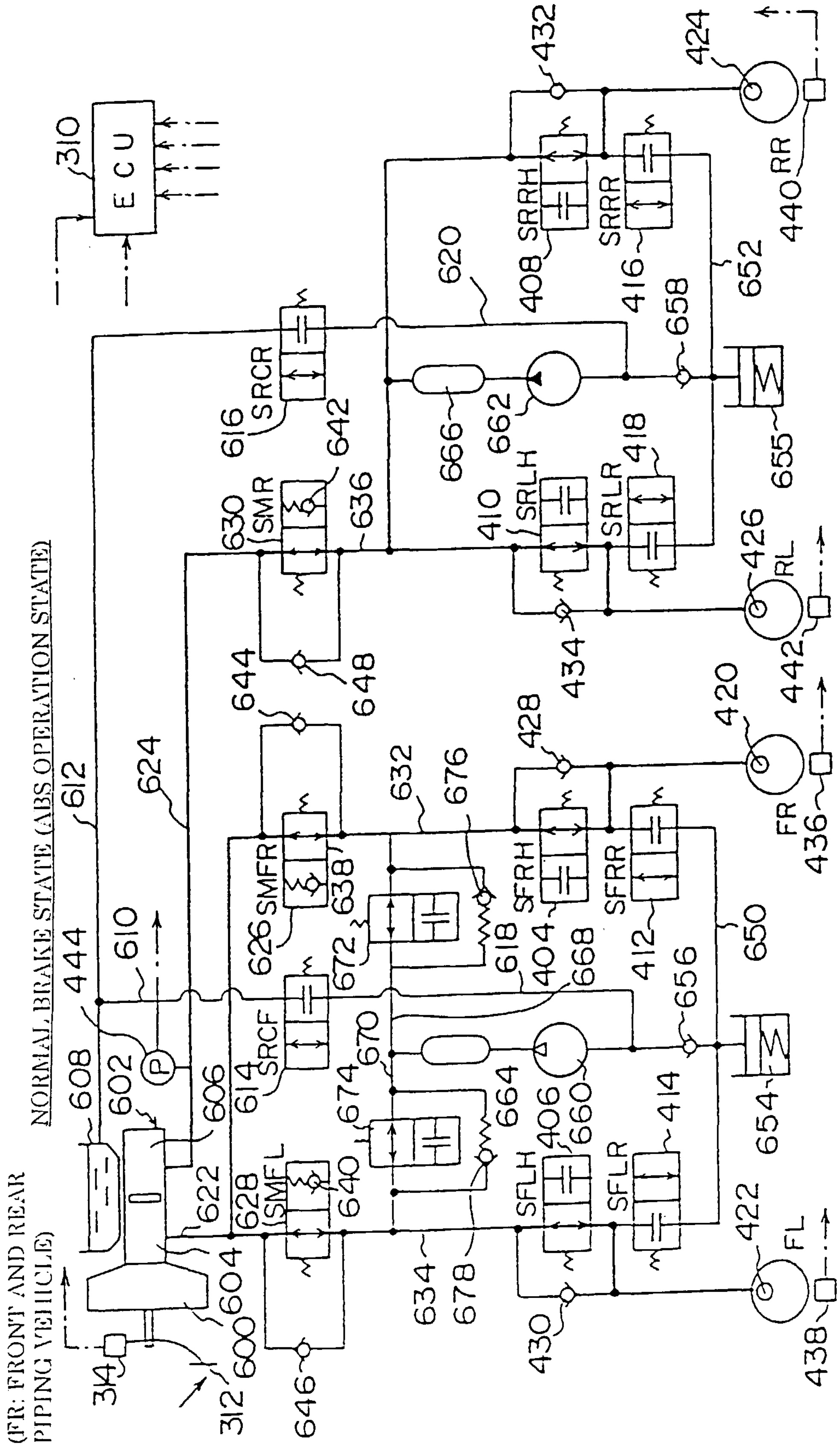
NORMAL BRAKE STATE (ABS OPERATION STATE)
(FR: FRONT AND REAR PIPING VEHICLE)
E C U
310
314
312
600
602
604
606
608
P
444
610
612
614
SRCF
616
SRCR
618
620
622
624
626
SMFR
628
SMFL
630
SMR
632
634
636
638
640
642
644
646
648
650
652
654
655
656
658
660
662
664
666
668
670
672
674
676
678
404
SFRH
406
SFLH
408
SRRH
410
SRLH
412
SFRR
414
SFLR
416
SRRR
418
SRLR
420
422
424
426
428
430
432
434
436
438
440
442
FR
FL
RR
RL

Fig. 24

(FR: FRONT AND REAR PIPING VEHICLE) ASSIST PRESSURE INCREASING MODE

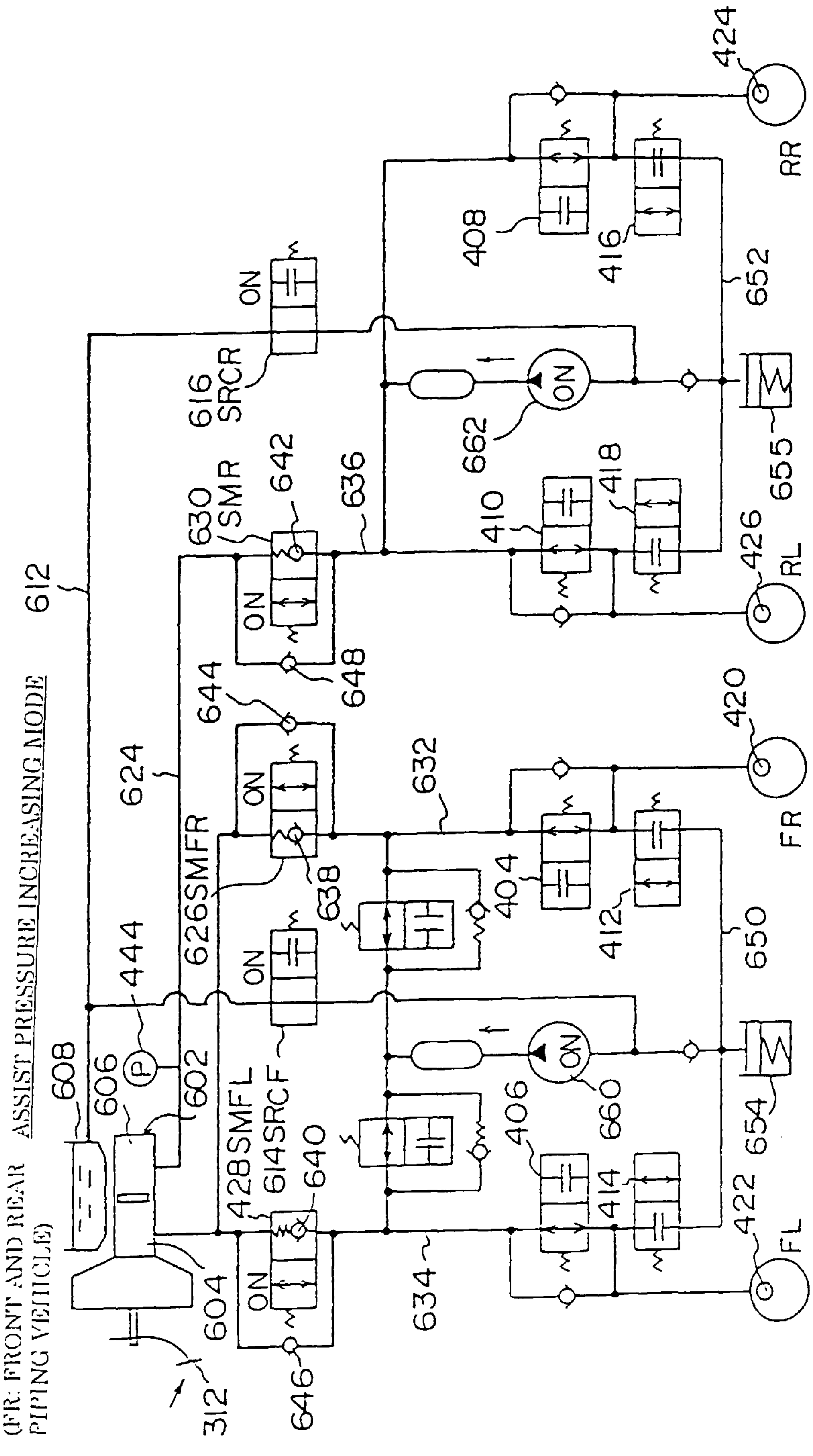

**Fig. 25**

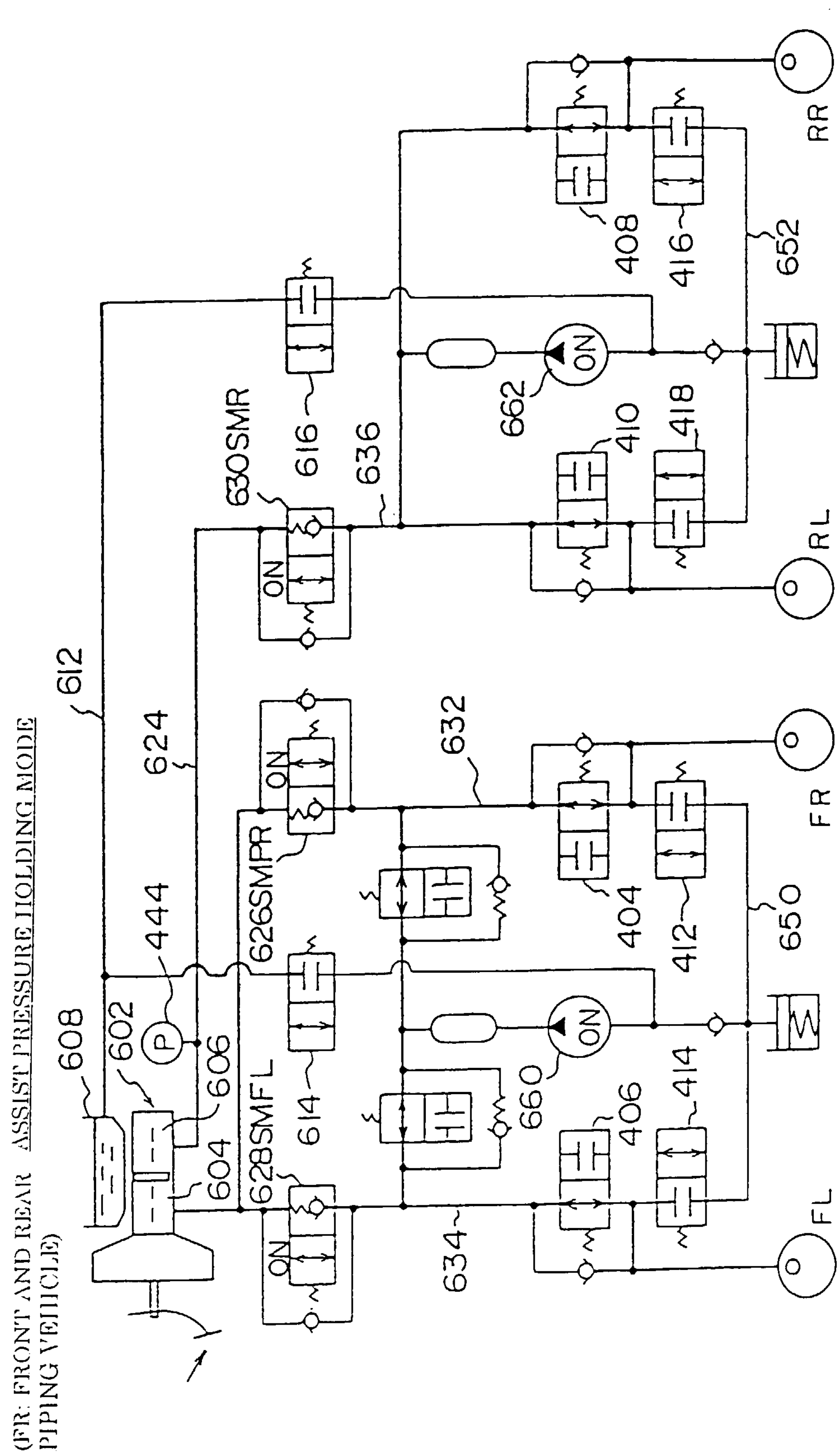
(FR: FRONT AND REAR PIPING VEHICLE)
ASSIST PRESSURE HOLDING MODE
608
602
604
606
444
P
612
624
614
616
628SMFL
626SMPR
630SMR
632
634
636
ON
660
662
404
406
408
410
412
414
416
418
650
652
FL
FR
RL
RR

Fig. 26

(FR: FRONT AND REAR PIPING VEHICLE) ASSIST PRESSURE INCREASING MODE

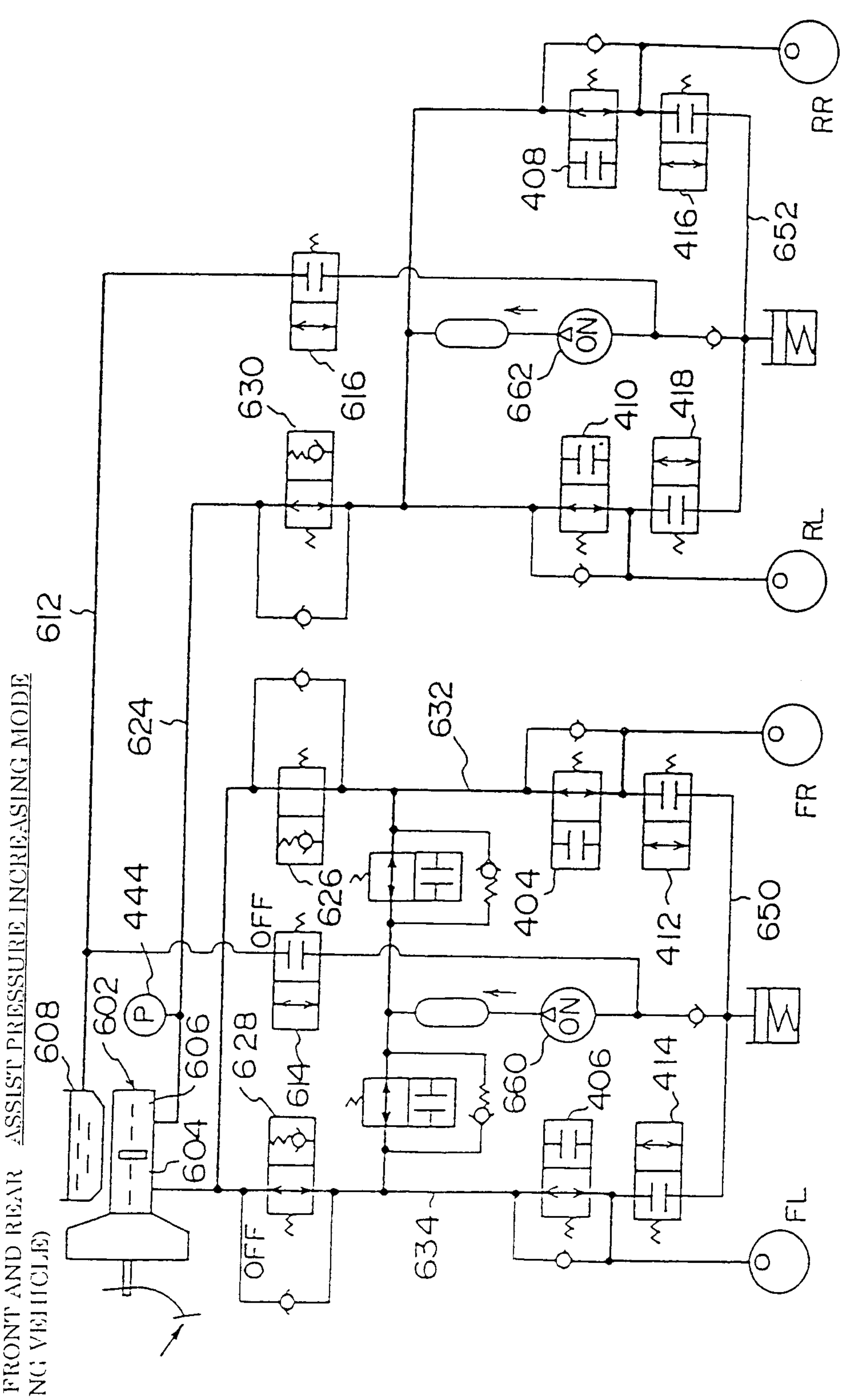

Fig. 27

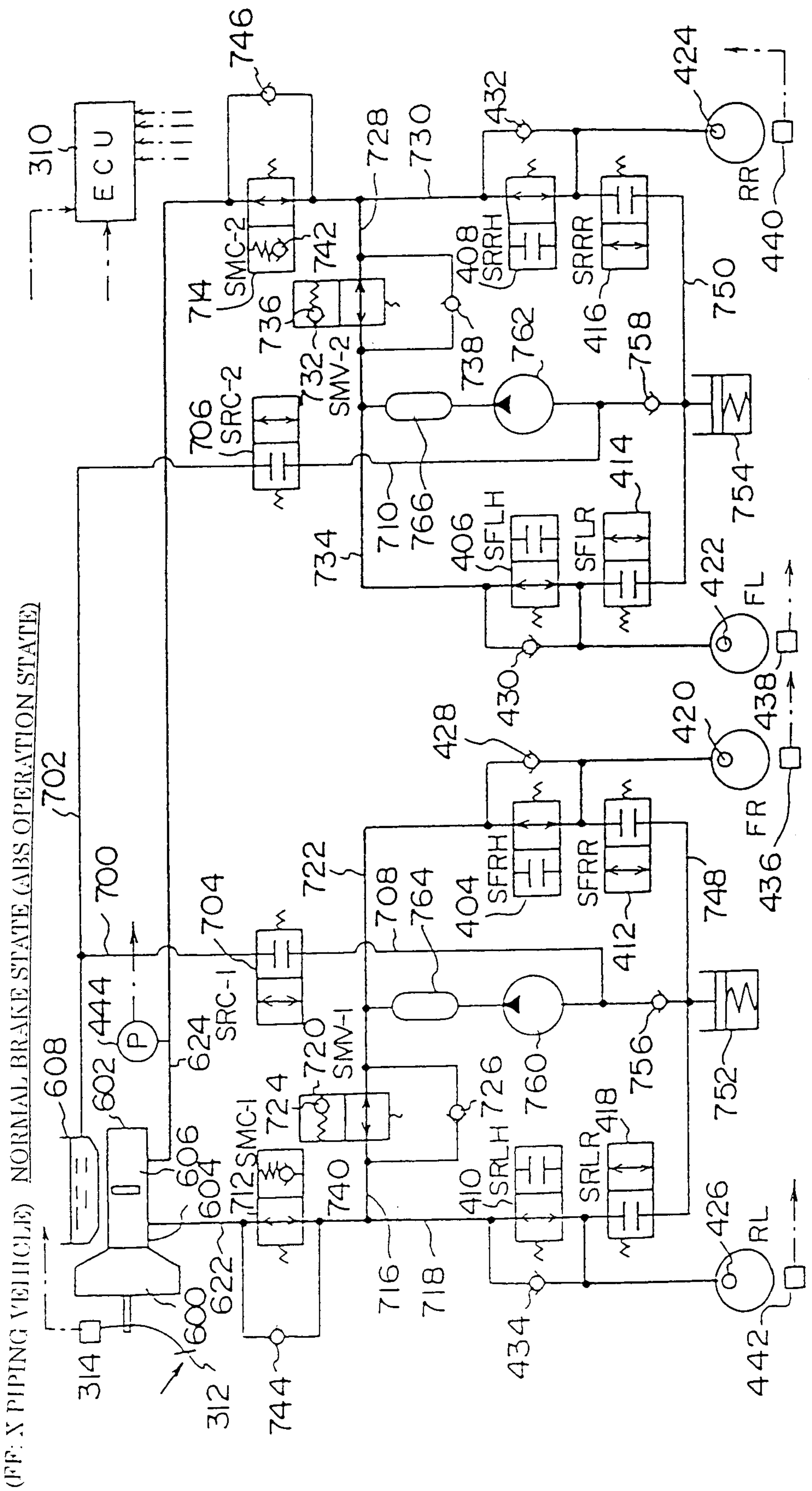
(FF: X PIPING VEHICLE) NORMAL BRAKE STATE (ABS OPERATION STATE)
ECU
310
SMC-1
SMC-2
SRC-1
SRC-2
SMV-1
SMV-2
SFRH
SFRR
SFLH
SFLR
SRLH
SRLR
SRRH
SRRR
P
FR
FL
RL
RR
312
314
404
406
408
410
412
414
416
418
420
422
424
426
428
430
432
434
436
438
440
442
444
600
602
604
606
608
622
624
700
702
704
706
708
710
712
714
716
718
720
722
724
726
728
730
732
734
736
738
740
742
744
746
748
750
752
754
756
758
760
762
764
766

Fig. 28

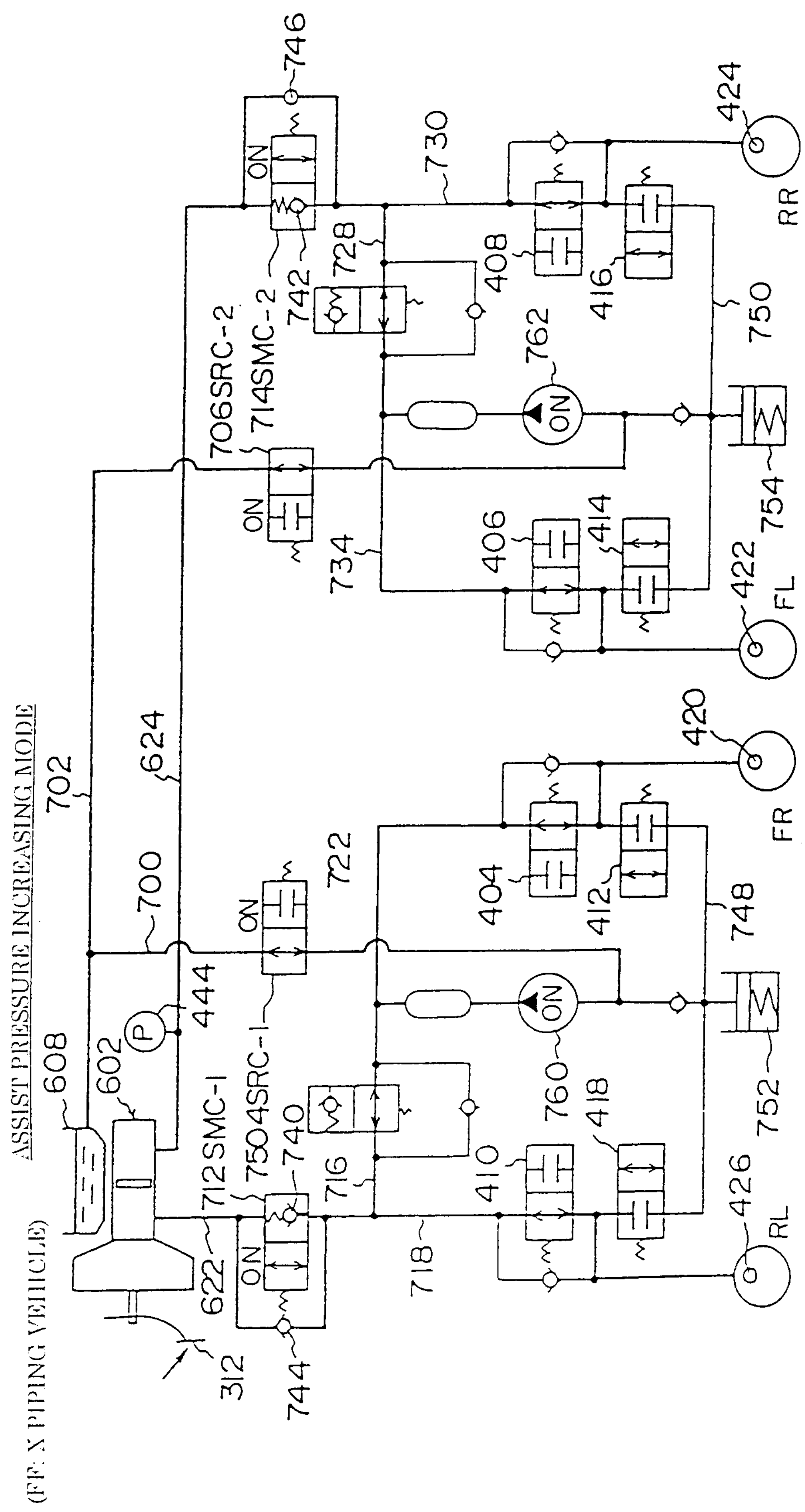
(FF: X PIPING VEHICLE)
ASSIST PRESSURE INCREASING MODE
608
602
P
444
700
702
624
722
ON
712SMC-1
7504SRC-1
740
716
622
ON
744
312
718
410
418
760
752
426
RL
404
412
748
ON
420
FR
706SRC-2
714SMC-2
742
728
ON
746
730
734
ON
406
414
422
FL
762
ON
754
408
416
750
424
RR

Fig. 29

(FF: X PIPING VEHICLE) ASSIST PRESSURE HOLDING MODE

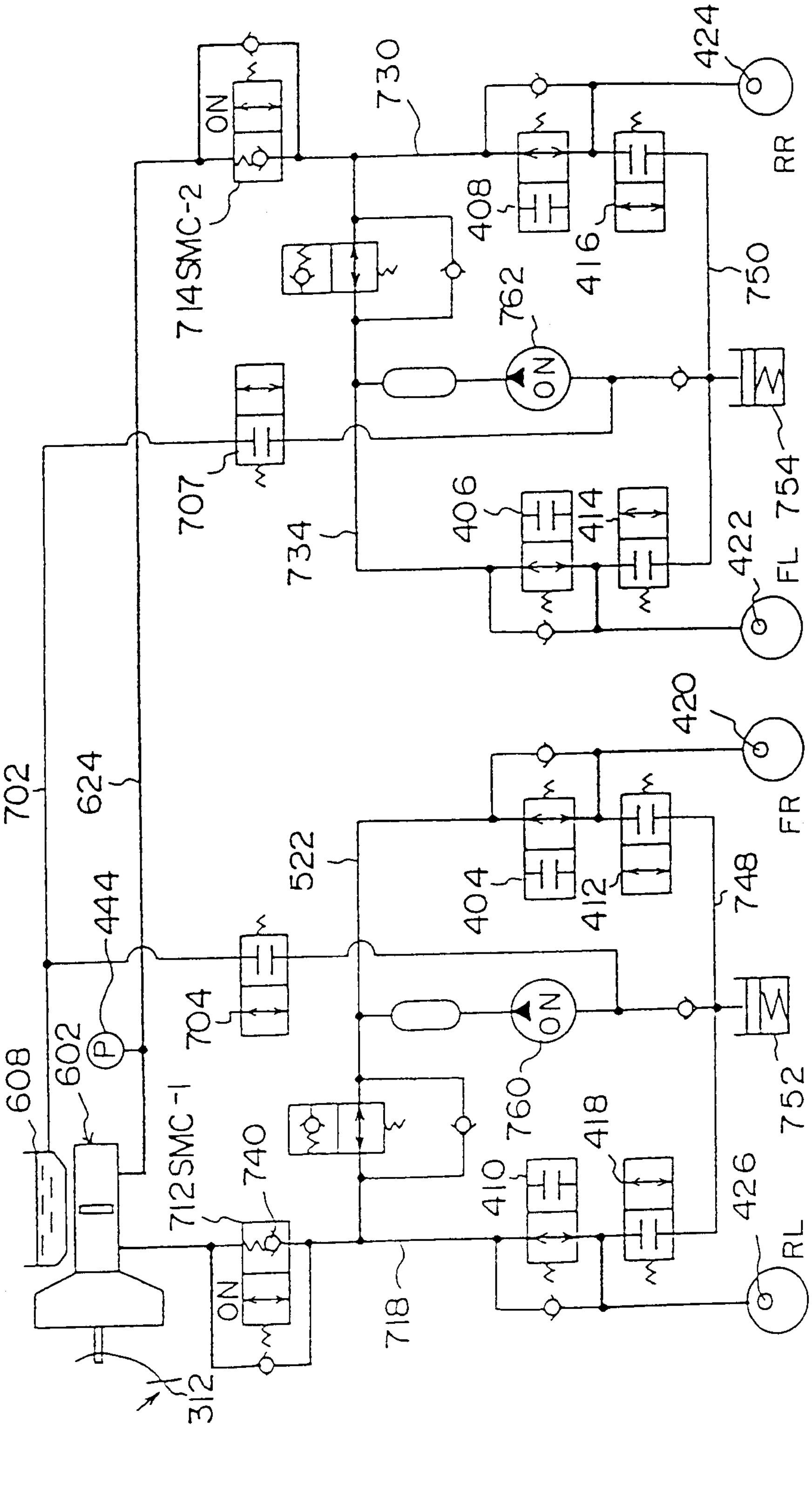

Fig. 30

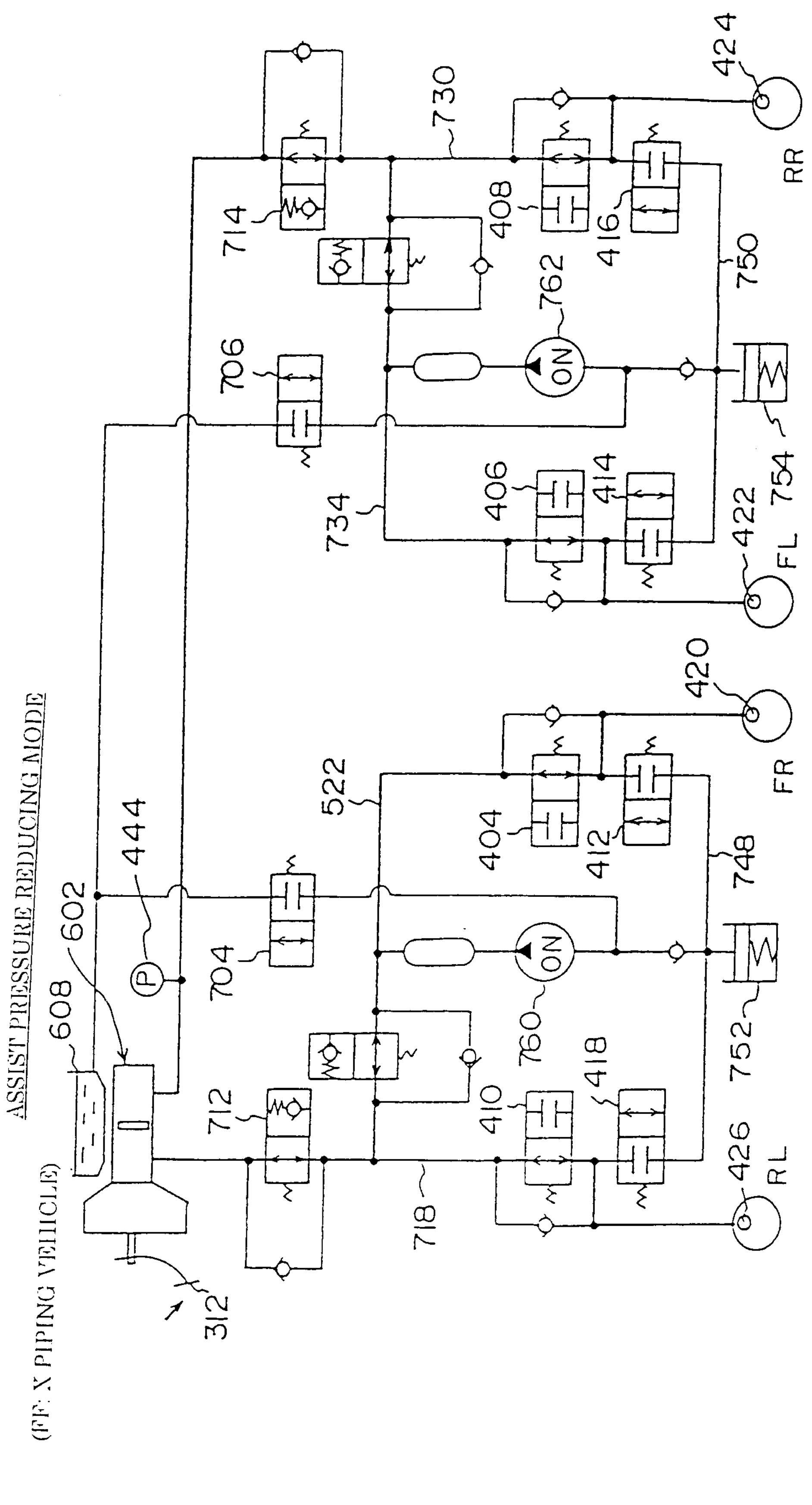
(FF: X PIPING VEHICLE)
ASSIST PRESSURE REDUCING MODE
608
602
444
P
312
712
704
714
706
718
522
734
730
410
418
404
412
406
414
408
416
760
762
ON
ON
752
754
748
750
426
RL
420
FR
422
FL
424
RR

Fig. 31

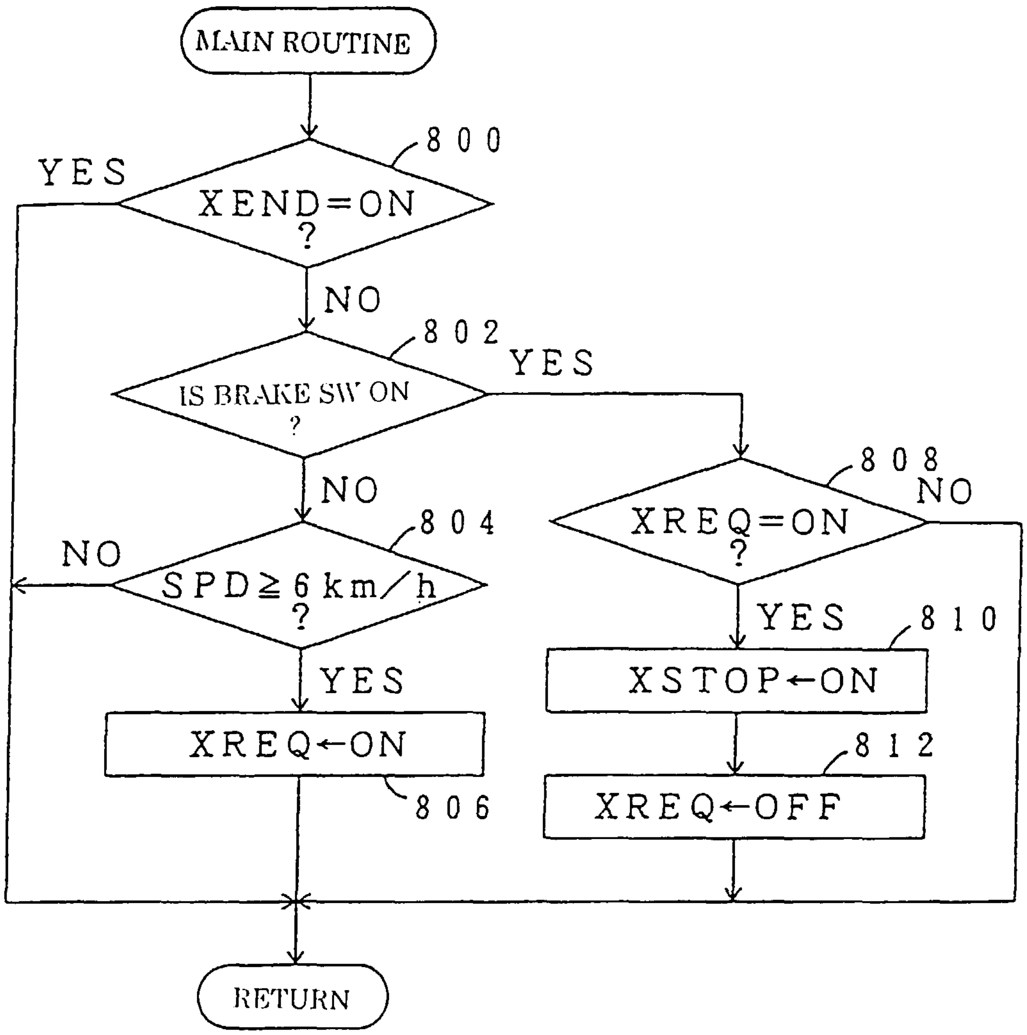
MAIN ROUTINE
800
XEND=ON ?
YES
NO
802
IS BRAKE SW ON ?
YES
NO
804
SPD≧6 km/h ?
NO
YES
XREQ←ON
806
808
XREQ=ON ?
NO
YES
810
XSTOP←ON
812
XREQ←OFF
RETURN

Fig. 32

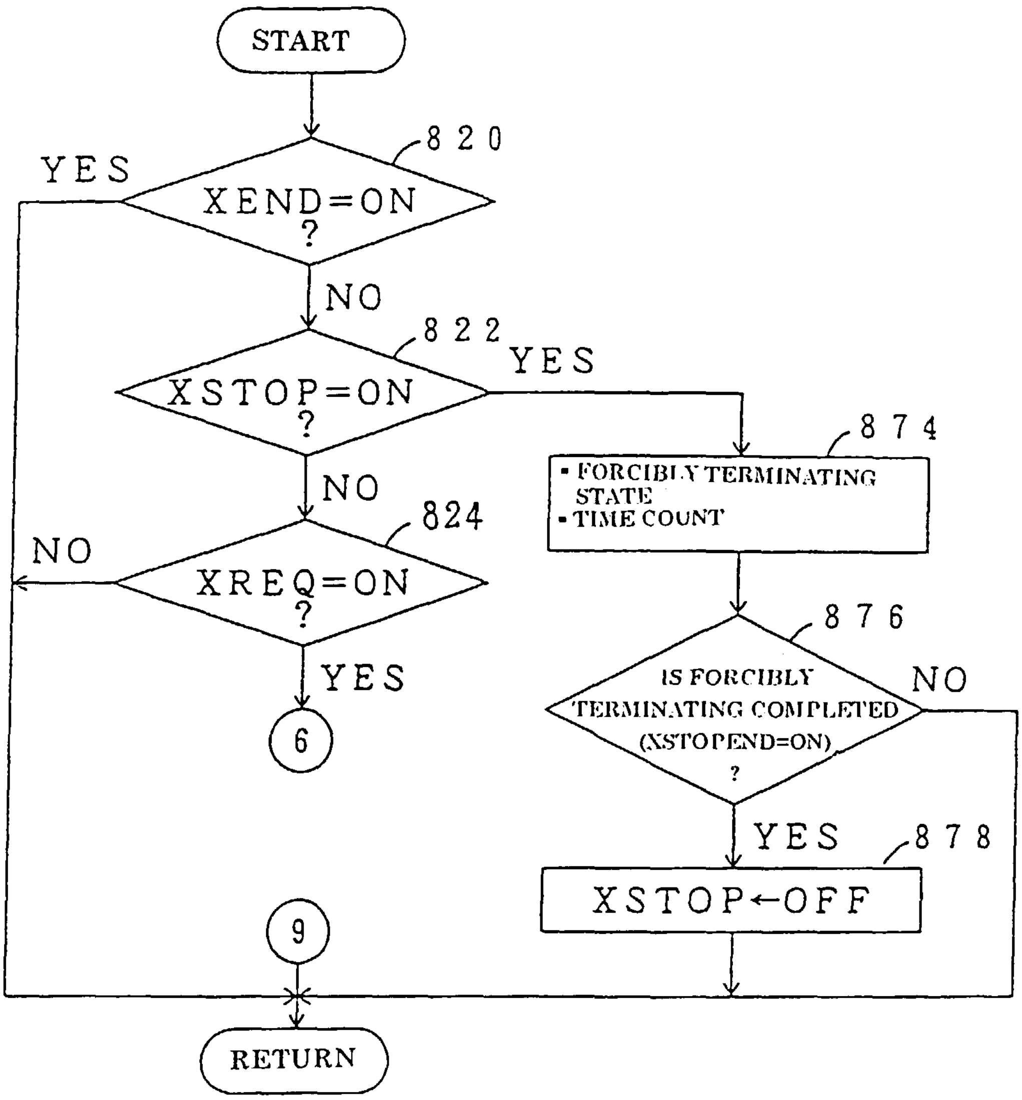
START
820
XEND=ON ?
YES
NO
822
XSTOP=ON ?
YES
NO
824
XREQ=ON ?
NO
YES
6
874
• FORCIBLY TERMINATING STATE
• TIME COUNT
876
IS FORCIBLY TERMINATING COMPLETED (XSTOPEND=ON) ?
NO
YES
878
XSTOP←OFF
9
RETURN

Fig. 33

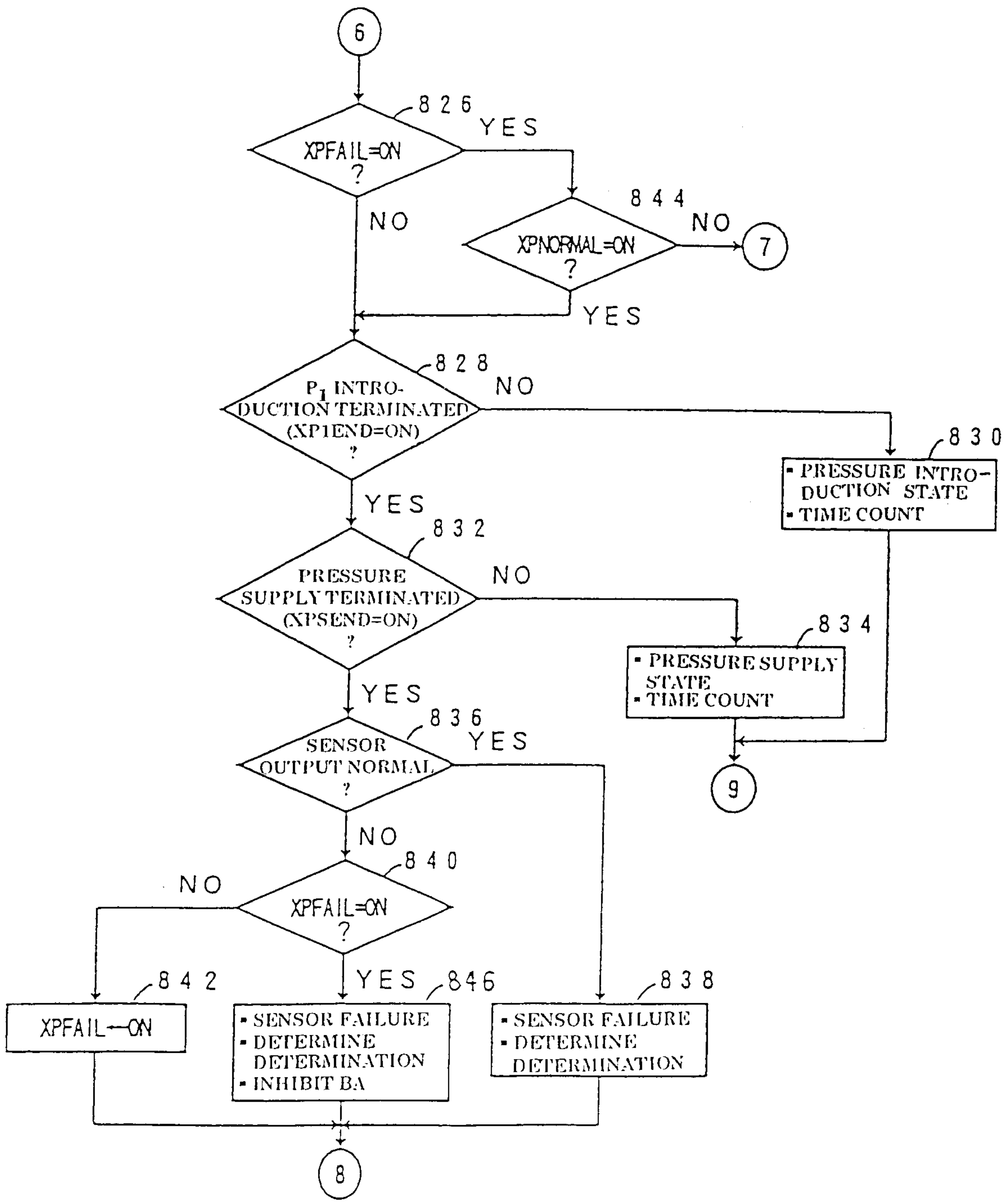
6
826
XPFAIL=ON ?
YES
NO
844
XPNORMAL=ON ?
NO
7
YES
828
P1 INTRO-DUCTION TERMINATED (XP1END=ON) ?
NO
830
• PRESSURE INTRO-DUCTION STATE
• TIME COUNT
YES
832
PRESSURE SUPPLY TERMINATED (XPSEND=ON) ?
NO
834
• PRESSURE SUPPLY STATE
• TIME COUNT
9
YES
836
SENSOR OUTPUT NORMAL ?
YES
NO
840
XPFAIL=ON ?
NO
YES
842
XPFAIL←ON
846
• SENSOR FAILURE
• DETERMINE DETERMINATION
• INHIBIT BA
838
• SENSOR FAILURE
• DETERMINE DETERMINATION
8

Fig. 34

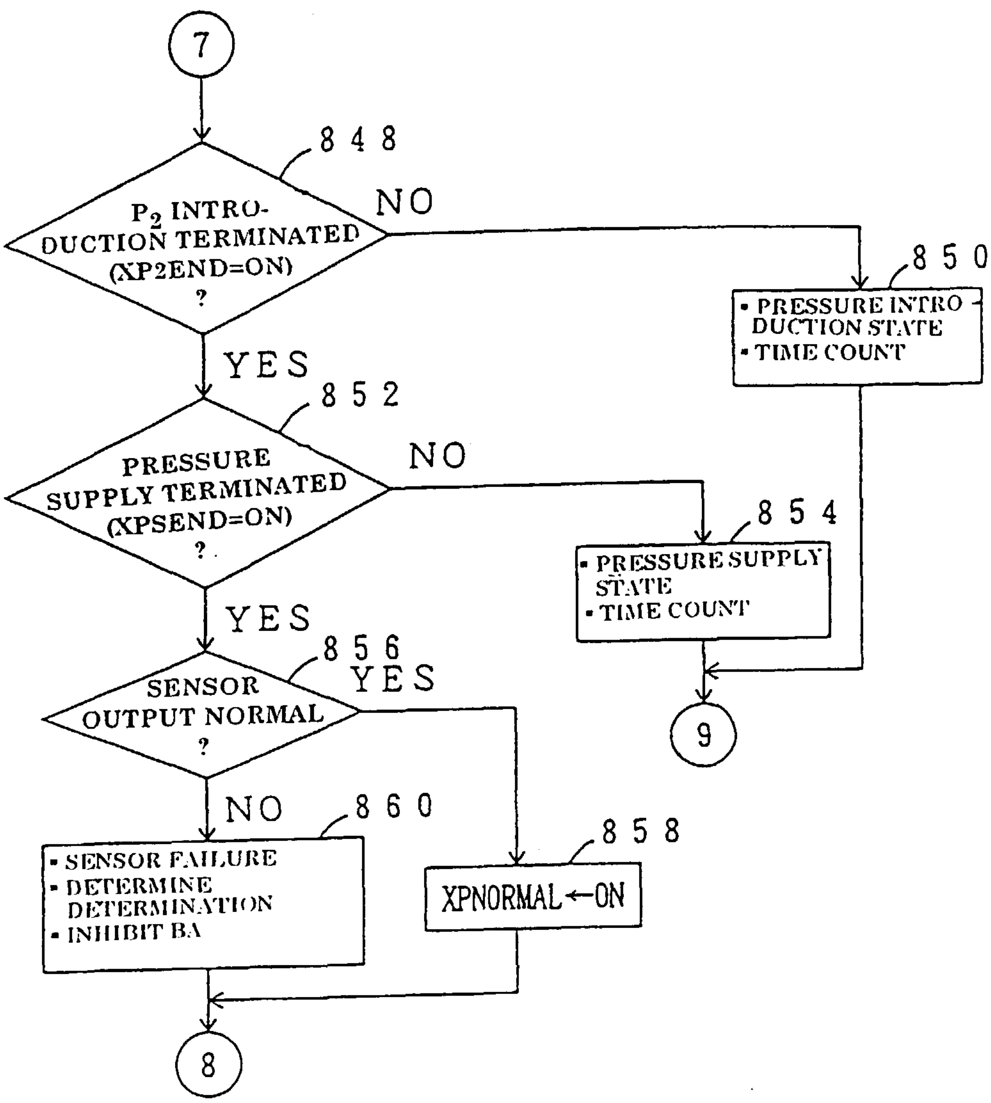
7
848
P2 INTRO-DUCTION TERMINATED (XP2END=ON) ?
NO
YES
850
• PRESSURE INTRO-DUCTION STATE
• TIME COUNT
852
PRESSURE SUPPLY TERMINATED (XPSEND=ON) ?
NO
YES
854
• PRESSURE SUPPLY STATE
• TIME COUNT
9
856
SENSOR OUTPUT NORMAL ?
YES
NO
860
• SENSOR FAILURE
• DETERMINE DETERMINATION
• INHIBIT BA
858
XPNORMAL←ON
8

Fig. 35

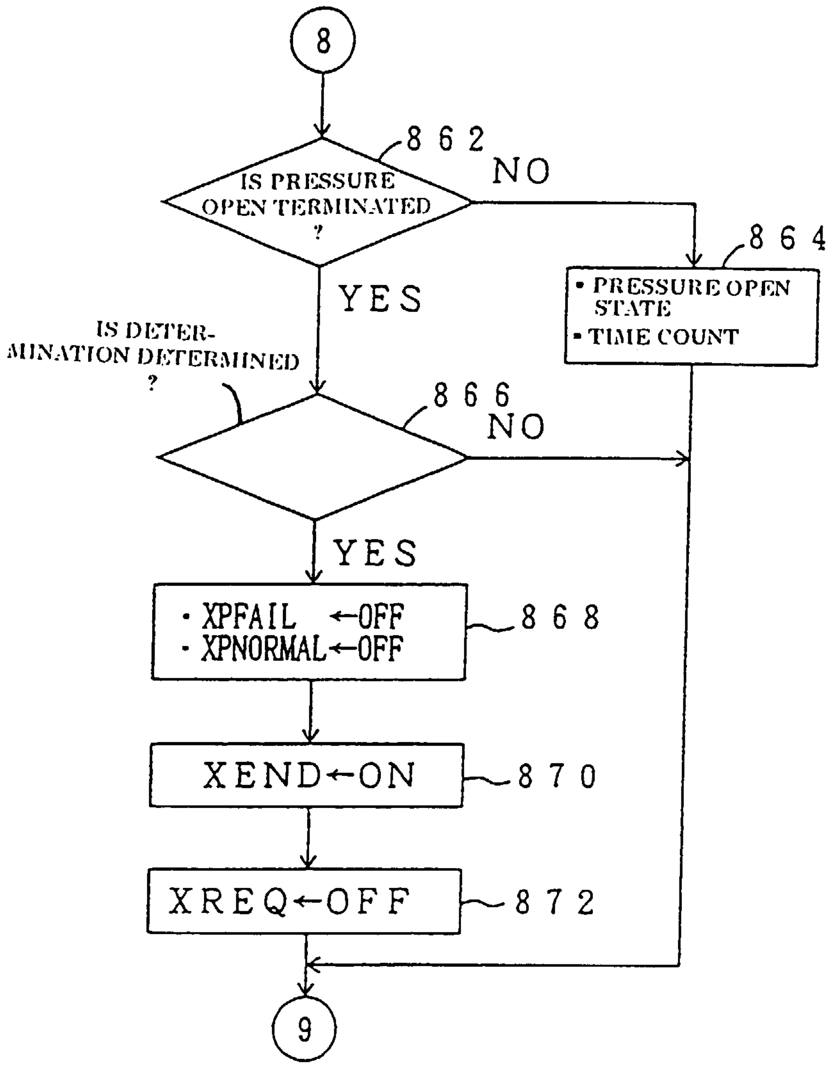
8
862
IS PRESSURE OPEN TERMINATED ?
NO
YES
864
• PRESSURE OPEN STATE
• TIME COUNT
IS DETER-MINATION DETERMINED ?
866
NO
YES
· XPFAIL ←OFF
· XPNORMAL←OFF
868
XEND←ON
870
XREQ←OFF
872
9

Fig. 36

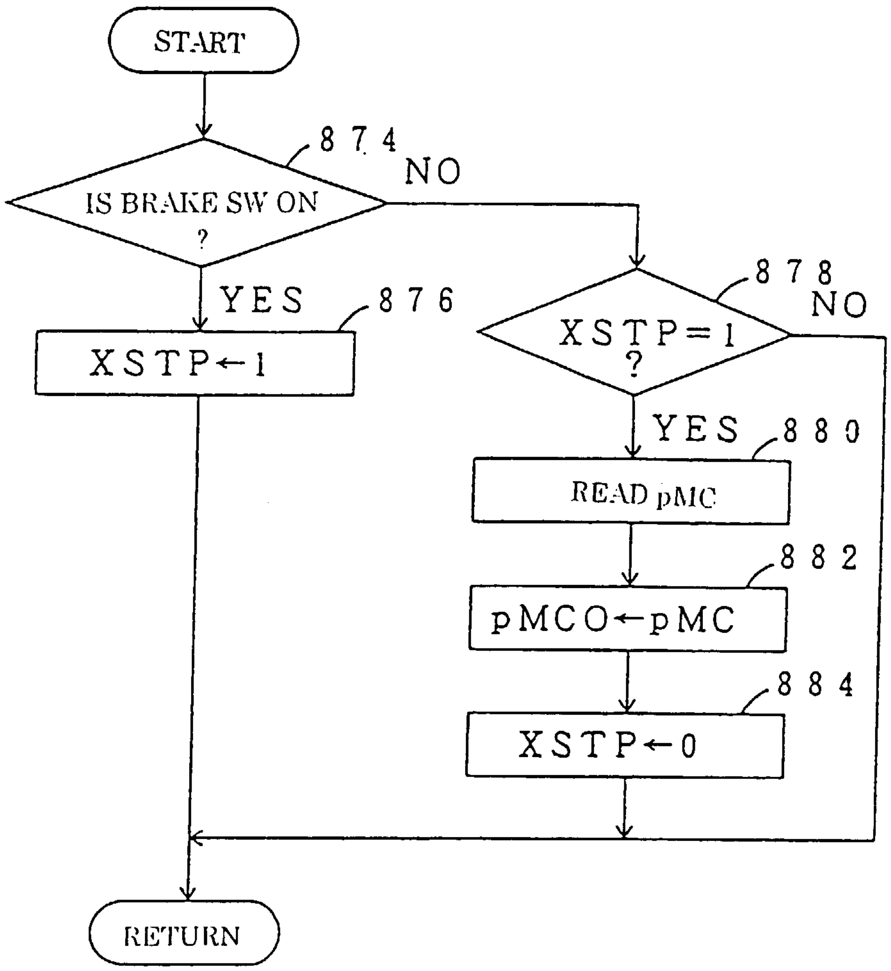
START
IS BRAKE SW ON ?
874
NO
YES
876
XSTP←1
878
XSTP=1 ?
NO
YES
880
READ pMC
882
pMCO←pMC
884
XSTP←0
RETURN

## INTERNATIONAL SEARCH REPORT

International application No. PCT/JP97/02028

**A. CLASSIFICATION OF SUBJECT MATTER**

Int. $Cl^6$ B60T8/88, B60T8/00

According to International Patent Classification (IPC) or to both national classification and IPC

**B. FIELDS SEARCHED**

Minimum documentation searched (classification system followed by classification symbols)

Int. $Cl^6$ B60T7/12, B60T8/00, B60T8/88

Documentation searched other than minimum documentation to the extent that such documents are included in the fields searched

Jitsuyo Shinan Koho 1926 - 1996
Kokai Jitsuyo Shinan Koho 1971 - 1997
Toroku Jitsuyo Shinan Koho 1994 - 1997
Jitsuyo Shinan Toroku Koho 1996 - 1997

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| | JP, 4-232168, A (Toyota Motor Corp.), August 20, 1992 (20. 08. 92)(Family: none) | |
| Y | Page 3, left column, lines 13 to 16 | 1 |
| Y | Pressure sensor 82, Trampling force sensor 120 | 5 |
| Y | JP, 63-20256, A (Toyota Motor Corp.), January 27, 1988 (27. 01. 88), Page 1, left column, line 19 to right column, line 2; page 7, upper part, left column, lines 5 to 14 & US, A, 4812777 | 1, 5 |
| Y | JP, 7-156789, A (Mercedes-Benz AG.), June 20, 1995 (20. 06. 95), Page 4, left column, lines 10 to 12 & DE, C1, 4338064 | 1 |
| A | JP, 5-178195, A (Fujitsu Ten Ltd.), July 20, 1993 (20. 07. 93), (Abstract) (Family: none) | 1 |
| A | JP, 9-86372, A (Jidosha Kiki Co., Ltd.), | 1 |

[X] Further documents are listed in the continuation of Box C.  [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| August 25, 1997 (25. 08. 97) | September 2, 1997 (02. 09. 97) |
| Name and mailing address of the ISA/ Japanese Patent Office | Authorized officer |
| Facsimile No. | Telephone No. |

Form PCT/ISA/210 (second sheet) (July 1992)

INTERNATIONAL SEARCH REPORT

International application No. PCT/JP97/02028

C (Continuation). DOCUMENTS CONSIDERED TO BE RELEVANT

| Category* | Citation of document, with indication, where appropriate, of the relevant passages | Relevant to claim No. |
|---|---|---|
| | March 31, 1997 (31. 03. 97), (Abstract) (Family: none) | |

Form PCT/ISA/210 (continuation of second sheet) (July 1992)